# EUROPEAN PATENT SPECIFICATION

(11) **EP 1 697 578 B1**
(45) Date of publication and mention of the grant of the patent: **31.08.2011**
(21) Application number: 04804134.7
(22) Date of filing: 21.12.2004
(51) Int. Cl.: D06M 15/263, D06M 15/29, D06M 15/273, D06M 15/564, D06M 15/568, D06M 15/19, A01N 25/10

(54) **COMPOSITION FOR THE IMPREGNATION OF FIBERS, FABRICS AND NETTINGS IMPARTING A PROTECTIVE ACTIVITY AGAINST PESTS**
ZUSAMMENSETZUNG ZUR EINE SCHUTZWIRKUNG GEGEN SCHÄDLINGE VERLEIHENDEN IMPRÄGNIERUNG VON FASERN, TEXTILEN FLÄCHENGEBILDEN UND NETZEN
COMPOSITION DESTINEE A L'IMPREGNATION DE FIBRES, DE TISSUS ET DE NAPPES DE FILET POSSEDANT UNE ACTIVITE PROTECTRICE CONTRE LES PARASITES

(30) Priority: 22.12.2003 US 740428
(43) Date of publication of application: 06.09.2006
(60) Divisional application: 10191352.3
(73) Proprietor: BASF SE, 67056 Ludwigshafen (DE)
(72) Inventor: KARL, Ulrich, 67269 Grünstadt (DE); HEISSLER, Heinz, 67227 Frankenthal (DE); THOMAS, John, H., Bridgewater, New Jersey 08807 (US); SCHÖPKE, Holger, 69151 Neckargemünd (DE); BURGER, Joachim, 76777 Neupotz (DE)
(86) International application number: PCT/EP2004/014536
(87) International publication number: WO 2005/064072

(56) References cited:
- EP-A- 0 382 382
- EP-A- 0 609 600
- WO-A-01/37662
- WO-A-03/034823
- US-A- 4 404 296
- US-A- 5 503 918
- US-A- 5 631 072
- DATABASE WPI Section Ch, Week 199510 Derwent Publications Ltd., London, GB; Class A60, AN 1995-070809 XP002333287 & JP 06 346373 A (DAIWA KAGAKU KOGYO KK) 20 December 1994 (1994-12-20)

## Description

The present invention relates to an insecticide composition for application to a textile material or plastics material selected from the group consisting of yarn, fibers, fabric, knitgoods, nonwovens, netting material, foils, tarpaulins and coating compositions, which insecticide composition comprises a mixture including at least one insecticide and/or at least one repellent, and at least one binder; an impregnated textile material or plastics material comprising at least one insecticide and/or at least one repellent, and at least one binder; processes for impregnation of a textile material or plastics material and a process for coating of a textile material or plastics material.

Infectious diseases cause huge damages by debilitating or even killing humans and animals in many countries, especially in tropical countries. Many of these diseases (e.g. malaria, dengue and yellow fever, lymphatic filariasis, and leishmaniasis) are transmitted by insects. Since many medical methods like vaccination or medical treatments are either impossible or too expensive or have been rendered ineffective due to spreading resistance against drugs, efforts have been concentrated on controlling the transmitting insects. Methods to control these insects comprise treating surfaces of huts and houses, air spraying and impregnation of curtains and bednets. The latter treatment is up to now mostly done by dipping the textile material into emulsions or dispersions of insecticides or spraying them onto the nets. Since this provides only a loose adhesion of the insecticide molecules on the surface of the fibers, this treatment is not wash-permanent and has to be repeated after each washing. Studies have proven long-lasting insecticide-treated nets (LLINs) to be more reliable in preventing carrier-borne diseases in comparison with conventional nets, which have to be re-impregnated with insecticide after each washing. Experience shows, however, that washed nets are not re-treated in many cases leaving them without any biological activity. WHO, UNICEF and global relief organisations therefore recommend pre-treated, long-lasting insecticide-treated nets which are wash-permanent as an effective means for the containment of deadly tropical diseases, especially malaria and dengue fever. This is not only comfortable for the user but gives him an economic advantage as well, saving the costs for the repeated impregnation. It is an ecological advantage as well, since the permanent treatment is done under controlled conditions in textile finishing plants.

WO 01/37662 discloses impregnated nettings or fabrics for insect or tick killing and/or repellent of an insect or tick comprising an insecticide and/or a repellent, and a film forming component reducing the wash off and degradation of the insecticide component from the netting or fabric by forming a water- and optionally an oil-resistant film. The film forming component preferably comprises one or more components selected from paraffin oil or wax derivatives, silicon derivatives, silicon oils or wax derivatives, and polyfluorocarbon derivatives. The netting or fabric is impregnated by adding a solution or a water emulsion of an insecticide and/or repellent and a film forming component successively (in two steps) or in one process step. According to the specification of WO 01/37662 is the insecticide and/or repellent dissolved in an organic solvent in the process for impregnation of a fabric or a netting.

WO 03/034823 discloses an insecticide composition for application to a fabric material, which composition comprises a mixture including an insecticide, a copolymeric binder, that, after drying and while the fabric material is dry, imparts hydrophobicity to the insecticide, and a dispersing agent, that, after application of the composition to a fabric and upon wetting the fabric, reduces the hydrophobicity imparted to the insecticide by the binder to permit limited insecticide release. The copolymeric binder is prepared as a copolymer emulsion that is derived by an emulsion polymerization technique from monomers selected from at least one of the groups including a) vinyl esters of aliphatic acid having 1 to 18 carbon atoms, such as vinyl acetate and vinyl versatate; b) acrylic and methacrylic esters of an alcohol having 1 to 18 carbon atoms, such as butyl acrylate, 2-ethylhexylacrylate, and methyl acrylate; and c) mono- and di-ethylenically unsaturated hydrocarbons, such as styrene, and aliphatic diens, such as butadiene. The preferred copolymeric binder is prepared by emulsion polymerisation of two different monomers. The insecticide composition of WO 03/034823 is applied to the fabric or netting by dipping, spraying, brushing, and the like. According to the examples the insecticides have to be dissolved in organic solvents before applying the insecticide composition to a fabric material.

US 5,631,072 discloses the manufacture of fabric intended to be made into washable garments, more specifically to the placement of an insecticide such as permethrin in the fabric by impregnation with polymeric binders and a cross-linking agent, or by surface coating with a polymeric binder and a thickening agent to improve the efficiency as an insect repellent and retention of the permethrin in the fabric as an effective insecticide through successive washings of the garments. According to the examples, suitable binders are acrylic binders and polyvinylacetate binders, which are not further specified. The amount of insecticide in the solutions for impregnation of the fabric is very high (1250 mg insecticide per m²).

EP 0 609 600 A1 relates to coated fabrics that are treated to be flame retardant, water resistant and insect repellent. According to this document, the duration of insect repellence is increased by the use of one or more barriers to protect the treated fabric fromxposure to ultra violet light. The barrier may be an acrylic coating or film, an aluminium foil, an urethane coating or film or a tent fly. Copolymers of ethylacrylate and methacrylic acid (Acrysol ASE-60) and of ethylacrylate and methylmethacrylate (AC33) are disclosed.

It is an object of the present invention to provide an insecticide composition for application to a textile material or plastics material, wherein the insecticide is not washed out and in which the bioavailability of the insecticide for killing insects is maintained after multiple washes.

According to the present invention there is provided an insecticide or repellent or rodenticide, fungicide, molluscicide, larvicide or ovicide composition for application to a textile material or plastics material which composition comprises a mixture including
a) at least one insecticide and/or at least one repellent and/or at least one rodenticide, fungicide, molluscicide, larvicide and/or ovicide as component A, and
b1) at least one acrylic binder as component B1 obtainable by emulsion polymerisation of the following components:
   b1a) n-butyl acrylate as component B1A,
   b1b) at least one monomer of formula I as component B1B 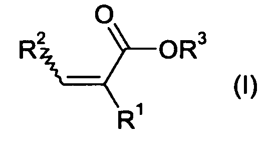 wherein
      R¹, R² and R³ are independently selected from C₁- to C₁₀-alkyl which may be linear or branched, for example methyl, ethyl, n-propyl, i-propyl, n-butyl, i-butyl, sec-butyl, t-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl, n-decyl, preferably C₁- to C₄-alkyl, for example methyl, ethyl, n-propyl, i-propyl, n-butyl, i-butyl, sec-butyl, tert-butyl; substituted or unsubstituted aryl, preferably substituted or unsubstituted C₆- to C₁₀-aryl, more preferably substituted or unsubstituted C₆-aryl, for example phenyl or tolyl;
      R¹ and R² may further be H;
      except of R³ = n-butyl, when R¹ and R² are H.
      Preferably R¹ is H or methyl. R² is preferably H; R³ is preferably methyl, ethyl or 2-ethylhexyl.
      More preferably R¹ is H or methyl, R² is H and R³ is methyl, ethyl or 2-ethylhexyl. Most preferably the monomer of formula I is selected from the group consisting of 2-ethylhexylacrylate, methylacrylate, methylmethacrylate and ethylacrylate.
   b1c) at least one monomer of formula II as component B1C 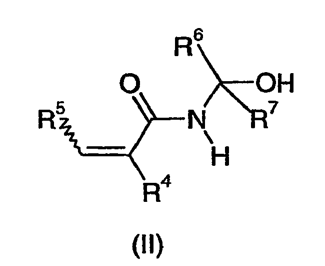 wherein
      R⁴, R⁵, R⁶ and R⁷ are independently selected from the group consisting of H, C₁- to C₁₀-alkyl which may be linear or branched, for example, methyl, ethyl, n-propyl, i-propyl, n-butyl, i-butyl, sec-butyl, tert-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl and n-decyl; preferably R⁴, R⁵, R⁶ and R⁷ are selected from the group consisting of H, C₁- to C₄-alkyl, which may be linear or branched, for example methyl, ethyl, n-propyl, iso-propyl, n-butyl, i-butyl, sec-butyl and tert-butyl; substituted or unsubstituted aryl, preferably substituted or unsubstituted C₆- to C₁₀-aryl, more preferably substituted or unsubstituted C₆-aryl, for example phenyl or tolyl;
      more preferably R⁴ is H or methyl, R⁵, R⁶ and R⁷ are preferably independent of each other H;
      most preferably R⁴ is H or methyl and R⁵, R⁶ and R⁷ are H;
   b1d) optionally at least one momomer of formula III as component B1D 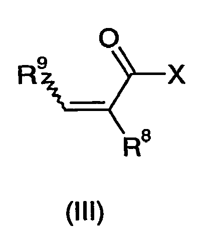 wherein
      R⁸ and R⁹ are independently selected from the group consisting of H, C₁- to C₁₀-alkyl which may be linear or branched, for example, methyl, ethyl, n-propyl, i-propyl, n-butyl, i-butyl, sec-butyl, tert-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl and n-decyl; preferably R⁸ and R⁹ are selected from the group consisting of H, C₁-to C₄-alkyl, which may be linear or branched, for example methyl, ethyl, n-propyl, iso-propyl, n-butyl, i-butyl, sec-butyl and tert-butyl; substituted or unsubstituted aryl, preferably substituted or unsubstituted C₆- to C₁₀-aryl, more preferably substituted or unsubstituted C₆-aryl, for example phenyl or tolyl;
      most preferably R⁸ and R⁹ are H;
      X is selected from the group consisting of H, OH, NH₂, OR¹¹OH, glycidyl, hydroxypropyl, 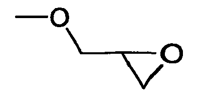 groups of the formula 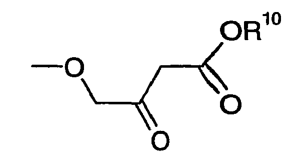 wherein
      R¹⁰ is selected from the group consisting of C₁- to C₁₀-alkyl which may be branched or linear, for example methyl, ethyl, n-propyl, i-propyl, n-butyl, i-butyl, sec-butyl, tert-butyl, n-pentyl, i-pentyl, sec-pentyl, neo-pentyl, 1,2-dimethylpropyl, i-amyl, n-hexyl, i-hexyl, sec-hexyl, n-heptyl, n-octyl, 2-ethylhexyl, n-nonyl, n-decyl; preferably C₁- to C₄-alkyl, which may be branched or linear, for example methyl, ethyl, n-propyl, iso-propyl, n-butyl, iso-butyl, sec-butyl and tert-butyl; substituted or unsubstituted aryl, preferably substituted or unsubstituted C₆-to C₁₀-aryl, more preferably substituted or unsubstituted C₆-aryl, for example phenyl or tolyl;
      R¹¹ is selected from the group consisting of C₁- to C₁₀-alkylene, for example methylene, ethylene, propylene, butylene, pentylene, hexylene, heptylene, octylene, nonylene, decylene; preferably C₁- to C₄-alkylene, for example methylene, ethylene, propylene, butylenes; substituted or unsubstituted arylenes, preferably substituted or unsubstituted C₆- to C₁₀-arylene, more preferably substituted or unsubstituted C₆-arylene, for example phenylene; most preferably X ist acetoacetyl;
   b1e) further monomers which are copolymerizable with the monomers mentioned above selected from
      b1e1) polar monomers, preferably (meth)acrylic nitrile and/or methyl(meth)acrylate as component B1E1; and/or
      b1e2) non polar monomers, preferably styrene and/or a-methylstyrene as component B1E2;

The insecticide, rodenticide, fungicide, molluscicide, larvicide, ovicide or repellentcomposition of the present invention may be in form of a solid or an aqueous formulation, wherein the aqueous formulation is preferred.

The insecticide, rodenticide, fungicide, molluscicide, larvicide, ovicide or repellentcomposition of the present application provides wash resistance while permitting continuous release of the insecticide, rodenticide, fungicide, molluscicide, larvicide, ovicide and/or repellent at a controlled rate, in order to provide the required bioavailability of the insecticide rodenticide, fungicide, molluscicide, larvicide, ovicide and/or repellent. It was found by the inventors that insecticide compositions comprising components A as well as B1A, B1B and B1C and/or B2 provide a very good wash resistance while permitting a continuous release of the insecticide, rodenticide, fungicide, molluscicide, larvicide, ovicide and/or repellent at a controlled rate. Further, the insecticide, rodenticide, fungicide, molluscicide, larvicide, ovicide or repellent emission to the environment is decreased by using the composition of the present invention which is applied to a textile material or plastics material.

In the context of the present invention a textile material or plastics material is a material selected from the group consisting of yarn, fibers, fabric, knitgoods, nonwovens, netting material, foils, tarpaulins and coating compositions. The netting material may be prepared by any method known in the art, for example by circular knitting or warp knitting, or by sewing parts of a netting to obtain the desired nettings.

The insecticide, rodenticide, fungicide, molluscicide, larvicide, ovicide or repellent composition of the present invention comprises in general 0.001 to 95 % by weight preferably 0.1 to 45 % by weight, more preferably 0.5 to 30 % by weight, based on the weight of the insecticide, rodenticide, fungicide, molluscicide, larvicide, ovicide or repellent composition, of at least one insecticide, rodenticide, fungicide, molluscicide, larvicide, ovicide and/or repellent.

The insecticide, rodenticide, fungicide, molluscicide, larvicide, ovicide or repellent composition preferably comprises the following components, based on the solids content of the composition
a) 0.1 to 45 % by weight, preferably 0.5 to 30% by weight, more preferably 1 to 25 % by weight of at least one insecticide, rodenticide, fungicide, molluscicide, larvicide, ovicide and/or at least one repellent (component A), and
b1) 55 to 99 % by weight, preferably 70 to 98 % by weight, more preferably 75 to 90 by weight of at least one acrylic binder (component B1) as defined above, comprising;
   b1a) 10 to 90% by weight, preferably 15 to 80% by weight, more preferably 20 to 70% by weight based on the acrylic binder of n-butyl acrylate (component B1A);
   b1b) 10 to 90% by weight, preferably 12 to 85% by weight, more preferably 15 to 65% by weight based on the acrylic binder of at least one monomer of formula I (component B1B);
   b1c) 1 to 5 % by weight based on the acrylic binder of at least one monomer of formula II (component B1C);
   b1d) 0 to 5 % by weight, preferably 1 to 4 % by weight, more preferably 0.2 to 3% by weight based on the acrylic binder of at least one monomer of formula III (component B1D);
   b1e) further monomers which are copolymerizable with the monomers mentioned (component B1 E) above selected from
      b1e1) 0 to 30 % by weight, preferably 0 to 25 % by weight, more preferably 5 to 20 % by weight based on the acrylic binder of at least one polar momomer, preferably (meth)acrylic nitrile and/or methyl(meth)acrylate (component B1E1); and/or
      b1e2) 0 to 40 % by weight, preferably 0 to 30 % by weight, more preferably 5 to 20 % by weight based on the acrylic binder of at least one non polar momomer, preferably styrene and/or a-methylstyrene (component B1E1);
         wherein the sum of the components is 100 % by weight of solids content of the insecticide, rodenticide, fungicide, molluscicide, larvicide, ovicide or repellent composition.

In a further preferred embodiment the insecticide, rodenticide, fungicide, molluscicide, larvicide, ovicide or repellent composition comprises the following components, based on the solids content of the composition
a) 20 to 70 % by weight, preferably 25 to 65 % by weight, more preferably 30 to 65 % by weight of at least one insecticide rodenticide, fungicide, molluscicide, larvicide, ovicide and/or at least one repellent (component A), and
b1) 30 to 80 % by weight, preferably 35 to 75 % by weight, more preferably 35 to 70 by weight of at least one acrylic binder (component B1) as defined above, comprising;
   b1a) 10 to 90% by weight, preferably 15 to 85% by weight, more preferably 30 to 85% by weight based on the acrylic binder of n-butyl acrylate (component B1A);
   b1b) 10 to 90% by weight, preferably 12 to 85% by weight, more preferably 15 to 65% by weight based on the acrylic binder of at least one monomer of formula I (component B1B);
   b1c) 1 to 5 % by weight based on the acrylic binder of at least one monomer of formula II (component B1C);
   b1d) 0 to 5 % by weight, preferably 0.1 to 4 % by weight, more preferably 0.2 to 3% by weight based on the acrylic binder of at least one monomer of formula III (component B1D);
   b1e) further monomers which are copolymerizable with the monomers mentioned (component B1E) above selected from
      b1e1) 0 to 30 % by weight, preferably 0 to 25 % by weight, more preferably 5 to 20 % by weight based on the acrylic binder of at least one polar momomer, preferably (meth)acrylic nitrile and/or methyl(meth)acrylate (component B1E1); and/or
      b1e2) 0 to 40 % by weight, preferably 0 to 30 % by weight, more preferably 5 to 20 % by weight based on the acrylic binder of at least one non polar momomer, preferably styrene and/or amethylstyrene (component B1E1).
      wherein the sum of the components is 100 % by weight of solids content of the insecticide, rodenticide, fungicide, molluscicide, larvicide, ovicide or repellent composition.

The aim of the invention is to control a variety of pests, such as ticks, cockroaches, bed bugs, mites, fleas, lice, leeches, houseflies, mosquitoes, termites, ants, moths, spiders, grasshoppers, crickets, silverfish, also in form of their larvae and eggs, and other flying and crawling insects, and molluscs, e.g. snails and slugs, and rodents, eg. rats and mice as well as fungi, e.g. fungi causing athlete's foot.

The textile material or plastics material may be made form a variety of natural and synthetic fibers, also as textile blends in woven or non-woven form, as knit goods, yarns or fibers. Natural fibers are for example cotton, wool, silk, jute or hamp. Synthetic fibers are for example polyamides, polyesters, polyacryl nitriles, polyolefines, for example polypropylene or polyethylene, Teflon, and mixtures of fibers, for example mixtures of synthetic and natural fibers. Polyamides, polyolefins and polyesters are preferred. Polyethylene terephthalate is especially preferred.

According to the present invention the term textile material or plastics material also discloses non-textile substrates such as coating compositions, leather, synthetic adaptions of leather, flocked fabrics, sheetings, foils and packaging material.

Most preferred are nettings made from polyester, especially polyethylene terephthalate.

The textile material or plastics material may be in form of coverings, for example bedclothes, mattresses, pillows, duvets, cushions, curtains, wall coverings, carpeting and window, cupboard and door screens. Further typical textile materials or plastics materials are geotextiles, tents, inner soles of shoes, garments, such as socks, trousers, shirts, i.e. preferably garments, e.g. uniforms, used in body areas exposed to insecticide bites and the like as well as horse blankets. The nettings are for example used as bed nets for example mosquito nets, or for covering or as nets in agriculture and viniculture. Other applications are movable fences for the protection of humans and animals against air-borne low-flying insects. Fabrics or nettings may be used for packages, wrapping sacks, containers for food, seeds and feed thus protecting the material from attack by insects but avoiding direct contact with the insecticide-treated nets or fabrics.

Treated foils or tarpaulins can be used on all human premises which are permanently or temporarily inhabited such as refugee camps.

It is further possible to use the treated nettings in dwellings having mud walls. A treated netting is pressed into a fresh, wet wall mud before it dries. The mud will ooze into the holes in the net but the yarn of the net will not be covered. When this wall covering is dried the insecticide rodenticide, fungicide, molluscicide, larvicide, ovicide and/or repellent of the treated net is slowly released and can repell or kill pests that come into contact with the wall.

The insecticide rodenticide, fungicide, molluscicide, larvicide, ovicide or repellent composition of the present invention is particularly suitable for application to polyester nettings as used for mosquito nets.

The insecticide rodenticide, fungicide, molluscicide, larvicide, ovicide or repellent composition of the present invention may be applied to textile materials or plastics materials before their formation into the desired products, i.e. while still a yarn or in sheet form, or after formation of the desired products.

### Insecticide, rodenticide, fungicide, molluscicide, larvicide, ovicide and/or repellent (component A)

Preferably, the insecticide and/or repellent is an insecticide and/or repellent with a fast paralyzing or killing effect of the insect and very low mammalian toxicity. Suitable insecticides and/or repellents are known by a person skilled in the art. Suitable insecticides and repellents and suitable dosages are for example mentioned on the webside of the World Health Organization (http://www.who.int/whopes/recommendations/en/), especially in "Malaria Vector Control", "Insecticides for Indoor Residual Spraying" by Dr. J.A. Najera & Dr. M. Zaim, 2001.

Preferred insecticides and/or repellents are mentioned below:
pyrethroid compounds such as
Etofenprox: 2-(4-ethoxyphenyl)-2-methylpropyl-3-phenoxybenzyl ether,
Chlorfenapyr: 4-bromo-2-(4-chlorophenyl)-1-ethoxymethyl-5-(trifluoromethyl)pyrrole-3-carbonitrile,
Fenvalerate: (RS)-alpha-cyano-3-phenoxybenzyl (RS)-2-(4-chlorophenyl)-3 methylbutyrate,
Esfenvalerate: (S)-alpha-cyano-3-phenoxybenzyl (S)-2-(4-chlorophenyl)-3-methylbutyrate,
Fenpropathrin: (RS)-alpha-cyano-3-phenoxybenzyl 2,2,3,3-tetramethylcyclopropanecarboxylate,
Cypermethrin: (RS)-alpha-cyano-3-phenoxybenzyl (1RS)-cis, trans-3-(2,2-dichlorovinyl)-2,2-dimethylcyclopropanecarboxylate,
alpha-Cypermethrin: racemate comprising the (S)-α-(1R) and (R)-α-(1S) diastereomers,
Permethrin: 3-phenoxybenzyl (1RS)-cis, trans-3-(2,2-dichlorovinyl)-2,2-dimethylcyclopropanecarboxylate,
Cyhalothrin: (RS)-alpha-cyano-3-phenoxybenzyl (Z)-(1RS)-cis-3-(2-chloro-3,3,3-trifluoroprop-1-enyl)-2,2-dimethylcyclopro panecarboxylate, lambda-cyhalothrin,
Deltamethrin: (S)-alpha-cyano-3-phenoxybenzyl (1R)-cis-3-(2,2-dibromovinyl)-2,2-dimethylcyclopropanecarboxylate,
Cycloprothrin: (RS)-alpha-cyano-3-phenoxybenzyl (RS)-2,2-dichloro-1-(4-ethoxyphenyl)cyclopropanecarboxylate,
Fluvalinate: alpha-cyano-3-phenoxybenzyl N-(2-chloro-alpha, alpha, alpha, alpha-trifluoro-p-tolyl)-D-valinate,
Bifenthrin: (2-methylbiphenyl-3-ylmethyl)0(Z)-(1RS)-cis-3-(2-chloro-3,3,3-trifluoro-1-propenyl)-2,2-dimethylcyclopropanecarboxylate,
2-methyl-2-(4-bromodifluoromethoxyphenyl)propyl (3-phenoxybenzyl)ether, Tralomethrin: (S)-alpha-cyano-3-phenoxybenzyl (1R-cis)3((1'RS)(1', 2', 2', 2'-tetrabromoethyl))-2,2-dimethylcyclopropanecarboxylate,
Silafluofen: 4-ethoxyphenyl(3-(4-fluoro-3-phenoxyphenyl)propyl}dimethylsilane, D-fenothrin: 3-phenoxybenzyl (1R)-cis, trans)-chrysanthemate,
Cyphenothrin: (RS)-alpha-cyano-3-phenoxybenzyl (1R-cis, trans)-chrysanthemate, D-resmethrin: 5-benzyl-3-furylmethyl (1R-cis, trans)-chrysanthemate,
Acrinathrin: (S)-alpha-cyano-3-phenoxybenzyl (1R-cis(Z))-(2,2-dimethyl-3-(oxo-3-(1,1,1,3,3,3-hexafluoropropyloxy)propenyl(cyclopropanecarboxylate,
Cyfluthrin: (RS)-alpha-cyano-4-fluoro-3-phenoxybenzyl 3-(2,2-dichlorovinyl)-2,2-dimethylcyclopropanecarboxylate,
Tefluthrin: 2,3,5,6-tetrafluoro-4-methylbenzyl (1RS-cis (Z))-3-(2-chloro-3,3,3-trifluoro-prop-1-enyl)-2,2-dimethylcyclopropanecarboxylate,
Transfluthrin: 2,3,5,6-tetrafluorobenzyl (1R-trans)-3-(2,2-dichlorovinyl)-2,2-dimethylcyclopropanecarboxylate,
Tetramethrin: 3,4,5,6-tetrahydrophthalimidomethyl (1RS)-cis, trans-chrysanthemate,
Allethrin: (RS)-3-allyl-2-methyl-4-oxocyclopent-2-enyl (1RS)-cis, trans-chrysanthemate,
Prallethrin: (S)-2-methyl-4-oxo-3-(2-propynyl)cyclopent-2-enyl (1R)-cis, trans-chrysanthemate,
Empenthrin: (RS)-1-ethynyl-2-methyl-2-pentenyl (1R)-cis,trans-chrysanthemate,
Imiprothrin: 2,5-dioxo-3-(prop-2-ynyl)imidazolidin-1-ylmethyl (1R)-cis, trans-2,2-dimethyl-3-(2-methyl-1-propenyl)-cyclopropanecarboxylate,
D-flamethrin: 5-(2-propynyl)-ful-furyl (1R)-cis, trans-chrysanthemate, and 5-(2-propynyl)furfuryl 2,2,3,3-tetramethylcyclopropanecarboxylate;
Pyriproxyfen: 4-phenoxyphenyl (*RS*)-2-(2-pyridyloxy)propyl ether; pyrethrum;
d-d, trans-cyphenothrin: (*RS*)-α-cyano-3-phenoxybenzyl (*1RS*,3*RS*1*RS*,3*SR*)-2,2-dimethyl-3-(2-methylprop-1-enyl)cyclopropanecarboxylate; DDT;
Carbamate compounds such as
Alanycarb: S-methyl-N[[N-methyl-N-[N-benzyl-N(2-ethoxy-carbonylethyl)amino-thio]carbamoyl]thioacetimidate,
Bendiocarb: 2,2-dimethyl-1,3-benzodioxol-4-yl-methylcarbamate),
Carbaryl(1-naphthyl N-methylcarbamate,
Isoprocarb: 2-(1-methylethyl)phenyl methylcarbamate,
Carbosulfan: 2,3 dihydro-2,2-dimethyl-7-benzofuranyl[(dibutylamino)thio]methylcarbamate,
Fenoxycarb: Ethyl[2-(4-phenoxyphenoxy)ethyl]carbamate,
Indoxacarb: Methyl-7-chloro-22,3,4°,5-tetrahydro-2-[methoxycarbonyl (-4-trifluoromethoxyphenyl)]
Propoxur: 2-isopropyloxyphenol methylcarbamate,
Pirimicarb: 2-dimethylamino-5,6-dimethyl-4-pyrimidinyl-dimethylcarbamate,
Thiodiocarb: Dimethyl N,N'(thiobis((methylimino)carbonoyloxy)bisethanimidiothioate).
Methomyl: S-methyl N-((methylcarbamoyl)oxy)thioacetamidate,
Ethiofencarb: 2-((ethylthio)methyl)phenyl methylcarbamate,
Fenothiocarb: S-(4-phenoxybutyl)-N,N-dimethyl thiocarbamate,
Cartap: S,S'-(2-5 dimethylamino)trimethylene)bis (thiocarbamate)hydrochloride,
Fenobucarb: 2-sec-butylphenylmethyl carbamate,
XMC: 3,5-dimethylphenyl-methyl carbamate,
Xylylcarb: 3,4-dimethylphenylmethylcarbamate;
organophosphorous compounds such as
Trichlorfon: Phosphoric acid, (2,2,2-trichloro-1-hydroxyethyl)-, dimethyl ester Fenitrothion: O,O-dimethyl O-(4-nitro-m-tolyl)phosphorothioate,
Diazinon: O,O-diethyl-O-(2-isopropyl-6-methyl-4-pyrimidinyl)phosphorothioate,
Pyridaphenthion: O-(1,6-dihydro-6-oxo-1-phenylpyrazidin-3-yl) O,O-diethyl phosphorothioate,
Pirimiphos-Etyl: O,O-diethyl O-(2-(diethylamino)6-methyl-pyrimidinyl)phosphorothioate,
Pirimiphos-Methyl: O-[2-(diethylamino)-6-methyl-4 pyrimidinyl] O,O-dimethyl phosphorothioate,
Etrimphos: O-6-ethoxy-2-ethyl-pyrimidin-4-yl-O,O-dimethyl-phosphorothioate,
Fenthion: O,O-dimethyl-O-[-3-methyl-4-(methylthio)phenyl phosphorothioate,
Phoxim: 2-(diethoxyphosphinothoyloxyimino)-2-phenylacetonitrile,
Chlorpyrifos: O,O-diethyl-O-(3,5,6-trichloro-2-pyrinyl)phosphorothioate,
Chlorpyriphosmethyl: O,O-dimethyl O-(3,5,6-trichloro-2-pyridinyl)phosphorothioate,
Cyanophos: O,O-dimethyl O-(4 cyanophenyl)phosphorothioate,
Pyraclofos: (R,S)[4-chlorophenyl)-pyrazol-4-yl]-O-ethyl-S-n-propyl phosphorothioate,
Acephate: O,S-dimethyl acetylphosphoroamidothioate,
Azamethiphos: S-(6-chloro-2,3-dihydro-oxo-1,3-oxazolo[4,5-b]pyridine-3-ylmethyl phosphorothioate,
Malathion: O,O-dimethyl phosphorodithioate ester of diethyl mercaptosuccinate,
Temephos: (O,O'(thiodi-4-1-phenylene) O,O,O,O-tetramethyl phosphorodithioate,
Dimethoate: ((O,O-dimethyl S-(n-methylcarbamoylethyl)phosphorodithioate,
Formothion: S[2-formylmethylamino]-2-oxoethyl]-O,O-dimethyl phosphorodithioate,
Phenthoate: O,O-dimethyl S-(alpha-ethoxycarbonylbenzal)-phosphorodithioate;
lodofenphos: O-(2,5-dichloro-4-iodophenyl)-O,O-dimethyl-phosphorthioate.
Insecticides with a sterilising effect on adult mosquitoes such as
1-(alfa-(chloro-alpha-cyclopropylbenzylidenamino-oxy)-p-tolyl)-3-(2,6-difluorobenzoyl)urea,
Diflubenzuron: N-(((3,5-dichloro-4-(1,1,2,2-tetraflouroethoxy)phenylamino)carbonyl)2,6 difluoro benzamid,
Triflumuron: 2-Chloro-N-(((4-(trifluoromethoxy)phenyl)-amino-)carbonyl)benzamide, or a triazin such as N-cyclopropyl-1,3,5-triazine-2,4,6-triamin; and
Lambda-cyhalothrine:
α-cyano-3-phenoxybenzyl-3-(2-chloro-3,3,3-trifluoroprop-1-enyl)-2,2-dimethylcyclopropane carboxylate, as a 1:1 mixture of (Z)-(1R,3R), R-ester and (Z)-(1S,3S), S-ester;
the repellent is selected from N,N-Diethyl-meta-toluamide (DEET), N,N-diethylphenylacetamide (DEPA), 1-(3-cyclohexan-1-yl-carbonyl)-2-methylpiperine, (2-hydroxymethylcyclohexyl) acetic acid lactone, 2-ethyl-1,3-hexandiol, indalone, Methylneodecanamide (MNDA), a pyrethroid not used for insect control such as {(+/-)-3-allyl-2-methyl-4-oxocyclopent-2-(+)-enyl-(+)-trans-chrysantemate (Esbiothrin), a repellent derived from or identical with plant extracts like limonene, eugenol, (+)-Eucamalol (1), (-)-1-epi-eucamalol or crude plant extracts from plants like *Eucalyptus maculata, Vitex rotundifolia, Cymbopogan martinii, Cymbopogan citratus* (lemon grass), *Cymopogan nartdus* (citronella), IR3535 (ethyl butylacetylaminopropionate), icaridin (1-piperidinecarboxylic acid 2-(2-hydroxyethyl)-1-methylpropylester).

A suitable mulloscicide is for example niclosamide.

Suitable rodenticides are first generation anticoagulant rodenticides and second generation anticoagulant rodenticides, whereby second generation rodenticides are preferred. Examples for first generation anticoagulant rodenticides are for example warfarin, chlorphacinone, coumatetralyl, suitable second generation anticoagulant rodenticides are for example flocoumafen, brodifacoum, difenacoum, bromadialone, difethialone, and bromethalin.

Suitable fungicides are for example antifungal agents used in the case of athlete's foot selected from the group consisting of clotrimazole: 1-(2-chlorotrityl)imidazole, miconazole: 1-[2-(2,4-dichlorophenyl)-2-[(2,4-dichlorophenyl)methoxy]ethyl]-1H-imidazole, econazole 4-[2-[(4-chlorophenyl)methoxy]-2-(2,4-dichlorophenyl)-ethyl]-4H-imidazole, tioconazole: 1-[2-[(2-chloro-3-thienyl)methoxy]-2-(2,4-dichlorophenyl)-ethyl]-1H-imidazole, undecylenic acid, terbinafine hydrochloride: N,6,6-trimethyl-N-(naphthalen-4-ylmethyl)hept-2-en-4-yn-1-amine hydrochloride (lamisil topical), and tolnaftate: N-methyl-N-(m-tolyl)-1-naphthalen-3-yloxy-thioformamide.

Further suitable fungicides are
Azoles as Bitertanol, Bromoconazol, Cyproconazol, Difenoconazole, Dinitroconazol, Epoxiconazol, Fenbuconazol, Fluquiconazol, Flusilazol, Flutriafol, Hexaconazol, Imazalil, Ipconazol, Metconazol, Myclobutanil, Penconazol, Propiconazol, Prochloraz, Prothioconazol, Simeconazol, Tebuconazol, Tetraconazol, Triadimefon, Triadimenol, Triflumizol, Triticonazol;
Strobilurines as Azoxystrobin, Dimoxystrobin, Fluoxastrobin, Kresoxim-methyl, Metominostrobin Orysastrobin, Picoxystrobin, Pyraclostrobin Trifloxystrobin; Acylalanines as Benalaxyl, Metalaxyl, Mefenoxam, Ofurace, Oxadixyl;
Amine derivatives as Aldimorph, Dodine, Dodemorph, Fenpropimorph, Fenpropidin, Guazatine, Iminoctadine, Spiroxamin, Tridemorph;
Anilinopyrimidines as Pyrimethanil, Mepanipyrim oder Cyprodinil;
Dicarboximides such as Iprodion, Myclozolin, Procymidon, Vinclozolin;
Cinnamic acid amides and analogs as Dimethomorph, Flumetover oder Flumorph;
Antibiotics as Cycloheximid, Griseofulvin, Kasugamycin, Natamycin, Polyoxin or Streptomycin;
Dithiocarbamates as Ferbam, Nabam, Maneb, Mancozeb, Metam, Metiram, Propineb, Polycarbamat, Thiram, Ziram Zineb;
Heterocyclic compounds as Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Picobenzamid, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine M Anorganika;
Nitrophenylderivatives, as Binapacryl, Dinocap, Dinobuton, Nitrophthal-isopropyl; Phenylpyrrole Fenpiclonil Fludioxonil;
Sulfenicderivatives Captafol, Captan, Dichlofluanid, Folpet, Tolylfluanid;
Other fungicides as Acibenzolar-S-methyl, Benthiavalicarb, Carpropamid, Chlorothalonil, Cyflufenamid, Cymoxanil, Dazomet, Diclomezin, Diclocymet, Diclofluanid, Diethofencarb, Edifenphos, Ethaboxam, Fenhexamid, Fentin-Acetat, Fenoxanil, Ferimzone, Fluazinam, Fosetyl, Fosetyl-Aluminium, Phosphorige Säure, Iprovalicarb, Hexachlorbenzol, Metrafenon, Pencycuron, Propamocarb, Phthalid, Toloclofos- methyl, Quintozene, Zoxamid.

Preferred insecticides, rodenticides, fungicides, molluscicides, larvicides, ovicides and/or repellents of the insecticide, rodenticide, fungicide, molluscicide, larvicide, ovicide composition of the present invention may be either one of a single insecticide, rodenticide, fungicide, molluscicide, larvicide, ovicide and/or repellent or a mixture of insecticides, rodenticides, fungicides, molluscicides, larvicides, ovicides and/or repellents selected from the group of insecticides, rodenticides, fungicides, molluscicides, larvicides, ovicides and/or repellents that are suitable for application to a fabric material or a netting. Preferred mixtures of insecticides, rodenticides, fungicides, molluscicides, larvicides, ovicides and/or repellents are mixtures of insecticides, rodenticides, fungicides, molluscicides, larvicides, ovicides and/or repellents with similar diffusion/migration properties. The group of insecticides and/or repellents may include synthetic pyrethroids such as those known in the trade as alphacypermethrin, cyfluthrin, deltamethrin, etofenprox and permethrin, other pyrethroids such as that known in the trade as bifenthrine and non-pyrethroids such as that known in the trade as carbosulphane.

If the insecticides rodenticides, fungicides, molluscicides, larvicides, ovicides and repellants mentioned above have one or more chiral centers in their molecules, they may be applied as racemates, pure enantiomers or diastereomers or in chirally or diastereomerically enriched mixtures.

The insecticide, rodenticide, fungicide, molluscicide, larvicide, ovicide and/or repellent mentioned in the present invention also may be included in the insecticide rodenticide, fungicide, molluscicide, larvicide, ovicide or repellent composition as one of a water-based insecticide, rodenticide, fungicide, molluscicide, larvicide, ovicide or repellent and/or repellent concentrate or a solvent, preferably an organic solvent, based insecticide, rodenticide, fungicide, molluscicide, larvicide, ovicide and/or repellent concentrate or a concentrate based on a mixture of water and a solvent, preferably an organic solvent. Water-based concentrates may be in the form of suspensions or dispersions comprising suitable dispersing agents if necessary or in the form of emulsions comprising emulsifiers, solvents and co-solvents if appropriate. Nanoparticular insecticidal formulations may be obtained by dissolving solid solutions of insecticides, rodenticides, fungicides, molluscicides, larvicides, ovicides or repellent in a polar organic solvent, e.g. poly vinyl pyrrolidone (PVP). The concentration of the insecticide, rodenticide, fungicide, molluscicide, larvicide, ovicide and/or repellent in the water based or solvent based concentrates is in general between 0.5 to 60 %, preferably 1 to 40 %, more preferably 3 to 20 %.

The insecticide, rodenticide, fungicide, molluscicide, larvicide, ovicide and/or repellent forming part of the insecticide composition of the present invention may also be selected from other groups suitable for different applications.

The particle size of the insecticide rodenticide, fungicide, molluscicide, larvicide, ovicide and/or repellent in water-based suspensions or dispersions is in general between 50 nm to 20 µm, preferably 50 nm to 8 µm, more preferably 50 nm to 4 µm, most preferably 50 nm to 500 nm.

### Acrylic binder (component B1)

The acrylic binder is preferably obtainable by emulsion polymerization of
b1a) 10 to 90% by weight, preferably 15 to 80% by weight, more preferably 20 to 70% by weight of component B1A;
b1b) 10 to 90% by weight, preferably 12 to 85% by weight, more preferably 15 to 65% by weight of component B1B;
b1c) 1 to 5 % by weight of component B1C;
b1d) 0 to 5 % by weight, preferably 1 to 4 % by weight, more preferably 0.2 to 3% by weight of component B1D;
b1e) further monomers which are copolymerizable with the monomers mentioned above selected from
   b1e1) 0 to 30 % by weight, preferably 0 to 25 % by weight, more preferably 5 to 20 % by weight of component B1E1; and/or
   b1e2) 0 to 40 % by weight, preferably 0 to 30 % by weight, more preferably 5 to 20 % by weight of component B1E2;
wherein the sum of the components B1A, B1B, B1C and optionally B1D and B1E is 100 % by weight.

In a further preferred embodiment the acrylic binder is obtainable by emulsion polymerization of
b1) 30 to 80 % by weight, preferably 35 to 75 % by weight, more preferably 35 to 70 by weight of at least one acrylic binder (component B1) as defined above, comprising;
   b1a) 10 to 90% by weight, preferably 15 to 85% by weight, more preferably 30 to 85% by weight based on the acrylic binder of n-butyl acrylate (component B1A);
   b1b) 10 to 90% by weight, preferably 12 to 85% by weight, more preferably 15 to 65% by weight based on the acrylic binder of at least one monomer of formula I (component B1B);
   b1c) 1 to 5 % by weight based on the acrylic binder of at least one monomer of formula II (component B1C);
   b1d) 0 to 5 % by weight, preferably 0.1 to 4 % by weight, more preferably 0.2 to 3% by weight based on the acrylic binder of at least one monomer of formula III (component B1D);
   b1e) further monomers which are copolymerizable with the monomers mentioned (component B1E) above selected from
      b1e1) 0 to 30 % by weight, preferably 0 to 25 % by weight, more preferably 5 to 20 % by weight based on the acrylic binder of at least one polar momomer, preferably (meth)acrylic nitrile and/or methyl(meth)acrylate (component B1E1); and/or
      b1e2) 0 to 40 % by weight, preferably 0 to 30 % by weight, more preferably 5 to 20 % by weight based on the acrylic binder of at least one non polar momomer, preferably styrene and/or a-methylstyrene (component B1E1);
wherein the sum of the components B1A, B1B, B1C and optionally B1D and B1E is 100 % by weight.

The acrylic binder may comprise further additives as known by a person skilled in the art, for example film forming agents and plastisizers, e.g. adipate, phthalate, butyl diglycol, mixtures of diesters preparable by reaction of dicarboxylic acids and alcohols which may be linear or branched. Suitable dicarboxylic acids and alcohols are known by a person skilled in the art.

The insecticide, rodenticide, fungicide, molluscicide, larvicide, ovicide or repellent compositions comprising the specific binder as claimed in the present invention are wash resistant while permitting continuous release of the insecticide, rodenticide, fungicide, molluscicide, larvicide, ovicide or repellent at a controlled rate, in order to provide the required bioavailability of the insecticide, rodenticide, fungicide, molluscicide, larvicide, ovicide or repellent. It is not necessary to add for example a dispersing agent that, after application of the composition to a fabric and upon wetting of the fabric, reduces the hydrophobicity imparted to the insecticide by the binder to permit limited insecticide release. Preferably, the insecticide, rodenticide, fungicide, molluscicide, larvicide, ovicide or repellent composition of the present invention does therefore not comprise a dispersing agent in addition to the acrylic binder.

In a further most preferred embodiment the amount of n-butylacrylate as component B1A is from 30 to 85 % by weight, and the other components B1A, B1B, B1C and optionally B1D and B1E are chosen as mentioned before, wherein the sum of components B1A, B1b, B1C and optionally B1D and B1E is 100 % by weight.

The acrylic binder of the present invention is obtainable by emulsion polymerization of the monomers mentioned before. Suitable process conditions are known by a person skilled in the art.

The monomers are polymerized under usual conditions of temperature and pressure, i.e. at from atmospheric pressure to 10 bar and in general at temperatures of from 20 to 100 °C, preferably 50 to 85 °C, depending on the initiator used. Usually the polymerization is carried out in a stirred reaction vessel under an inert atmosphere.

The copolymerization is generally carried out in water. However, it is also possible to add before, within or after the polymerization process up to 80 % by weight, relating to the aqueous phase, of a lower alcohol like methanol, ethanol or isopropanol or a lower ketone like acetone. Preferably the copolymerization is carried out in water without addition of further solvents.

The polymerization process may be carried out continuously or batch-wise, and it is possible to employ the usual methods of batch-wise polymerization, e.g. mixing all polymerization components at once or feeding emulsified monomers and catalysts from one or more metering vessels to a batch containing a portion of a monomer. It is possible to add polymer seed to the polymerization mixture to adjust the particle size of the emulsion polymers obtained.

The emulsion polymerization is preferably carried out in the presence at least one initiator which form radicals under the polymerization conditions. Suitable initiators are for example all common peroxy compounds or azo compounds.

Suitable peroxides are for example alkali metal peroxodisulfates, for example sodium peroxodisulfate, ammonium peroxodisulfate; hydrogen peroxide; organic peroxides, for example diacetyl peroxide, di-tert-butyl peroxide, diamylperoxide, dioctanoyl peroxide, didecanoyl peroxide, dilauroyl peroxide, dibenzol peroxide, bis-(o-toloyl)peroxide, succinyl peroxide, tert-butyl peracetate, tert-butyl permaleinate, tert-butyl perpivalate, tert-butylperoctoate, tert-butyl perneodecanoate, tert-butyl perbenzoate, tert-butyl peroxide, tert-butyl hydroperoxide, cumene hydroperoxide, tert-butyl-peroxy-2-ethylhexanoate, and diisopropyl peroxodicarbamate. Further suitable initiators are azo compounds, for example azobis isobutyronitrile, anzobis(2-amidopropane)dihydrochloride, and 2,2'-azobis(2-methylbutyronitrile).

The initiators are added in usual amounts, for example in an amount of 0.05 to 5 % by weight, preferably 0.05 to 2 % by weight, based on the total weight of monomers.

If the polymerization is carried out at low temperature, use may be made of conventional redox catalysts. For example, it is possible to use, in addition to the peroxide catalysts of the above kinds, from 0.05 to 2 % by weight, based on the total of monomers, of reducing agents such as hydrazine, soluble oxidizable sulfoxy compounds such as alkali metal salts of hydrosulfites, sulfoxylates, thiosulfates, sulfites, and bisulfites, which may be optionally activated by the addition of traces of heavy metals, e.g. salts of Ce, Mo, Fe, and Cu, in the usual manner. Preferred redox catalysts are redox catalysts of acetone disulfite and organic peroxides like tert-C₄Hg-OOH; Na₂S₂O₅ and organic peroxides like tert-C₄-Hg-OOH; or HO-CH₂SO₂H and organic peroxides like tert-C₄Hg-OOH. Further preferred are redox catalysts like ascorbic acid and hydrogen peroxide.

The initiator may be added completely at the beginning of the polymerization, but it is also possible to add the initiator in the course of the emulsion polymerization process in a continuous or stepwise way. The way of adding the initiator is known in the art.

The polymerization process is carried out until a conversion of at least 95 % by weight of the monomers is reached. For removal of the residual monomer at the end of the emulsion polymerization initiator may be added for chemical deodoration.

The emulsion polymerization is carried out by adding emulsifiers or mixtures of emulsifiers known in the art. The emulsifiers generally used are ionic (anionic or cationic) and/or non-ionic emulsifiers such as polyglycolethers, sulfonated paraffin hydrocarbons, higher alkylsulfates such as oleyl amine, laurylsulfate, alkali metal salts of fatty acids such as sodium stearate and sodium oleate, sulphuric acid esters of fatty alcohols, ethoxylated C₈₋₁₂-alkylphenols, usually having from 5 to 30 ethylene oxide radicals, and their sulfonation products, and also sulfosuccinic acid esters. The emulsifier or mixtures of emulsifiers are usually employed in an amount of 0.05 to 7 % by weight, preferably 0.5 to 4 % by weight, based on the total weight of monomers.

In some cases there is added a co-solvent or a mixture of co-solvents to the emulsifiers. Preferred co-solvents are aliphatic C₁- to C₃₀-alcohols which are linear or branched, alicyclic C₃- to C₃₀-alcohols and mixtures thereof. Examples are n-butanol, n-hexanol, cyclohexanol, 2-ethylhexanol, i-octanole, n-octanole, n-decanole, n-dodecanole, stearyl alcohol, oleyl alcohol or cholesterol. Further possible co-solvents are alkane diol, ethylene glycol alkyl ethers, N-alkyl pyrrolidones, and N-alkyl and N,N-dialkyle acid amides like ethylene glycol monobutyl ether, diethylen glycol monoethyl ether, tetraethylen glycol dimethyl ether, N-methyl pyrrolidone, N-hexyl pyrolidone, diethyl acid amide or N-octyl acid amide. The co-solvents or mixture of co-solvents is added in an amount of 0 to 20 % by weight, preferably 1 to 5% by weight.

In many cases use is also made of a protective colloid, examples of which are polyvinyl alcohol, partially saponified polyvinyl acetates, cellulose derivatives, copolymers of methyl acrylate with acrylic amide and methylacrylic amide or vinyl pyrrolidine polymers in amounts of from 0.5 to 10 % by weight and in particular 1.0 to 5 % by weight of the weight of the monomers.

Further, it is possible to add in general up to 10 % by weight, preferably 0.05 to 5 % by weight of mono- or di-olefinically unsaturated monomers containing reactive or cross-linking groups. Examples of such monomers are in particular the amides of α,β-olefinically unsaturated C₃₋₅-carboxylic acids, particularly acryl amides, methacryl amides and maleic diamides, and their N-methylol derivatives such as N-methylol acrylic amide, N-methylol methacrylic amide, N-alkoxy methyl amides of α,β-monoolefinically unsaturated C₃₋₅-carboxylic acids such as N-methoxy methacrylic amide and N-n-butoxymethylacrylic amide, vinyl sulfonic acid, monoesters of acrylic and methacrylic acids with alkanediols such as glycol, butanediol-1,4, hexane diol-1,6, and 3-chloropropanediol-1,2, and also allyl and methallyl esters of α,β-olefinically unsaturated mono- and di-carboxylic acids such as diallyl maleate, dimethyl allyl fumarate, allyl acrylate and allyl methacrylate, diallyl phthalate, diallyl terephthalate, p-di-vinyl benzene, methylene-bis-acrylamide and ethylene glycol di-allylether.

The solids content of the aqueous dispersions of polymers obtained in the emulsion polymerization is usual 15 to 75 % by weight, preferably 25 to 50 % by weight. To obtain high space time yields of the reactor dispersions having a high solids content are preferred. To obtain solids contents of more than 60 % by weight a bi- or polymodal particle distribution should be adjusted, because otherwise it is not possible to handle the dispersion, because of the high viscosity. New particle generations (for obtaining bi- or polymodel particle size distributions) are for example formed by addition of seed (EP-A 0 810 831), addition of an excess of emulsifier or addition of mini-emulsions. The formation of new particle generations may be carried out at any time and is depending on the desired particle size distribution for a low viscosity.

The molecular weight of the non crosslinked emulsion polymers obtained is in general 40,000 to 250,000 (determined by GPC). The molecular weight is usually controlled by the use of conventional chain stoppers in conventional amounts. Conventional chain stoppers are for example sulfoorganic compounds.

The acrylic binder of the present invention is obtained in form of its aqueous dispersion and is preferably employed in the insecticide compositions of the present invention in form of the aqueous dispersion.

### Insecticide rodenticide, fungicide, molluscicide, larvicide, ovicide or repellent compositions

Depending on the use of the final product the insecticide, rodenticide, fungicide, molluscicide, larvicide, ovicide or repellent composition of the present invention may further comprise one or more components selected from water, preservatives, detergents, fillers, impact modifiers, anti-fogging agents, blowing agents, clarifiers, nucleating agents, coupling agents, conductivity-enhancing agents (antistats), stabilizers such as anti-oxidants, carbon and oxygen radical scavengers and peroxide decomposing agents and the like, flame retardants, mould release agents, agents having UV protecting properties, optical brighteners, spreading agents, anti-blocking agents, anti-migrating agents, foam-forming agents, anti-soiling agents, thickeners, further biocides, wetting agents, plasticizers and film forming agents, adhesive or anti-adhesive agents, optical brightening (fluorescent whitening) agents, fragrance, pigments and dyestuffs.

The insecticide, rodenticide, fungicide, molluscicide, larvicide, ovicide or repellent compositions of the present invention may be aqueous compositions comprising water or dry compositions, e.g. compositions which do not comprise water. Preferably, the insecticide compositions are aqueous compositions, preferably comprising 0.1 to 45 % by weight, more preferably 1 to 25 % by weight of water, based on the total of the components in the insecticide compositions of the present invention except of water.

In a further preferred embodiment the ready-to-use insecticide, rodenticide, fungicide, molluscicide, larvicide, ovicide or repellent compositions are aqueous compositions, preferably comprising 55 to 97 % by weight, more preferably 85 to 95 % by weight of water, and 3 to 45 % by weight, preferably 5 to 15 % by weight of solids, based on the total of the components in the insecticide, rodenticide, fungicide, molluscicide, larvicide, ovicide or repellent compositions of the present invention, wherein the total is 100 % by weight. The solids are preferably selected from the group consisting of at least one insecticide, rodenticide, fungicide, molluscicide, larvicide, ovicide and/or repellent as component A as defined above, and at least one acrylic binder as component B1 as defined above and instead of component B1 or in addition to component B1 at least one polyurethane as component B2 as defined above, and optionally at least one fixative agent as component C as defined below, and optionally further components depending on the use of the final product as defined above.

The treatment baths from which the insecticide compositions are applied to the textile material or plastics material are preferably aqueous formulations comprising 95 to 99.5 % by weight, preferably 95 to 99 % by weight, more preferably 97 to 99 % by weight of water, based on the total of the components in the insecticide, rodenticide, fungicide, molluscicide, larvicide, ovicide or repellent compositions of the present invention.

Suitable anti-foam agents are for example silicon anti-foam agents. Suitable UV-protecting agents for protecting UV-sensitive insecticides and/or repellents are for example para-aminobenzoic acids (PABA), octylmethoxysinameth, stilbenes, styryl or benzotriazole derivatives, benzoxazol derivatives, hydroxy-substituted benzophenones, salicylates, substituted triazines, cinnamic acid derivatives (optionally substituted by 2-cyano groups), pyrazoline derivatives, 1,1'-biphenyl-4,4'-bis-2-(methoxyphenyl)-ethenyl or other UV protecting agents. Suitable optical brighteners are dihydroquinolinone derivatives, 1,3-diaryl pyrazoline derivatives, pyrenes, naphthalic acid imides, 4,4'- diystyryl biphenylene, 4,4'-diamino-2,2'-stilbene disulphonic acids, cumarin derivatives and benzoxazole, benzisoxazole or benzimidazole systems which are linked by - CH=CH-bridges or other fluorescent whitening agents.

Typical pigments used in the insecticide, rodenticide, fungicide, molluscicide, larvicide, ovicide or repellent compositions of the present invention are pigments which are used in pigment dyeing or printing processes or are applied for the coloration of plastics and are known by a person skilled in the art.

Pigments may be inorganic or organic by their chemical nature. Inorganic pigments are mainly used as white pigments (e.g., titanium dioxide in the form of rutile or anatas, ZnO, chalk) or black pigments (e.g., carbon black). Colored inorganic pigments may be used as well but are not preferred because of potential toxicologic hazards. For imparting color, organic pigments or dyestuffs are preferred. Organic pigments may be mono or disazo, naphthol, benzimidazolone, (thio) indigoid, dioxazine, quinacridone, phthalocyanine, isoindolinone, perylene, perinone, metal complex or diketo pyrrolo pyrrole type pigments. Pigments may be used in powder or liquid form (i.e., as a dispersion). Preferred pigments are Pigment Yellow 83, Pigment Yellow 138, Pigment Orange 34, Pigment Red 170, Pigment Red 146, Pigment Violet 19, Pigment Violet 23, Pigment Blue 15/1, Pigment Blue 15/3, Pigment Green 7, Pigment Black 7. Other suitable pigments are known to a person skilled in the art.

Typical dyestuffs which may be used in the present invention are vat dyes, cationic dyes and disperse dyes in powder or liquid form. Vat dyes may be used as pigments or following the vatting (reduction) and oxidation procedure. Using the vat pigment form is preferred. Vat dyes may be of the indanthrone type, e.g. C.I. Vat Blue 4, 6 or 14; or of the flavanthrone type, e.g. C.I. Vat Yellow 1; or of the pyranthrone type, e.g. C.I. Vat Orange 2 and 9; or of the isobenzanthrone (isoviolanthrone) type, e.g. C.I. Vat Violet 1; or of the dibenzanthrone (violanthrone) type, e.g. C.I. Vat Blue 16, 19, 20 and 22, C.I. Vat Green 1, 2 and 9, C.I. Vat Black 9; or of the anthraquinone carbazole type, e.g. **C.I.** Vat Orange 11 and 15, C.I. Vat Brown 1, 3 and 44, C.I. Vat Green 8 and C.I. Vat Black 27; or of the benzanthrone acridone type, e.g. C.I. Vat Green 3 and 13 and C.I. Vat Black 25; or of the anthraquinone oxazole type, e.g. C.I. Vat Red 10; or of the perylene tetra carbonic acid diimide type, e.g. C.I. Vat Red 23 and 32; or imidazole derivatives, e.g. C.I. Vat Yellow 46; or amino triazine derivatives, e.g. C.I. Vat Blue 66. Other suitable vat dyes are known by a person skilled in the art.

Typical disperse and cationic dyestuffs are known by a person skilled in the art.

If cellulosic substrates are employed as textile material, said cellulosic substrates are preferably dyed with vat, direct, rea tive or sulphur dyestuffs.

In a further embodiment the insecticide, rodenticide, fungicide, molluscicide, larvicide, ovicide or repellent compositions of the present invention are insecticide, rodenticide, fungicide, molluscicide, larvicide, ovicide or repellent compositions as mentioned before comprising at least one pigment and/or at least one dyestuff. The insecticide, rodenticide, fungicide, molluscicide, larvicide, ovicide or repellent compositions of the present invention preferably comprise 10 to 300 % by weight, more preferably 20 to 150 % by weight of the pigment and/or dyestuff relating to the total weight of the solids content of the insecticide and/or repellent.

It is also possible to use pre-dyed textile material or plastics material, preferably netting material, to which the insecticide, rodenticide, fungicide, molluscicide, larvicide, ovicide or repellent composition of the present invention is applied. Suitable pigments and dyestuffs for dying the textile material or plastics material are mentioned above. Suitable dyeing processes are known by a person skilled in the art. If polyester substrates are employed as textile material or plastics material, said polyester substrates are preferably dyed with disperse dyes, preferably by exhaust or continuous dyeing, e.g. by the thermosol process. If polyamide substrates are employed as textile material or plastics material, said polyamide substrates are preferably dyed with anionic, acidic or metal-complex dyestuffs or spin/mass dyed.

Textile material or plastics material to be impregnated according to the present invention and by use of a composition as described in the present invention may be impregnated locally when the composition is delivered in the form of a kit comprising the ingredients of the insecticide, rodenticide, fungicide, molluscicide, larvicide, ovicide or repellent composition in a handy form. In a further embodiment the present invention therefore relates to an insecticide, rodenticide, fungicide, molluscicide, larvicide, ovicide or repellent composition as described in the present invention which is provided as a kit for impregnation by the end-user or in a local factory. In a preferred embodiment the kit is adapted for preparing a solution or emulsion by adding water. The ingredients of the kit may accordingly be in form of a dry composition such as a powder, a capsule, a tablet, or an effervescent tablet. In a further embodiment, the kit comprises an emulsion wherein water is added by the end-user or in a local factory. The emulsion may be a micro-emulsion, which is generally very stable. The emulsion may be embodied in a capsule.

The kit comprises at least the following ingredients:
a) at least one insecticide rodenticide, fungicide, molluscicide, larvicide, ovicide and/or at least one repellent, and
b1) at least one acrylic binder as described in the present invention.

Preferred insecticides, rodenticides, fungicides, molluscicides, larvicides, ovicides and/or repellents as well as preferred acrylic binders and preferred polyurethanes are already mentioned in the present invention. The kit may contain further ingredients as mentioned above, especially one or more compounds selected from preservatives, detergents, stabilizers, agents having UV-protecting properties, optical brighteners, spreading agents, anti-migrating agents, foam-forming agents, wetting agents, anti-soiling agents, thickeners, further biocides, plasticizers, adhesive agents, fragrance, pigments and dyestuffs. Preferred kits comprise beside the insecticide and/or repellent and the acrylic binder and/or the polyurethane at least one pigment and/or at least one dyestuff. Preferred pigments and dyestuffs are mentioned before.

In a further embodiment the present invention relates to an impregnated textile material or plastics material for insect killing and/or repellence of an insect comprising
a) at least one insecticide and/or at least one repellent, and
b1) at least one acrylic binder as disclosed in the present invention.
Preferred insecticides and/or repellents and preferred acrylic binders and polyurethanes are mentioned before. Materials of the textile material or plastics material and preferred textile material or plastics material are also mentioned before.

A typical amount of insecticide and/or repellent in the impregnated textile material or plastics material is from 0.01 to 10 % (dry weight) of the (dry) weight of the fabric material or netting dependent on the insecticidal efficiency of the insecticide respectively the efficiency of the repellent. A preferred amount is between 0.05 and 7 % by weight of the textile material or plastics material depending on the insecticide and/or repellent. For a pyrethroid like deltamethrin or alphacypermethrin, the preferred amounts are between 0.1 and 3.5 % of the weight of the textile material or plastics material. For a pyrethroid like permethrin or etofenprox, the preferred amount is from 0.1 to 6 %.

A typical amount for the acrylic binder is from 0.001 to 10 % by weight (dry weight) of the (dry) weight of the textile material or plastics material. As a rule, the higher amount the insecticide of the specific type to be added, the higher the concentration of the acrylic binder so that the ratio between insecticide and acrylic binder is approximately constant with a value depending on the insecticidal and migratory ability of the insecticide. Preferred amounts of acrylic binder are from 0.1 to 5 % by weight, more preferably 0.2 to 3 % by weight of the (dry) weight of the textile material or plastics material.

In a further embodiment, the impregnated textile material or plastics material according to the present invention further comprises one or more components selected from preservatives, detergents, stabilizers, agents having UV-protecting properties, optical brighteners, spreading agents, anti-migrating agents, foam-forming agents, wetting agents, anti-soiling agents, thickeners, further biocides, plasticizers, adhesive agents, pigments and dyestuffs. Suitable examples of the components mentioned above are known by a person skilled in the art.

In a further embodiment of the present invention the impregnated textile material or plastics material comprises besides the at least one insecticide and/or repellent and the at least one acrylic binder as described before at least one pigment and/or at least one dyestuff. The amount of the at least one pigment is in general from 0.05 to 10 % by weight, preferably 0.1 to 5 % by weight, more preferably 0.2 to 3.5 % by weight of the (dry) weight of the textile material or plastics material. The amount of the at least one dyestuff is in general from 0.05 to 10 % by weight, preferably 0.1 to 5 % by weight, more preferably 0.2 to 3.5 % by weight of the (dry) weight of the textile material or plastics material. The textile material or plastics material comprises preferably either at least one pigment or at least one dyestuff. Suitable pigments and dyestuffs are mentioned before.

### Process for impregnation of a textile material or plastics material

In a further embodiment, the present invention relates to a process for impregnation of a textile material or plastics material comprising
i) forming an aqueous formulation or a melt, wherein an aqueous formulation is preferred, comprising at least one insecticide, rodenticide, fungicide, molluscicide, larvicide, ovicide and/or at least one repellent and at least one acrylic binder as defined in the present invention and optionally further ingredients;
ii) applying the aqueous formulation to the textile material or plastics material by
   iia) passing the textile material or plastics material through the aqueous formulation;
      or
   iib) bringing the textile material or plastics material in contact with a roller that is partly or fully dipped into the aqueous formulation and drawing the aqueous formulation to the side of the textile material or plastics material in contact with the roller,
      or
   iic) double-side coating of the textile material or plastics material
      or
   iid) spraying the aqueous formulation onto the textile material or plastics material, wherein the spraying is carried out with any suitable device for spraying by hand or automatically, for example with an aerosol can or devices usually used in a factory;
      or
   iie) applying the aqueous formulation in form of a foam;
      or
   iif) submerging the textile material or plastics material into the aqueous formulation;
      or
   iig) brushing the aqueous formulation onto or into the textile material or plastics material;
      or
   iih) pouring the aqueous formulation onto the textile material or plastics material;
      or
      applying the melt by calandering or with a doctor-blade;
iii) optionally removing surplus aqueous formulation or surplus melt; and
iv) drying and/or curing the textile material or plastics material.

In the context of the present invention an aqueous formulation may be a solution, an emulsion or a suspension/dispersion.

The aqueous formulation or the melt preferably comprises the insecticide, rodenticide, fungicide, molluscicide, larvicide, ovicide or repellent composition as disclosed in the present invention, which is preferably employed in form of an aqueous formulation.

In the context of the present invention "impregnation" is a process for applying the insecticide composition. This process may include a process for curing the applied insecticide composition to achieve a coating onto the textile material or plastics material, if desired. An "impregnated textile material or plastics material" is a material onto which the insecticide, rodenticide, fungicide, molluscicide, larvicide, ovicide or repellent composition is applied. The "impregnated textile material or plastics material" may be coated by curing the applied insecticide composition, if desired.

The insecticide, rodenticide, fungicide, molluscicide, larvicide, ovicide or repellent composition of the present invention may also be applied onto the textile or plastics material by transfer printing, inkjet printing, a screen process, and powder printing.

Suitable textile materials or plastics materials are mentioned before. It is possible to impregnate the textile or plastics material in form of its finished product (end of line treatment, discontinuous treatment). In this case no further pass is necessary after impregnation. However, it is also possible to impregnate the textile or plastics material in form of a yarn or fibers, which have to be further processed after impregnation to obtain the desired finished product (in line treatment). Preferred insecticides, rodenticides, fungicides, molluscicides, larvicides, ovicides and/or repellents used are also defined before as well as preferred acrylic binders and/or polyurethanes.

The discontinuous treatment may be performed in factories, in local treatment centers (local factories) or even with mobile equipment which is e.g. mounted on trucks or pickups (e.g. in re-treatment antimalaria campaigns). The discontinuous treatment may be done on new (untreated textile materials oer plastics materials, preferably nettings, in use or made-up form (preferably as nets) or on used textile materials or plastics materials (preferably nets), preferably after washing.

It is one advantage of the present invention that the impregnation is carried out in an aqueous formulation or in a melt. It is not necessary to add any organic solvents. In a preferred embodiment of the present invention the treatment bath is an aqueous formulation which does not comprise any further solvents, especially no organic solvents.

It is advantageous to avoid the use of organic solvents because the textile material or plastics material of the present invention may be used in close contact to the human body. The textile material or plastics material impregnated by the method of the present invention does not comprise any organic solvent residue which is beneficial both from a human toxicological and an ecological point of view.

The aqueous formulation or the melt employed in the impregnation process may further comprise one or more ingredients selected from the group consisting of preservatives, detergents, stabilisers, agents having UV-protecting properties, spreading agents, anti-migrating agents, foam-forming agents, wetting agents, anti-soiling agents, thickeners, further biocides, plasticizers, adhesive agents, fragrance, pigments and dyestuffs.

In a further embodiment the aqueous formulations or the melts employed for impregnation of the textile material or plastics material comprise in addition to the at least one insecticide, rodenticide, fungicide, molluscicide, larvicide, ovicide and/or repellent and the at least one acrylic binder at least one pigment and/or at least one dyestuff. These aqueous formulations or melts are suitable for impregnation of the textile material or plastics material with at least one insecticide, rodenticide, fungicide, molluscicide, larvicide, ovicide and/or repellent and additionally coloring the textile material or plastics material at the same time. Many of the textile materials or plastics materials which are impregnated with at least one insecticide, rodenticide, fungicide, molluscicide, larvicide, ovicide and/or repellent are preferably colored. With the process of the present invention it is possible to color and impregnate the textile material or plastics material with an insecticide, rodenticide, fungicide, molluscicide, larvicide, ovicide and/or repellent at the same time. The method of the present invention is therefore very economical, because the coloring and impregnation with an insecticide, rodenticide, fungicide, molluscicide, larvicide, ovicide and/or repellent is carried out in one step.

In a further embodiment of the present invention the present invention therefore relates to a process for impregnation of a textile material or plastics material as described before, wherein the dyeing of the textile material or plastics material is carried out simultaneously with the impregnation of the textile material or plastics material, wherein an aqueous formulation is formed further comprising at least one dyestuff and/or at least one pigment.

Suitable amounts of pigments are in general 0.01 to 20 % by weight, preferably 0.1 to 10 % by weight, more preferably 0.2 to 5 % by weight, based on the weight of the aqueous formulation used for impregnation. Suitable dyestuffs are employed in general in an amount of from 0.01 to 20 % by weight, preferably 0.1 to 10 % by weight, more preferably 0.2 to 5 % by weight, based on the weight of the aqueous formulation used for impregnation.

### Step i) Forming an aqueous formulation comprising an insecticide, rodenticide, fungicide, molluscicide, larvicide, ovicide and/or repellent and at least one acrylic binder and optionally further ingredients

The aqueous formulation is formed by mixing all ingredients necessary for impregnation of the textile material or plastics material with water. The aqueous formulation is generally formed at temperatures of from 10 to 70 °C, preferably 15 to 50 °C, more preferably 20 to 40 °C. Suitable aqueous formulations comprise an insecticide, rodenticide, fungicide, molluscicide, larvicide, ovicide or repellent composition for application to a textile material or plastics material as described in the present invention.

### Step ii) Applying the aqueous formulation comprising an insecticide, rodenticide, fungicide, molluscicide, larvicide, ovicide and/or repellent and at least one acrylic binder and/or at least one polyurethane and optionally further ingredients to the textile material or plastics material

### Step iia)

The insecticide, rodenticide, fungicide, molluscicide, larvicide, ovicide or repellent composition is applied by passing the textile material or plastics material through the aqueous formulation. This step is known by a person skilled in the art as padding. In a preferred embodiment the textile material or plastics material is completely submerged in the aqueous treatment liquor (aqueous formulation) either in a trough containing the liquor or passed through the treatment bath (aqueous formulation) which is held between two horizontally oriented rollers.

In accordance with the invention, the textile material or plastics material may either be passed through the aqueous formulation or the aqueous formulation may be passed through the textile material or plastics material. These processes are preferred for im pregnating open-width material which is later tailored into nets. For small-scale production or re-impregnating of non-treated nets, use of a simple hand-held roller might be sufficient.

### Step iib)

It is further possible to apply the aqueous formulation onto the textile material or plastics material by one-side only-coating applications methods. Suitable one-side only-coating application methods are for example knife-/doctor-blade-coating, roller coating or screen-printing. By this methods it is possible to impregnate only one side of the textile material or plastics material which is advantageous, if e.g. direct contact of the human skin with insecticide-treated material is to be avoided.

Knife-/doctor-blade-coating systems are for example knife-over-air-systems, knife-over-roller systems, knife-over-table systems or knife-over-rubber-belt systems. Further knife coating systems are for example commabar or Mayerbar knife systems.

Roller-coating systems are for example kiss-coating systems with one, two, three or more rollers, reverse-roll-coater systems and raster roll systems. In these roller-coating systems at least one roller is partly dipped into the aqueous formulation thus applying the aqueous formulation to the side of the textile material or plastics material in contact with the roller (kiss-rolling).

Screen-printing systems are for example rotary-screen printing systems and flat-screen printing systems. With these applications methods a dot coating or a full-surface coating can be applied to the textile material or the plastics material, for example by using an additional whisper-blade behind the rotary-screen.

A person skilled in the art will adjust the viscositiy of the aqueous formulation used by applying thickeners where appropriate.

### Step iic)

It is further possible to apply the aqueous formulations to the textile material or plastics material by double-side coating application methods, for example double-side knife-coating systems, foulard with two air-knifes or foulard with squeezing rollers.

By using the double-side-knife-coating system or by passing two times through a one-side-only coating system, it is possible to apply the aqueous formulation only to the surfaces of both sides of the textile material or plastics material and thus to reduce the quantitiy of the aqueous formulations needed for a certain effect.

### Step iid) and step iie)

It is further possible to apply the aqueous formulation by spraying the solution or emulsion onto the textile material or plastics material. Further it is possible, to apply the emulsion in the form of a foam which is applied to the textile material or plastics material. A foam comprises less water than the solution or emulsion mentioned above. The drying process may therefore be very short.

### Step iif), iig) and step iih)

It is further possible to apply the aqueous formulation onto the textile material or plastics material by submerging the textile material or plastics material into the aqueous formulation, brushing the aqueous formulation onto or into the textile material or plastics material, or pouring the aqueous formulation onto the textile material or plastics material. Said methods are known by a person skilled in the art.

Impregnation of the fabric material or netting in step iia), iib), iic), iid), iie), iif), iig), or iih) is carried out at temperatures of in general from 10 to 70 °C, preferably 15 to 50 °C, more preferably 20 to 40 °C.

### Step iii) Optionally removing the surplus aqueous formulation

The surplus aqueous formulation is usually removed by squeezing the textile material or plastics material, preferably by passing the textile material or plastics material rollers as known in the art, preferably by means of doctor blade, thus achieving a defined liquor uptake. The squeezed-off liquor is usually re-used.

The surplus aqueous formulation may alternatively be removed by centrifuging or vacuum suction.

### Step iv) Drying and/or curing the textile material or plastics material

The drying is in general carried out temperatures below 200 °C. Preferred temperatures are from 50 to 170 °C, more preferably from 70 to 150 °C. The temperature choice is a function of the evaporation temperature and mobility of the insecticide, rodenticide, fungicide, molluscicide, larvicide, ovicide or repellent in the formulation.

It should be noted that the drying process may be a passive drying as the process may be carried out in rather hot climates. An active drying process would normally be performed during high scale processing.

After or simultaneously to the drying, the impregnated textile material or plastics material is optionally finally cured and/or fixated. A person skilled in the art knows how to carry out a curing and/or fixation. The curing process is in general carried out at a temperature which may be higher than the drying temperature. Preferred temperatures for curing are 60 to 170 °C, preferably 70 to 170 °C, more preferably 80 to 150 °C. Drying and curing can be advantageously be performed during one single process, e.g. in stenters with different compartments which can be heated to different temperatures. If a reactive crosslinking agent is used temperatures may be lower, e.g. 30 to 130°C, preferably 30 to 100°C.

The drying and/or curing may be achieved in any equipment usually applied in textile mills for these purposes, such as stenters, loop dryers, hotflues, tumble dryers, pad steam machines etc. In one embodiment of the present invention, equipment for continuous drying and/or curing is applied. In another embodiment of the present invention, equipment for discontinuous (batch-wise) drying and/or curing is used. Such equipment may comprise rotary or tumble dryers used in professional laundries, combined laundry/dryers which may be heated to the treatment temperatures, e.g. jeans stone-wash. The treatment chemicals may be added as a liquid or be sprayed onto the netting material and then brought to a homogeneous distribution by rotating the wet material before or during drying/curing. The treatment liquor may be added in excess if it is possible to remove the excess liquor e.g. by centrifuging. A person skilled in the art will be aware that treatment times might be longer than in the continuous process at the same temperature.

The curing process may also include or consist of passing the textile material or plastics material by a heated surface under pressure such as an iron or a heated roller. During drying processes and curing the textile material or plastics material is preferably mechanically fixated in a way to prevent change of the form e.g. shrinkage or dimensional deformation. Further, is is prevented that the insecticide, rodenticide, fungicide, molluscicide, larvicide, ovicide and/or repellent is washed out. The curing and/or fixation may be alternatively carried out by a dual-cure process combining heat and UV-light or only by UV-light. Suitable processes are known by a person skilled in the art.

The acrylic binder may advantageously be applied with a fixative agent for improved attachment of the insecticide, rodenticide, fungicide, molluscicide, larvicide, ovicide and/or repellent on the textile material or plastics material. The fixative agent may comprise free isocyanate groups.

Suitable fixative agents are for example isocyanurates comprising free isocyanate groups. Preferably the isocyanurates are based on alkylene diisocyanates having from 4 to 12 carbon atoms in the alkylene unit, like 1,12-dodecane diisocyanate, 2-ethyltetramethylene diisocyanate-1,4, 2-methylpentamethylene diisocyanate-1,5, tetramethylene diisocyanate-1,4, lysinester diisocyanate (LDI), hexamethylene diisocyanate-1,6 (HMDI), cyclohexane-1,3-and/or-1,4-diisocyanate, 2,4-and 2,6-hexahydro-toluylene diisocyanate as well as the corresponding isomeric mixtures 4,4'-2,2'- and 2,4'-dicyclohexylmethane diisocyanate as well as the corresponding mixtures, 1-isocyanato-3,3,5-trimethyl-5-isocyanatomethyl cyclohexane (IPDI), 2,4- and/or 2,6-toluylene diisocyanate, 4,4'-, 2,4' and/or 2,2'-diphenylmethane diisocyanate (monomeric MDI), polyphenylpolymethylene polyisocyanate (polymeric MDI) and/or mixtures comprising at least 2 of the isocyanates mentioned before. More preferably the isocyanurates are based on hexamethylene diisocyanate-1,6 (HMDI).

More preferably the isocyanurate is a isocyanurate which is hydrophilized with a polyalkylene oxide based on ethylene oxide and/or 1,2-propylene oxide, preferably polyethylene oxide.

The isocyanurate used as fixative agent can be prepared by methods known in the art. Preferably 5 to 25 % by weight, more preferably 7 to 20 % by weight, most preferably 10 to 15 % by weight of the isocyanate groups based on the amount of isocyanate used as staring material for the preparation of the isocyanurate are free isocyanate groups.

Most preferably the isocyanurate used as fixative agent is dissolved in a polar aprotic solvent, e.g. THF, DMF or propylene or ethylene carbonate.

The most preferred fixative agent used is an isocyanurate based on HMDI which are hydrophilized with a polyethylene oxide and which is dissolved in propylene carbonate (70 % by weight of HMDI in 30 % by weight of propylene carbonate). The amount of free isocyanate groups is 11 to 12 % by weight, based on the amount of isocyanate used as staring material for the preparation of the isocyanurate.

The insecticide, rodenticide, fungicide, molluscicide, larvicide, ovicide or repellent composition preferably comprises the following components, based on the solids content of the composition, if a fixative agent is used:
a) 20 to 70 % by weight, preferably 25 to 65 % by weight, more preferably 30 to 65 % by weight of at least one insecticide, rodenticide, fungicide, molluscicide, larvicide, ovicide and/or at least one repellent (component A), and
b1) 29 to 72 % by weight, preferably 34 to 70 % by weight, more preferably 33 to 66 by weight of at least one acrylic binder (component B1) as defined above, comprising;
   b1a) 10 to 90% by weight, preferably 15 to 80% by weight, more preferably 20 to 70% by weight based on the acrylic binder of n-butyl acrylate (component B1A);
   b1b) 10 to 90% by weight, preferably 12 to 85% by weight, more preferably 15 to 65% by weight based on the acrylic binder of at least one monomer of formula I (component B1B);
   b1c) 1 to 5 % by weight based on the acrylic binder of at least one monomer of formula II (component B1C);
   b1d) 0 to 5 % by weight, preferably 1 to 4 % by weight, more preferably 0.2 to 3% by weight based on the acrylic binder of at least one monomer of formula III (component B1D);
   b1e) further monomers which are copolymerizable with the monomers mentioned (component B1 E) above selected from
      b1e1) 0 to 30 % by weight, preferably 0 to 25 % by weight, more preferably 5 to 20 % by weight based on the acrylic binder of at least one polar momomer, preferably (meth)acrylic nitrile and/or methyl(meth)acrylate (component B1E1); and/or
      b1e2) 0 to 40 % by weight, preferably 0 to 30 % by weight, more preferably 5 to 20 % by weight based on the acrylic binder of at least one non polar momomer, preferably styrene and/or a-methylstyrene (component B1E1).
c) 1 to 8 % by weight, preferably 1 to 5 % by weight, more preferably 2 to 4 % by weight of at least one fixative agent (component C); wherein the sum of the components is 100 % by weight of solids content of the insecticide, rodenticide, fungicide, molluscicide, larvicide, ovicide or repellent composition.

Preferred fixative agents are mentioned before.

As described above, the solution or emulsion may further comprise one or more components selected from water, preservatives, detergents, fillers, impact modifiers, anti-fogging agents, blowing agents, clarifiers, nucleating agents, coupling agents, conductivity-enhancing agents (antistats), stabilizers such as anti-oxidants, carbon and oxygen radical scavengers and peroxide decomposing agents and the like, flame retardants, mould release agents, agents having UV protecting properties, spreading agents, anti-blocking agents, anti-migrating agents, foam-forming agents, anti-soiling agents, thickeners, further biocides, wetting agents, plasticizers, adhesive or anti-adhesive agents, optical brightening (fluorescent whitening) agents, fragrance, pigments and dyestuffs.

The process may also involve using the kit as described before, accordingly, the impregnation process may be carried out by the end-user in a low-scale process or in a local factory. The present invention therefore relates to a process for impregnating a fabric material or netting as described before, wherein the impregnating composition is provided as a kit for impregnation by the end-user or in a local factory.

In a further embodiment of the present invention the impregnation process which comprises applying an insecticide, rodenticide, fungicide, molluscicide, larvicide, ovicide or repellent composition as described before may also take place before the fibers are woven or knitted.

In a further embodiment the invention relates to a process for coating a textile material or plastics material by applying a composition comprising at least one insecticide, rodenticide, fungicide, molluscicide, larvicide, ovicide and/or at least one repellent and at least one acrylic binder as defined in the present invention to the textile material or plastics material. The coating is preferably carried out in a doctor-blade process. The process conditions are known by a person skilled in the art.

Preferred compositions for coating a textile material or plastics material and preferred further ingredients of the composition are already mentioned above.

In a further embodiment the present invention relates to an exhaust process for impregnation of a textile material or plastics material comprising the steps
i) placing the textile material or plastics material in an aqueous bath optionally comprising further additives contained in a pressure-proof vessel;
ii) adding an aqueous formulation comprising at least one insecticide, rodenticide, fungicide, molluscicide, larvicide, ovicide and/or repellent;
iii) heating the aqueous bath to a temperature of 100 to 140°C and keeping the temperature for 20 to 120 minutes;
   and
iv) cooling and draining the bath, and rinsing and drying the impregnated textile material or plastics material.

It was found by the inventors that the insecticide and/or repellent is not washed out and the bioavailability of the insecticide and/or repellent for killing insects is maintained after multiple washes by carrying out the impregnation of a textile material or plastics material by the process mentioned above, even in absence of a binder. The aqueous bath and the aqueous formulation comprising at least one insecticide and/or repellent preferably do not comprise a binder.

Suitable textile materials and plastics materials are the textile materials and plastics materials described before. Suitable insecticides, rodenticides, fungicides, molluscicides, larvicides, ovicides and/or repellents are also mentioned before.

Suitable further additives are preferably selected from preservatives, detergents, fillers, impact modifiers, anti-fogging agents, blowing agents, clarifiers, nucleating agents, coupling agents, conductivity-enhancing agents (antistats), stabilizers such as anti-oxidants, carbon and oxygen radical scavengers and peroxide decomposing agents and the like, flame retardants, mould release agents, agents having UV protecting properties, optical brighteners, spreading agents, anti-blocking agents, anti-migrating agents, foam-forming agents, anti-soiling agents, thickeners, further biocides, wetting agents, plasticizers and film forming agents, adhesive or anti-adhesive agents, optical brightening (fluorescent whitening) agents, fragrance, pigments and dyestuffs.

Preferred further additives from the group mentioned above are already mentioned before.

The present invention therefore preferably relates to a process as mentioned above, wherein the aqueous bath comprises as further additives one or more components selected from preservatives, detergents, fillers, impact modifiers, anti-fogging agents, blowing agents, clarifiers, nucleating agents, coupling agents, conductivity-enhancing agents (antistats), stabilizers such as anti-oxidants, carbon and oxygen radical scavengers and peroxide decomposing agents and the like, flame retardants, mould release agents, agents having UV protecting properties, optical brighteners, spreading agents, anti-blocking agents, anti-migrating agents, foam-forming agents, anti-soiling agents, thickeners, further biocides, wetting agents, plasticizers and film forming agents, adhesive or anti-adhesive agents, optical brightening (fluorescent whitening) agents, fragrance, pigments and dyestuffs.

The insecticide, rodenticide, fungicide, molluscicide, larvicide, ovicide and/or repellent forming part of the aqueous formulation added in step ii) also may be in form of a water-based insecticide, rodenticide, fungicide, molluscicide, larvicide, ovicide and/or repellent concentrate or a solvent, preferably an organic solvent, based insecticide, rodenticide, fungicide, molluscicide, larvicide, ovicide and/or repellent concentrate or a concentrate based on a mixture of water and a solvent, preferably an organic solvent. Water-based concentrates may be in the form of suspensions or dispersions comprising suitable dispersing agents if necessary or in the form of emulsions comprising emulsifiers, solvents and co-solvents if appropriate. Nanoparticular insecticidal, rodenticide, fungicide, molluscicide, larvicide, ovicide or repellent formulations may be obtained by dissolving solid solutions of insecticides, rodenticides, fungicides, molluscicides, larvicides, ovicides or repellents in a polar organic solvent, e.g. poly vinyl pyrrolidone (PVP). The concentration of the insecticide, rodenticide, fungicide, molluscicide, larvicide, ovicide and/or repellent in the water based or solvent based concentrates is in general between 0.5 to 60 %, preferably 1 to 40 %, more preferably 3 to 20 %.

The particle size of the insecticide, rodenticide, fungicide, molluscicide, larvicide, ovicide and/or repellent in water-based suspensions or dispersions is in general between 50 nm to 20 µm, preferably 50 nm to 8 µm, more preferably 50 nm to 4 µm, most preferably 50 nm to 500 nm.

The aqueous formulation which is added in step ii) comprising at least one insecticide, rodenticide, fungicide, molluscicide, larvicide, ovicide and/or repellent preferably comprises 0.1 to 45 % by weight of water, preferably 1 to 25 % by weight of water, based on the total of the components in the insecticide, rodenticide, fungicide, molluscicide, larvicide, ovicide or repellent except of water.

### Step i)

The aqueous bath is contained in a pressure-proof vessel. Suitable pressure-proof vessels are known by a person skilled in the art.

The liquor ratio, which is the weight-ratio between the amount of the textile material or plastics material and the amount of liquid of the aqueous bath, is preferably from 1 : 3 to 1 : 50, more preferably from 1 : 5 to 1 : 30, most preferably 1 : 20 (i.e. 1 kg textile material or plastics material in 20 liters of the aqueous bath). In a further preferred embodiment the liquor ratio is from 1 : 5 to 1 : 20, preferably from 1 : 10 to 1 : 20.

The pH of the aqueous is preferably set slightly acidic, preferably from 3 to 6, more preferably from 4 to 5. Suitable additives for setting the pH to the desired value are known by a person skilled in the art.

### Step ii)

The addition of the aqueous formulation comprising at least one insecticide and/or repellent may be carried out by any method known by a person skilled in the art. Suitable aqueous formulations comprising at least one insecticide and/or repellent are mentioned before.

### Step iii)

The aqueous bath is heated to a temperature of 100 to 140°C and the temperature is kept for 20 to 120 minutes. Preferably the queous bath is heated to a temperature of 110 to 130°C, more preferably 120 to 130°C. The temperature of the aqueous bath is preferably kept for 20 to 90 minutes, more preferably for 30 to 60 minutes. The aqueous bath may be heated by any suitable means known by a person skilled in the art.

### Step iv)

In step iv) the aqueous bath is cooled and drained. Further, the impregnated textile material or plastics material is rinsed and dryed. Preferably, the aqueous bath is cooled to 90 to 50°C, more preferably to 80 to 60°C. The draining of the bath is carried out by any method known by a person skilled in the art. After the draining the impregnated textile material or plastics material is rinsed, preferably with warm and/or cold water. Finally the impregnated textile material or plastics material obtained is dried by any method known by a person skilled in the art.

The exhaust process for impregnation of a textile material or plastics material of the present invention is therefore preferably carried out as follows:

The textile material or plastics material is placed in an aqueous bath contained in a pressure-proof vessel in a liquor ratio of in general from 1 : 3 to 1 : 50, preferably from 1 : 5 to 1 : 30, more preferably 1 : 20 (i.e. 1 kg netting in 20 liters). The pH is set slightly acidic (in general 3-6, preferably 4-5). The aqueous formulation of the insecticide and/or repellent is added preferably as a suspension or emulsion and the bath was heated to in 100 to 140 °C, preferably 100 to 130°C, more preferably 120 to 130°C. The temperature was kept for 20-120 minutes, preferably 20 to 90 minutes, more preferably 30 to 60 minutes. Then the treatment liquor is cooled to 90 to 50°C, more preferably to 80 to 60°C and subsequently the bath is drained. The treated material is rinsed with warm and cold water, respectively and is dried.

In a further embodiment the present invention relates to an impregnated textile material or plastics material obtainable by an exhaust process by comprising the steps
i) placing the textile material or plastics material in an aqueous bath optionally comprising further additives contained in a pressure-proof vessel;
ii) adding an aqueous formulation comprising at least one insecticide rodenticide, fungicide, molluscicide, larvicide, ovicide or repellent and/or repellent;
iii) heating the aqueous bath to a temperature of 100 to 140°C and keeping the temperature for 20 to 120 minutes;
   and
iv) cooling and draining the bath, and rinsing and drying the impregnated textile material or plastics material.

Steps i) to iv) of the impregnation process are described in detail above.

### Examples

### Binder:

### A) Preparation of polymer dispersions

### General procedure:

250 g of water and 3 g of a styrene seed (33 % by weight) having a medium particle diameter of 30 nm are heated to 85 °C and 5 % by weight of feed 2 are added. After 10 min. addition of feed 1 comprising the monomers mentioned below and feed 2 is started.

Feed 2 comprises 3.0 g sodiumperoxidsulfate dissolved in 39.9 g of water.

The composition of feed 1 is listed in table 1.

Feed 1 and 2 are added in 3 h, and it was polymerized for further 0.5 h.

**Table 1: Composition of feed 1 in % by weight pphm (parts per hundred monomers)**

| Monomer compositions | MMA | S | AN | EHA | BA | EA | HPMA | GMA | MaMol | AMol | AM | AS | FI-1 | BMA-Acac |
|---|---|---|---|---|---|---|---|---|---|---|---|---|---|---|
| A 1 | 27.0 | | | 3.1 | 65.0 | | | | | | 2.0 | 1.0 | 1.9 | |
| A 2 | 23.9 | 5.0 | | 5.3 | 60.0 | | | | | | 1.2 | 0.6 | | 4.0 |
| A 3 | | 16.6 | | 30.0 | 30.0 | 20.0 | | | | 3.0 | | 0.4 | | |
| A 4 | 25.7 | 5.0 | | 5.3 | 60.0 | | | | 3.5 | | | 0.5 | | |
| A 5 | | 14.7 | 11.0 | | 70.0 | | | | 3.5 | | 0.5 | 0.3 | | |
| A 6 | 30.0 | 13.0 | 8.0 | | 45.2 | | | | | 3.0 | 0.5 | 0.3 | | |
| A 7 | 30.0 | 13.0 | 8.0 | | 44.5 | | | | | | 0.5 | 0.3 | | 3.7 |
| A8 | 33.0 | | | | 60.0 | 3.9 | | | | | 1.0 | 0.5 | 1.6 | |
| A 9 | 20.0 | 20.0 | | 17.0 | 23.0 | 15.3 | | | 3.5 | | | 1.2 | | |
| A 10 | 20.0 | 20.0 | | 17.0 | 23.0 | 15.3 | | | | | 0.4 | 0.3 | | 4.0 |
| A11 | 10.0 | 10.0 | | | 25.5 | 50.0 | 2.5 | | | | | 2.0 | | |
| A 12 | 10.0 | 10.0 | | | 25.5 | 47.7 | 2.5 | 3.5 | | | 0.7 | 0.1 | | |
| A 13 | | 10.0 | 11.0 | | 60.0 | 14.7 | | 4.0 | | | 0.2 | 0.1 | | |
| A 14 | | 20.0 | 8.0 | | 55.0 | 12.5 | 3.0 | | | | | 1.5 | | |
| A 15 | 26.0 | | 13.0 | | 57.0 | | | | 3.0 | | | 1.0 | | |
| A 16 | 15.0 | | 13.0 | | 68.0 | | | | 3.0 | | | 1.0 | | |

The amount of initiator sodium peroxidisulfate is 0.3 parts by weight, the emulsifier comprises 0.4 parts by weight of Dowfax 2A1 (Dow) und 0.6 parts by weight of Lumiten IRA (BASF AG), relating to 100 parts by weight of the monomer composition of table 1.

### Abbreviations:

- MMA:: methyl methacrylate
- S:: styrene
- AN:: acrylic nitril
- EA:: ethyl acrylate
- EHA:: 2-ethylhexylacrylate
- BA:: n-butyl acrylate
- FI:: copolymerizable benzophenone having an acrylic group
- GMA:: glycidylmethacrylate
- BMA-Acac:: bitandiolmonoacrylate acetylacetate
- Amol:: N-methylol acrylamide
- MAMol:: N-methylol methacrylamide
- HPMA:: hydroxypropyl methacrylate
- AS:: acrylic acid
- AM:: acrylic amide

### Dowfax 2A1:

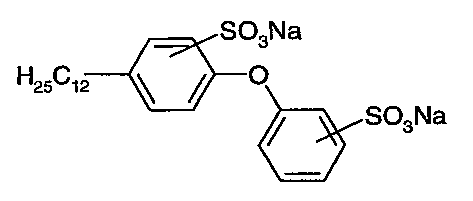

### Lumiten IRA:

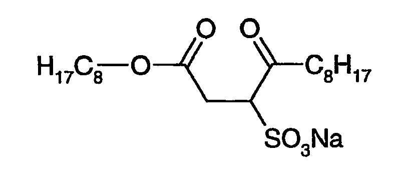

### Examples A1 and A8

Aqueous polymer dispersions comprising FI - 1 polymerizable photo initiator which is later useful as crosslinking agent is a photo initiator of formula 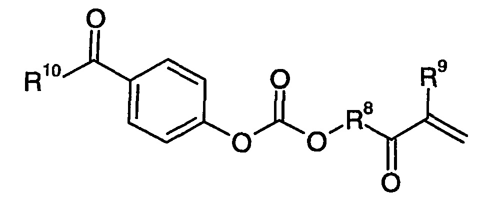 wherein
- R⁸: is an organic radical having from 1 to 30 carbon atoms,
- R⁹: is H or a methyl group, and
- R¹⁰: is a phenyl group which is optionally substituted or a C₁- to C₄-alkyl group.

### Examples of use (B01 to B14)

The long-lasting insecticidal treatment was performed with aqueous dispersions according to examples A1 - A17 on commercially available white polyester netting material (fiber titer 75 denier, 156 mesh, weight 28-32 g/m²) without prior washing. The aqueous treatment baths were prepared by mixing the aqueous dispersions with commercially available emulsions of insecticide and/or repellent, setting pH with buffer solutions and adding a fixative (if needed). The concentrations of the treatment baths were adjusted according to the liquor uptake possible (LU between 60 and 100 %). The treatment baths were applied by using a padder-stenter equipment on a laboratory scale (Mathis AG, Switzerland). The netting material is fully immersed into the treatment bath and excess liquor is removed by passing it through cylinders which move in counter-direction. By choosing a defined distance between these cylinders (and thus a defined pressure) the liquor uptake can be controlled. The liquor uptake is measured by weighing an impregnated piece of netting and subtracting the weight of the dry, untreated netting and is given as % weight of liquor on weight of netting. The drying/curing step was performed in a laboratory stenter which allows to control the temperature and time of the treatment.

The treated nettings have been washed different times as mentioned in table 2 (see column "Knock-down 60 min"; the statement in parenthesis (number plus w) indicates how often the netting has been washed before the tesing was carried out). The washing was carried out by the *"Montpellier washing procedure"* (as described in the annex WHO PVC, 3/07/2002 "Evaluation of wash resistance of long-lasting insecticidal nets"): Net samples are washed individually in beakers containing 0.5 L deionised water and 2 g/L soap (pH 10-11) at 30 °C in a water bath shaken for 10 minutes in clean water at 155 movements per minute. The soap used comprises (among further components like etidronic acid and sodium hydroxide or coconut acid, tetra sodium EDTA and limonene) the following ingredients: Sodium tallowate, water, sodium palm kernelate or sodium cocoate, perfume, glycerol, sodium chloride and some dyestuff (C.I. 77891).

Samples were bioassayed according to the cone testing procedure described below.

### Testing procedure:

The testing follows the basic guidelines of WHO cone testing procedures with a few modifications. Cones (WHO cones (WHOPES 96.1): clear plastic cone structures (11 cm diam.) with a flat flange around the bottom edge and a hole at the apex) are held against treated net pieces (25 x 25 cm) via a hand-made manifold apparatus modeled similarly to CDC (Centers for Disease Control and Prevention) methodology. The manifold device used is made by cutting four holes (9 cm diameter) in a plastic serving tray (30.5 x 41.0 cm, Consolidated Plastics). An unmodified tray of the same dimensions acts as a base. Onto the surface of the base tray two pieces of blotter paper are placed, cut to fit inside the tray. A piece of treated netting is then placed onto the blotter paper followed by four WHO cones placed to roughly correspond to the positioning of the holes cut in the manifold (top) tray. This top tray is then placed over the cones so they pass through the holes. The top tray is then securely fastened to the base tray using four large binder clips. The blotter paper helps to ensure a reasonably tight fit of the cones to the netting. Mixed sex mosquitoes, 1-5 days old, are removed from a rearing cage with an aspirator and ca. 5 mosquitoes placed into each cone. A lab timer is started after the introduction of insects into the first cone with each cone supplied with mosquitoes ca. 15 seconds apart, taking one minute to fill all the cones. Each cone is plugged with a rubber stopper immediately after introduction of the insects. Mosquitoes are held in each cone for three minutes where each insect typically rests on the netting surface (if treatment is not strongly repellent). If any mosquito rests on the wall of a cone then the cone can be tapped gently to relocate the insect to the netting. After three minutes, the insects are all removed by aspirator and placed into a plastic holding cup, combining mosquitoes from all four cones, which represent a single replicate. Four replicates of each treatment are recommended. The holding cup consists of a clear plastic cup (9 cm tall x 6.5 cm wide) with a plastic screw-on lid. A 1 cm hole in the lid is used to insert the aspirator for insect deposition. One set of mosquitoes from each cone is collected and deposited into the holding container at a time.

Between insertions of the aspirator tip into the container lid, an overhead transparency marker is used to plug the hole to prevent insect escape. After all four cones have been emptied of insects into the holding container, the hole is then plugged with a cotton dental wick soaked with 10% sugar water. The end of the wick sticking out of the cup should have the end manually flattened somewhat to ensure that it doesn't fall into the cup and allow mosquito escape. Knockdown (KD) data are generally taken from the pooled mosquitoes at 60 minutes and 24-hours. A 30-minute (or other) reading can be included if deemed necessary. For speed of knockdown, the mosquito can be left in the cone and the time to KD recorded for each individual mosquito. Each KD mosquito is removed as it goes down to prevent recounting that insect if it once again flies. All mosquitoes are then held as described previously for a 24-hour Mortality count.

### Results

**Table 2**

| | Binder | | | Fixative* | Insecticide | | | Liquor uptake | Drying/ Curing temperat. | Drying/ curing time | Knock-down 60 min**** | Mortality 24 hrs |
|---|---|---|---|---|---|---|---|---|---|---|---|---|
| Example | type | Bath conc. | weight on net | Bath conc. | Active ingredient | Bath conc. | Weight on net | | | | | |
| | | | | | | | | | | | | |
| | | | | | | | | | | | | |
| | | | | | | | | | | | | |
| B 04 | A 15 | 10 g/L | 1 % | 0.5 g/L | Alpha | 6.4 g/L | 0.64 % | 100 % | 80 °C | 3.5 min | 100 % (15 w) | 96.5 % |
| | | | | | | | | | | | | |
| | | | | | | | | | | | | |
| B 06 | A 15 | 10 g/L | 1 % | 0.4 g/L | Alpha | 6.4 g/L | 0.64 % | 100 % | 100 °C | 5 min | 94 % (5 w) | 77 % |
| | | | | | | | | | | | | |
| | | | | | | | | | | | | |
| | | | | | | | | | | | | |
| B 10 | A 05 | 10 g/L | 1 % | 0.5 g/L | Alpha | 6.4 g/L | 0.64 % | 100 % | 80 °C | 3.5 min | 96.9 % (5 w) | 88.8 % |
| B 11 | A 08 | 10 g/L | 1 % | 0.5 g/L | Alpha | 6.4 g/L | 0.64 % | 100 % | 80 °C | 3.5 min | 100 % (20 w) | 94.3 % |
| B 12 | A 15 | 10 g/L | 1 % | 0.6 g/L** | Alpha | 6.4 g/L | 0.64 % | 100 % | 100 °C | 5 min | 94.7 % (5 w) | 47.4 % |
| | | | | | | | | | | | | |
| | | | | | | | | | | | | |
| B 15 | A 15 | 10 g/L | 1 % | 0.4 g/L | Alpha | 6.4 g/L | 0.64 % | 100 % | 100 °C | 5 min | 100 % (5 w) | 77 % |
| B 16 | A 15 | 10 g/L | 1 % | 2 g/L** | Alpha | 6.4 g/L | 0.64 % | 100 % | 100 °C | 5 min | 94.7 % (5 w) | 47.4 % |
| B 17 | A 15 | 30 g/L | 3% | - | Alpha | 6.4 g/L | 0.64 % | 100 % | 150 °C | 2 min | 86.6 % (5 w) | 50.5% |
| B 18 | A 15 | 10 g/L | 1 % | - | Alpha | 6.4 g/L | 0.64 % | 100 % | 150 °C | 5 min | 83.7 % (5 w) | 31.6 % |
| B 19 | A 15 | 10 g/L | 1 % | - | Alpha | 6.4 g/L | 0.64 % | 100 % | 100 °C | 2 min | 94.85 % (5 w) | 53.6 % |
| B 20 | A 15 | 30 g/L | 3 % | 1.15 g/L | Alpha | 6.4 g/L | 0.64 % | 100% | 100 °C | 2 min | 89.7 % (5 w) | 29 % |
| B 21 | A 15 | 30 g/L | 3 % | | Alpha | 6.4 g/L | 0.64 % | 100 % | 100 °C | 5 min | 96.9 % (5 w) | 61.9 % |
| B22 | - | - | - | - | - | - | - | - | - | - | 0 % (untreated) | 1.0% |

| | | | | | | | | | | | | |
|---|---|---|---|---|---|---|---|---|---|---|---|---|
| * fixative agent: isocyanurate based on HMDI which is hydrophilized with a polyethylene oxide and which is dissolved in propylene carbonate (70 % by weight of HMDI in 30 % by weight of propylene carbonate). The amount of free isocyanate groups is 11 to 12 % by weight, based on the amount of isocyanate used as staring material for the preparation of the isocyanurate. The boiling point of the fixative agent is 240-245°C, and the viscosity is 280 mPa.s (Brookfield 100 U/min). ** the fixative agent here is diammonium hydrogen phosphate (calc. 100 %) *** Alpha is alpha-Cypermethrin, the insecticide used according to examples B01 to B14, except for example B05, where Deltamethrin was used **** The statement in parentheses (number plus w) indicates how often the netting has been washed before the tesing was carried out | | | | | | | | | | | | |

## Claims

1. An insecticide or repellent or rodenticide, fungicide, molluscicide, larvicide or ovicide composition for application to a textile material or plastics material which composition comprises a mixture including
a) at least one insecticide and/or at least one repellent and/or at least one rodenticide, fungicide, molluscicide, larvicide and/or ovicide as component A, and
b1) at least one acrylic binder as component B1 obtainable by emulsion polymerisation of the following components:
b1a) n-butyl acrylate as component 81A,
b1b) at least one monomer of formula I as component B1B 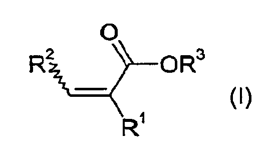 wherein
R¹, R² and R³ are independently selected from C₁- to C₁₀-alkyl which may be linear or branched; substituted or unsubstituted aryl;
R¹ and R² may further be H;
except of R³ = n-butyl, when R¹ and R² are H;
b1c) at least one monomer of formula II as component B1C 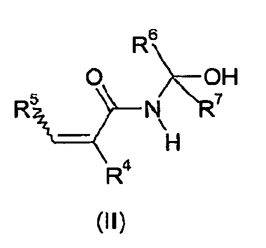 wherein
R⁴, R⁵, R⁶ and R⁷ are independently selected from the group consisting of H, C₁₋ to C₁₀-alkyl which may be linear or branched; substituted or unsubstituted aryl;
b1d) optionally at least one momomer of formula III as component B1D 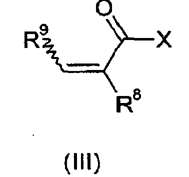 wherein
R⁸ and R⁹ are independently selected from the group consisting of H, C₁- to C₁₀-alkyl which may be linear or branched; substituted or unsubstituted aryl;
X is selected from the group consisting of H, OH, NH₂, OR¹¹OH, glycidyl, hydroxypropyl, 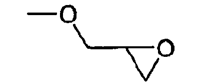 groups of the formula 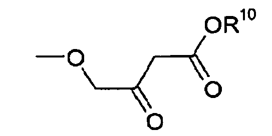 wherein
R¹⁰ is selected from the group consisting of C₁- to C₁₀-alkyl which may be branched or linear; substituted or unsubstituted aryl;
R¹¹ is selected from the group consisting of C₁- to C₁₀-alkylene; substituted or unsubstituted arylenes;
b1e) optionally further monomers which are copolymerizable with the monomers mentioned above selected from
b1e1) polar monomers as component B1E1; and/or
b1e2) non polar monomers as component B1E2.

2. The insecticide or repellent or rodenticide, fungicide, molluscicide, larvicide or ovicide composition as claimed in claim 1, wherein the acrylic binder is obtainable by emulsion polymerization of the following components:
b1a) 10 to 90% by weight of component B1A;
b1 b) 10 to 90% by of component B1B;
b1 c) 1 to 5 % by weight of component B1 C;
b1d) 0 to 5 % by weight of component B1D;
b1e) further monomers which are copolymerizable with the monomers menti oned above selected from
b1e1) 0 to 30 % by weight of component B1E1; and/or
b1 e2) 0 to 40 % by weight of component B1 E2;
wherein the sum of the components B1A, B1B, B1C and optionally B1D and B1E is 100 % by weight.

3. The insecticide or repellent or rodenticide, fungicide, molluscicide, larvicide or ovicide composition as claimed in claim 1, wherein the acrylic binder is obtainable by emulsion polymerization of the following components:
b1a) 30 to 85% by weight of component B1A;
b1b) 10 to 90% by weight of component B 1 B;
b1c) 1 to 5 % by weight of component B1C;
b1d) 0 to 5 % by weight of component B1D;
b1e) further monomers which are copolymerizable with the monomers menti oned above selected from
b1e1) 0 to 30 % by weight of component B1E1; and/or
b1e2) 0 to 40 % by weight of component B1 E2;
wherein the sum of the components B1A, B1B, B1C and optionally B1D and B1E is 100 % by weight.

4. The insecticide or repellent or rodenticide, fungicide, molluscicide, larvicide or ovicide composition as claimed in any of claims 1 to 3, wherein the insecticide is selected from
pyrethroid compounds,
carbamate compounds,
organophosphorous compounds,
insecticides with a sterilising effect on adult mosquitoes,
the repellent is selected from N,N-diethyl-meta-toluamide (DEET), N,N-diethylphenylacetamide (DEPA), 1-(3-cyclohexan-1-yl-carbonyl)-2-methyl-piperine, (2-hydroxymethylcyclohexyl) acetic acid lactone, 2-ethyl-1,3-hexandiol, indalone, methylneodecanamide (MNDA), a pyrethroid not used for insect control, a repellent derived from or identical with plant extracts or crude plant extracts, IR3535 (ethyl butylacetylaminopropionate) and icaridin (1-piperidinecarboxylic acid 2-(2-hydroxyethyl)-1-methylpropylester),
niclosamide is selected as molluscicide;
suitable rodenticides of first generation anticoagulant rodenticides and second generation anticoagulant rodenticides are selected from the group consisting of warfarin, chlorphacinone, coumatetralyl as first generation anticoagulant rodenticides, and flocoumafen, brodifacoum, difenacoum, bromadialone, difethialone, and bromethalin as second generation anticoagulant rodenticides;
antifungal agents as fungicides used in the case of athlete's foot are selected from the group consisting of clotrimazole: 1-(2-chlorotrityl)imidazole, miconazole: 1-[2-(2,4-dichlorophenyl)-2-[(2,4-dichlorophenyl)methoxy]ethyl]-1H-imidazole, econazole 4-[2-[(4-chlorophenyl)memoxy]-2-(2,4-dichlorophenyl)-ethyl]-4H-imidazole, tioconazole: 1-[2-[(2-chloro-3-thienyl)methoxy]-2-(2,4-dichlorophenyl)-ethyl]-1H-imidazole, undecylenic acid, terbinafine hydrochloride: N,6,6-trimethyl-N-(naphthalen-4-ylmethyl)hept-2-en-4-yn-1-amine hydrochloride (lamisil topical), and tolnaftate: N-methyl-N-(m-tolyl)-1-naphthalen-3-yloxy-thioformamide;
further fungicides are selected from
azoles,
strobilurines,
acylalanines,
amine derivatives, selected from Aldimorph, Dodine, Dodemorph, Fenpropimorph, Fenpropidin, Guazatine, Iminoctadine, Spiroxamine, and
Tridemorph;
anilinopyrimidines,
dicarboximides,
cinnamic acid amide and analogs, selected from Dimethomorph, Flumetover, and
Flumorph;
antibiotics,
dithiocarbamates,
heterocyclic compounds,
nitrophenyl derivatives, selected from Binapacryl, Dinocap, Dinobuton, Nitrophthal-isopropyl;
sulfonic acid derivatives, selected from Captafol, Captan, Dichlofluanid, Folpet,
and Tolylfluanid,
further fungicides are selected from Acibenzolar-S-methyl, Benthiavalicarb, Carpropamid, Chlorothalonil, Cyflufenamid, Cymoxanil, Dazomet, Diclomezin, Diclocymet, Diclofluanid, Diethofencarb, Edifenphos, Ethaboxam, Fenhexamid, Fentin-Acetate, Fenoxanil, Ferimzone, Fluazinam, Fosetyl, Fosetyl-Aluminium, phosphorous acid, Iprovalicarb, hexachlorobenzene, Metrafenone, Pencycuron, Propamocarb, Phthalid, Toloclofos-methyl,
Quintozene and Zoxamide.

5. The insecticide or repellent or rodenticide, fungicide, molluscicide, larvicide or ovicide composition as claimed in claim 4, wherein the insecticide is selected from
pyrethroid compounds selected from the group consisting of
Etofenprox: 2-(4-ethoxyphenyl)-2-methylpropyl-3-phenoxybenzyl ether, Chlorfenapyr: 4-bromo-2-(4-chlorophenyl)-1-ethoxymethyl-5-(trifluoromethyl)-pyrrole-3-carbonitrile,
Fenvalerate: (RS)-alpha-cyano-3-phenoxybenzyl (RS)-2-(4-chlorophenyl)-3 methylbutyrate,
Esfenvalerate: (S)-alpha-cyano-3-phenoxybenzyl (S)-2-(4-chlorophenyl)-3-methylbuty-rate,
Fenpropathrin: (RS)-alpha-cyano-3-phenoxybenzyl 2,2,3,3-tetramethylcyclopropane-carboxylate,
Cypermethrin: (RS)-alpha-cyano-3-phenoxybenzyl (1RS)-cis, trans-3-(2,2-dichlorovinyl)-2,2-dimethylcyclopropanecarboxylate,
alpha-Cypermethrin: racemate comprising the (S)-α-(1R) and (R)-α-(1S) diastereomers,
Permethrin: 3-phenoxybenzyl (1RS)-cis, trans-3-(2,2-dichlorovinyl)-2,2-dimethylcyclopropanecarboxylate,
Cyhalothrin: (RS)-alpha-cyano-3-phenoxybenzyl (Z)-(1RS)-cis-3-(2-chloro-3,3,3-trifluoroprop-1-enyl)-2,2-dimethylcyclopro panecarboxylate, lambda-cyhalothrin, Deltamethrin: (S)-alpha-cyano-3-phenoxybenzyl (1R)-cis-3-(2,2-dibromovinyl)-2,2-dimethylcyclopropanecarboxylate,
Cycloprothrin: (RS)-alpha-cyano-3-phenoxybenzyl (RS)-2,2-dichloro-1-(4-ethoxyphenyl)cyclopropanecarboxylate,
Fluvalinate: alpha-cyano-3-phenoxybenzyl N-(2-chloro-alpha, alpha, alpha, alpha-trifluoro-p-tolyl)-D-valinate,
Bifenthrin: (2-methylbiphenyl-3-ylmethyl)0(Z)-(1RS)-cis-3-(2-chloro-3,3,3-trifluoro-1-propenyl)-2,2-dimethylcyclopropanecarboxylate, 2-methyl-2-(4-bromodifluoromethoxyphenyl)propyl (3-phenoxybenzyl)ether, Tralomethrin: (S)-alpha-cyano-3-phenoxybenzyl (1R-cis)3((1'RS)(1',2',2',2'-tetrabromoethyl))-2,2-dimethylcyclopropanecarboxylate,
Silafluofen: 4-ethoxyphenyl(3-(4-fluoro-3-phenoxyphenyl)propyl}dimethylsilane, D-fenothrin: 3-phenoxybenzyl (1R)-cis, trans)-chrysanthemate,
Cyphenothrin: (RS)-alpha-cyano-3-phenoxybenzyl (1R-cis, trans)-chrysanthemate, D-resmethrin: 5-benzyl-3-furylmethyl (1R-cis, trans)-chrysanthemate,
Acrinathrin: (S)-alpha-cyano-3-phenoxybenzyl (1R-cis(Z))-(2,2-dimethyl-3-(oxo-3-(1,1,1,3,3,3-hexafluoropropyloxy)propenyl(cyclopropanecarboxylate,
Cyfluthrin: (RS)-alpha-cyano-4-fluoro-3-phenoxybenzyl 3-(2,2-dichlorovinyl)-2,2-dimethylcyclopropanecarboxylate,
Tefluthrin: 2,3,5,6-tetrafluoro-4-methylbenzyl (1RS-cis (Z))-3-(2-chloro-3,3,3-trifluoro-prop-1-enyl)-2,2-dimethylcyclopropanecarboxylate,
Transfluthrin: 2,3,5,6-tetrafluorobenzyl (1R-trans)-3-(2,2-dichlorovinyl)-2,2-dimethyl-cyclopropanecarboxylate,
Tetramethrin: 3,4,5,6-tetrahydrophthalimidomethyl (1RS)-cis, trans-chrysanthemate,
Allethrin: (RS)-3-allyl-2-methyl-4-oxocyclopent-2-enyl (1RS)-cis, trans-chrysanthemate,
Prallethrin: (S)-2-methyl-4-oxo-3-(2-propynyl)cyclopent-2-enyl (1R)-cis, trans-chrysanthemate,
Empenthrin: (RS)-1-ethynyl-2-methyl-2-pentenyl (1R)-cis,trans-chrysanthemate, Imiprothrin: 2,5-dioxo-3-(prop-2-ynyl)imidazolidin-1-ylmethyl (1R)-cis, trans-2,2-dimethyl-3-(2-methyl-l-propenyl)-cyclopropanecarboxylate,
D-flamethrin: 5-(2-propynyl)-furfuryl (1R)-cis, trans-chrysanthemate, and 5-(2-propynyl)furfuryl 2,2,3,3-tetramethylcyclopropanecarboxylate;
Pyriproxyfen: 4-phenoxyphenyl (RS)-2-(2-pyridyloxy)propyl ether;
pyrethrum;
d-d, trans-cyphenothrin: (RS)-α-cyano-3-phenoxybenzyl (1RS,3RS;1RS,3SR)-2,2-dimethyl-3-(2-methylprop-1-enyl)cyclopropanecarboxylate;
DDT;
carbamate compounds selected from the group consisting of
Alanycarb: S-methyl-N[[N-methyl-N-[N-benzyl-N(2-ethoxy-carbonylethyl)amino-thio]carbamoyl]thioacetimidate,
Bendiocarb: 2,2-dimethyl-1,3-benzodioxol-4-yl-methylcarbamate), Carbaryl(1-naphthyl N-methylcarbamate,
Isoprocarb: 2-(1-methylethyl)phenyl methylcarbamate,
Carbosulfan: 2,3 dihydro-2,2-dimethyl-7-benzofuranyl[(dibutylamino)thio]methylcarbamate,
Fenoxycarb: Ethyl[2-(4-phenoxyphenoxy)ethyl]carbamate,
Indoxacarb: Methyl-7-chloro-22,3,4°,5-tetrahydro-2-[methoxycarbonyl (-4-trifluoromethoxyphenyl)]
Propoxur: 2-isopropyloxyphenal methylcarbamate,
Pirimicarb: 2-dimethylamino-5,6-dimethyl-4-pyrimidinyl-dimethylcarbamate, Thiodiocarb: dimethyl N,N'(thiobis((methylimino)carbonoyloxy)bisethanimidiothioate);
Methomyl: S-methyl N-((methylcarbamoyl)oxy)thioacetamidate,
Ethiofencarb: 2-((ethylthio)methy)phenyl methylcarbamate,
Fenothiocarb: S-(4-phenoxybutyl)-N,N-dimethyl thiocarbamate,
Cartap: S,S'-(2-5 dimethylamino)trimethylene)bis (thiocarbamate)hydrochloride, Fenobucarb: 2-sec-butylphenylmethyl carbamate,
XMC: 3,5-dimethylphenyl-methyl carbamate,
Xylylcarb: 3,4-dimethylphenylmethylcarbamate;
organophosphorous compounds selected from the group consisting of
Trichlorfon: phosphoric acid, (2,2,2-trichloro-1-hydroxyethyl)-, dimethyl ester Fenitrothion: O,O-dimethyl O-(4-nitro-m-tolyl)phosphorothioate,
Diazinon: O,O-diethyl-O-(2-Isopropyl-6-methyl-4-pyrimidinyl)phosphorothioate, Pyridaphenthion: O-(1,6-dihydro-6-oxo-1-phenylpyrazidin-3-yl) O,O-diethyl phosphorothioate,
Pirimiphos-Etyl: O,O-diethyl O-(2-(diethylamino)6-methyl-pyrimidinyl)phosphorothioate, Pirimiphos-Methyl: O-[2-(diethylamino)-6-methyl-4 pyrimidinyl] O,O-dimethyl phosphorothioate,
Etrimphos: O-6-ethoxy-2-ethyl-pyrimidin-4-yl-O,O-dimethyl-phosphorothioate, Fenthion: 0,O-dimethyl-O-[-3-methyl-4-(methylthio)phenyl phosphorothioate,
Phoxim: 2-(diethoxyphosphinothoyloxyimino)-2-phenylacetonitrile,
Chlorpyrifos: O,O-diethyl-O-(3,5,6-trichloro-2-pyrinyl)phosphorothioate, Chlorpyriphosmethyl: O,O-dimethyl O-(3,5,6-trichloro-2-pyridinyl)phosphorothioate,
Cyanophos: O,O-dimethyl O-(4 cyanophenyl)phosphorothioate,
Pyraclofos: (R,S)[4-chlorophenyl)-pyrazol-4-yl]-O-ethyl-S-n-propyl phosphorothioate,
Acephate: O, S-dimethyl acetylphosphoroamidothioate,
Azamethiphos: S-(6-chloro-2,3-dihydro-oxo-1,3-oxazolo[4,5-b]pyridine-3-ylmethyl phosphorothioate,
Malathion: O,O-dimethyl phosphorodithioate ester of diethyl mercaptosuccinate, Temephos: (O,O'(thiodi-4-1-phenylene) O,O,O,O-tetramethyl phosphorodithioate, Dimethoate: ((O,O-dimethyl S-(n-methylcarbamoylethyl)phosphorodithioate, Formothion: S[2-formylmethylamino]-2-oxoethyl]-O,O-dimethyl phosphorodithioate,
Phenthoate: O,O-dimethyl S-(alpha-ethoxycarbonylbenzal)-phosphorodithioate; lodofenphos: O-(2,5-dichloro-4-iodophenyl)-O,O-dimethyl-phosphorthioate;
insecticides with a sterilising effect on adult mosquitoes selected from the group consisting of
1-(alfa-(chloro-alpha-cyclopropylbenzylidenamino-oxy)-p-tolyl)-3-(2,6-difluorobenzoyl)urea,
Diflubenzuron: N-(((3,5-dichloro-4-(1,1,2,2-tetraflouroethoxy)phenylamino)carbonyl)2,6 difluoro benzamide,
Triflumuron: 2-chloro-N-(((4-(trifluoromethoxy)phenyl)-amino-)carbonyl)benzamide, or a triazine, which is N-cyclopropyl-1,3,5-triazine-2,4,6-triamine; and
Lambda-cyhalothrine:
α-cyano-3-phenoxybenzyl-3-(2-chloro-3,3,3-trifluoroprop-1-enyl)-2,2-dimethylcyclopropane carboxylate, as a 1:1 mixture of (Z)-(1R,3R), R-ester and (Z)-(1S,3S), S-ester,
the repellent is selected from the group consisting of
N,N-diethyl-meta-toluamide (DEET), N,N-diethylphenylacetamide (DEPA), 1-(3-cyclohexan-1-yl-carbonyl)-2-methylpiperine, (2-hydroxymethylcyclohexyl) acetic acid lactone, 2-ethyl-1,3-hexandiol, indalone, methylneodecanamide (MNDA), {(+/-)-3-allyl-2-methyl-4-oxocyclopent-2-(+)-enyl-(+)-trans-chrysantemate (Esbiothrin), limonene, eugenol, (+)-eucamalol (1), (-)-1-epi-eucamalol, crude plant extracts from *Eucalyptus maculata, Vitex rotundifolia, Cymbopogan martinii, Cymbopogan citratus* (lemon grass), *Cymopogan nartdus* (citronella), IR3535 (ethyl butylacetylaminopropionate), and icaridin (1-piperidinecarboxylic acid 2-(2-hydroxyethyl)-1-methylpropylester).
the further fungicides are selected from
azoles selected from Bitertanol, Bromoconazole, Cyproconazole, Difenoconazole, Dinitroconazole, Epoxiconazole, Fenbuconazole, Fluquiconazole, Flusilazol, Flutriafol, Hexaconazole, Imazalil, Ipconazole, Metconazole, Myclobutanil, Penconazole, Propiconazole, Prochloraz, Prothioconazole, Simeconazole, Tebuconazole, Tetraconazole, Triadimefon, Triadimenol, Triflumizol, and Triticonazole;
strobilurines, selected from Azoxystrobin, Dimoxystrobin, Fluoxastrobin, Kresoxim-methyl, Metominostrobin, Orysastrobin, Picoxystrobin, Pyraclostrobin, and Trifloxystrobin;
acylalanines selected from Benalaxyl, Metalaxyl, Mefenoxam, Ofurace, and Oxadixyl;
amine derivatives selected from Aldimorph, Dodine, Dodemorph, Fenpropimorph, Fenpropidin, Guazatine, Iminoctadine, Spiroxamine, and Tridemorph;
anilinopyrimidines selected from Pyrimethanil, Mepanipyrim, and Cyprodinil;
dicarboximides selected from Iprodione, Myclozolin, Procymidon, and Vinclozolin;
cinnamic acid amide and analogues selected from Dimethomorph, Flumetover, and Flumorph;
antibiotics selected from Cycloheximid, Griseofulvin, Kasugamycin, Natamycin, Polyoxin, and Streptomycin;
dithiocarbamates selected from Ferbam, Nabam, Maneb, Mancozeb, Metam, Metiram, Propineb, Polycarbamat, Thiram, Ziram and Zineb;
heterocyclic compounds selected from Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Picobenzamid, Probenazol, Proquinazid, Pyrifenox, Pyroquilon, Quinoxyfen, Silthiofam, Thiabendazol, Thifluzamid, Thiophanat-methyl, Tiadinil, Tricyciazol, and Triforine M inorganics;
nitrophenyl derivatives selected from Binapacryl, Dinocap, Dinobuton, Nitrophthal-isopropyl;
Phenylpyrrole, Fenpiclonil and Fludioxonil, and
sulfonic acid derivatives selected from Captafol, Captan, Dichlofluanid, Folpet, and Tolylfluanid.

6. The insecticide or rodenticide, fungicide, molluscicide, larvicide or ovicide composition as claimed in any of claims 1 to 5, wherein the particle size of the insecticide and/or repellent and/or rodenticide, fungicide, molluscicide, larvicide and/or ovicide is from 50 nm to 20 µm.

7. The insecticide or repellent or rodenticide, fungicide, molluscicide, larvicide or ovicide composition as claimed in any of claims 1 to 6, further comprising one or more component selected from water, preservatives, detergents, stabilizers, agents having UV-protecting properties, optical brighteners, spreading agents, anti-migrating agents, foam-forming agents, wetting agents, anti-soiling agents, thickeners, further biocides, plasticizers, adhesive agents, fragrance, pigments and dyestuffs.

8. The insecticide or repellent or rodenticide, fungicide, molluscicide, larvicide or ovicide composition as claimed in any of claims 1 to 7, comprising from 0.001 to 95 % by weight of the insecticide and/or repellent and/or at least one rodenticide, fungicide, molluscicide, larvicide and/or ovicide.

9. The insecticide or repellent or rodenticide, fungicide, molluscicide, larvicide or ovicide composition as claimed in any of claims 1 to 8, which is provided as a kit for impregnation by the end-user or in a local factory.

10. The insecticide or repellent or rodenticide, fungicide, molluscicide, larvicide or ovicide composition as claimed in claim 9 wherein the composition in the kit is adapted for preparing a solution or emulsion by adding water.

11. The insecticide or repellent or rodenticide, fungicide, molluscicide, larvicide or ovicide composition as claimed in any of claims 1 to 10, additionally comprising a fixative agent.

12. The insecticide or repellent or rodenticide, fungicide, molluscicide, larvicide or ovidde composition as claimed in claim 11, wherein the fixative agent is an isocyanurate comprising free isocyanate groups.

13. The insecticide or repellent or rodenticide, fungicide, molluscicide, larvicide or ovicide composition as claimed in claim 12, wherein the fixative agent is an isocyanurate based on HMDI which is hydrophilized with a polyethylene oxide and which is dissolved in propylene carbonate (70 % by weight of HMDI in 30 % by weight of propylene carbonate), wherein the amount of free isocyanate groups is 11 to 12 % by weight, based on the amount of isocyanate used as staring material for the preparation of the isocyanurate.

14. The insecticide or repellent or rodenticide, fungicide, molluscicide, larvicide or ovicide composition as claimed in any of claims 11 to 13 comprising the following components, based on the solids content of the composition:
a) 20 to 70 % by weight, of at least one insecticide and/or at least one repellent and/or at least one rodenticide, fungicide, molluscicide, larvicide and/or ovicide (component A), and
b1) 29 to 72 % by weight, of at least one acrylic binder (component B1) as defined above, comprising;
b1a) 10 to 90% by weight based on the acrylic binder of n-butyl acrylate (component B1A);
b1 b) 10 to 90% by weight based on the acrylic binder of at least one monomer of formula I (component B1 B);
b1c) 1 to 5 % by weight based on the acrylic binder of at least one monomer of formula II (component B1C);
b1d) 0 to 5 % by weight based on the acrylic binder of at least one monomer of formula III (component B1D);
b1e) further monomers which are copolymerizable with the monomers mentioned (component B1E) above selected from
b1e1) 0 to 30 % by weight based on the acrylic binder of at least one polar momomer (component B1E1); and/or
b1e2) 0 to 40 % by weight based on the acrylic binder of at least one non polar momomer (component B1E1);
c) 1 to 8 % by weight of at least one fixative agent (component C);
wherein the sum of the components is 100 % by weight of solids content of the insecticide or repellent or rodenticide, fungicide, molluscicide, larvicide or ovicide composition.

15. An impregnated textile material or plastics material for insect killing and/or repellence of an insect comprising
a) at least one insecticide and/or at least one repellent, and
b1) at least one acrylic binder as claimed in any of claims 1 to 3.

16. The impregnated textile material, or plastics material as claimed in claim 15 comprising an insecticide and/or repellent as defined in claim 4.

17. The impregnated textile material or plastics material as claimed in claim 15 or 16 further comprising one or more components selected from preservatives, detergents, stabilizers, agents having UV-protecting properties, optical brighteners, spreading agents, anti-migrating agents, foam-forming agents, wetting agents, anti-soiling agents, thickeners, further biocides, plasticizers, adhesive agents, fragrance, pigments and dyestuffs.

18. The impregnated textile material or plastics material as claimed in any of claims 15 to 17 comprising from 0.001 to 10 % by weight of the weight of the textile material or plastics material of at least one insecticide and/or at least one repellent.

19. The impregnated textile material or plastics material as claimed in claim 18, comprising
a) 0.01 to 10 % by weight of the textile material or plastics material of at least one insecticide and/or at least one repellent, and
b1) 0.001 to 10 % by weight of the weight of the textile material or plastics material of at least one acrylic binder as claimed in any of claims 1 to 3.

20. The impregnated textile material or plastics material as claimed in any of claims 15 to 19, wherein the textile material or plastics material is a netting made from polyester.

21. A process for impregnation of a textile material or plastics material comprising the steps
i) forming an aqueous formulation or a melt, comprising at least one insecticide and/or at least one repellent and/or at least one rodenticide, fungicide, molluscicide, larvicide and/or ovicide as defined in claim 4 and at least one acrylic binder as defined in any of claim 1 to 3 and optionally further ingredients;
ii) applying the aqueous formulation to the textile material or plastics material by
iia) passing the textile material or plastics material through the aqueous formulation;
or
iib) bringing the textile material or plastics material in contact with a roller that is partly or fully dipped into the aqueous formulation and drawing the aqueous formulation to the side of the textile material or plastics material in contact with the roller;
or
iic) double-side coating of the textile material or plastics material;
or
iid) spraying the aqueous formulation onto the textile material or plastics material; wherein the spraying is carried out with any suitable device for spraying by hand or automatically, for example with an aerosol can or devices usually used in a factory;
or
iie) applying the aqueous formulation in form of a foam;
or
iif) submerging the textile material or plastics material into the aqueous formulation;
or
iig) brushing the aqueous formulation onto or into the textile material or plastics material;
or
iih) pouring the aqueous formulation onto the textile material or plastics material;
or
applying the melt by calandering or with a doctor-blade;
iii) optionally removing surplus aqueous formulation or surplus melt; and
iv) drying and/or curing the textile material or plastics material.

22. The process as claimed in claim 21, wherein step iia) is carried out by completely submerging the textile material or plastics material in the aqueous formulation either in a trough containing the aqueous formulation or passing the textile material or plastics material through the aqueous formulation which is held between two horizontally oriented rollers.

23. The process as claimed in claim 21 or 22, wherein the insecticide and/or repellent and/or rodenticide, fungicide, molluscicide, larvicide and/or ovicide is an insecticide and/or repellent and/or rodenticide, fungicide, molluscicide, larvicide and/or ovicide as defined in claim 4.

24. The process as claimed in any of claims 21 to 23, wherein the aqueous formulation further comprises one or more ingredients selected from the group consisting of detergents, stabilizers, agents having UV-protecting properties, optical brighteners, spreading agents, anti-migrating agents, preservatives, foam-forming agents, wetting agents, thickeners, further biocides, plasticizers, adhesive agents, anti-soiling agents, fragrance, pigments and dyestuffs.

25. The process as claimed in any of claims 21 to 24, wherein the dying of the textile material or plastics material is carried out simultaneously with the impregnation of the textile material or plastics material, wherein an aqueous formulation is formed further comprising at least one dyestuff and/or at least one pigment.

26. The process as claimed in any of claims 21 to 25, wherein the curing in step iv) is carried out at 60 to 170 °C.

27. A process for coating a textile material or plastics material by applying a composition comprising at least one insecticide and/or at least one repellent and/or at least one rodenticide, fungicide, molluscicide, larvicide and/or ovicide and at least one acrylic binder as defined in any of claims 1 to 3 to the textile material or plastics material.

28. The process as claimed in claim 27, wherein the composition further comprises one or more ingredients selected from the group consisting of detergents, stabilizers, agents having UV-protecting properties, optical brighteners, spreading agents, anti-migrating agents, preservatives, foam-forming agents, anti-soiling agents, wetting agents, thickeners, further biocides, plasticizers, adhesive agents, fragrance, pigments and dyestuffs.

29. Use of an insecticide or repellent or rodenticide, fungicide, molluscicide, larvicide or ovicide composition as claimed in any of claims 1 to 14 for impregnation of textile material or plastics material.

## Patentansprüche

1. Insektizid- oder Abwehr- oder Rodentizid-, Fungizid-, Molluskizid-, Larvizid- oder Ovizidzusammensetzung für das Aufbringen auf ein Textilmaterial oder Kunststoffmaterial, wobei die Zusammensetzung ein Gemisch umfasst, umfassend:
a) mindestens ein Insektizd und/oder mindestens ein Abwehrmittel und/oder mindestens ein Rodentizid, Fungizid, Molluskizid, Larvizid oder Ovizid als Komponente A und
b1) mindestens ein Acryl-Bindemittel als Komponente B1, das erhältlich ist durch Emulsionspolymerisation der folgenden Komponenten:
b1a) n-Butylacrylat als Komponente B1A
b1b) mindestens einem Monomer der Formel I als Komponente B1B 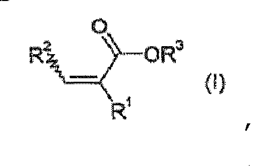 worin
R¹, R² und R³ unabhängig aus C₁- bis C₁₀-Alkyl, das gerade oder verzweigt sein kann, substituiertem oder unsubstituiertem Aryl ausgewählt sind;
R¹ und R² zudem H sein können;
mit der Ausnahme, dass R³ = n-Butyl, wenn R¹ und R² für H stehen;
b1c) mindestens einem Monomer der Formel II als Komponente B1C 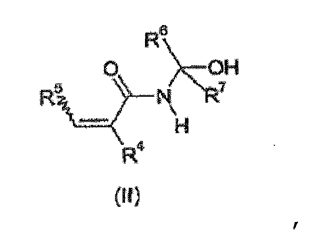 worin
R⁴, R⁵, R⁶ und R⁷ unabhängig aus der Gruppe ausgewählt sind, bestehend aus H, C₁- bis C₁₀-Alkyl, das gerade oder verzweigt sein kann, substituiertem oder unsubstituiertem Aryl;
b1d) gegebenenfalls mindestens einem Monomer der Formel III als Komponente B1D 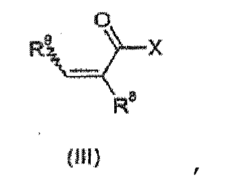 worin
R⁸ und R⁹ unabhängig aus der Gruppe ausgewählt sind, bestehend aus H, C₁- bis C₁₀-Alkyl, das gerade oder verzweigt sein kann, substituiertem oder unsubstituiertem Aryl;
X aus der Gruppe ausgewählt ist, bestehend aus H, OH, NH₂, OR¹¹ OH, Glycidyl, Hydroxypropyl, 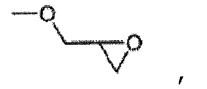 Gruppen der Formel 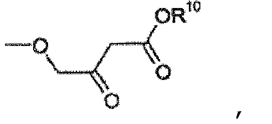 worin
R¹⁰ aus der Gruppe ausgewählt ist, bestehend aus C₁- bis C₁₀-Alkyl, das verzweigt oder gerade sein kann, substituiertem oder unsubstituiertem Aryl;
R¹¹ aus der Gruppe ausgewählt ist, bestehend aus C₁- bis C₁₀-Alkylen, substituierten oder unsubstituierten Arylenen;
b1e) gegebenenfalls weiteren Monomeren, die mit den vorstehend genannten Monomeren copolymerisierbar sind und ausgewählt sind aus
b1e1) polaren Monomeren als Komponente B1E1
und/oder
b1e2) unpolaren Monomeren als Komponente B1E2.

2. Insektizid- oder Abwehr- oder Rodentizid-, Fungizid-, Molluskizid-, Larvizid- oder Ovizidzusammensetzung nach Anspruch 1, wobei das Acryl-Bindemittel erhältlich ist durch Emulsionspolymerisation der folgenden Komponenten:
b1a) 10 bis 90 Gew.-% der Komponente B1A;
b1b) 10 bis 90 Gew.-% der Komponente B1B;
b1c) 1 bis 5 Gew.-% der Komponente B1C;
b1d) 0 bis 5 Gew.-% der Komponente B1D;
b1e) weiteren Monomeren, die mit den vorstehend genannten Monomeren copolymerisierbar sind und ausgewählt sind aus
b1e1) 0 bis 30 Gew.-% der Komponente B1E1 und/oder
b1e2) 0 bis 40 Gew.-% der Komponente B1E2,
wobei die Summe der Komponenten B1A, B1B, B1C und gegebenenfalls B1D und B1E 100 Gew.-% beträgt.

3. Insektizid- oder Abwehr- oder Rodentizid-, Fungizid-, Molluskizid-, Larvizid- oder Ovizidzusammensetzung nach Anspruch 1, wobei das Acryl-Bindemittel erhältlich ist durch Emulsionspolymerisation der folgenden Komponenten:
b1a) 30 bis 85 Gew.-% der Komponente B1A;
b1b) 10 bis 90 Gew.-% der Komponente B1B;
b1c) 1 bis 5 Gew.-% der Komponente B1C;
b1d) 0 bis 5 Gew.-% der Komponente B1D;
b1e) weiteren Monomeren, die mit den vorstehend genannten Monomeren copolymerisierbar sind, ausgewählt aus
b1e1) 0 bis 30 Gew.-% der Komponente B1E1 und/oder
b1e2) 0 bis 40 Gew.-% der Komponente B1E2,
wobei die Summe der Komponenten B1A, B1B, B1C und gegebenenfalls B1D und B1E 100 Gew.-% beträgt.

4. Insektizid- oder Abwehr- oder Rodentizid-, Fungizid-, Molluskizid-, Larvizid- oder Ovizidzusammensetzung nach einem der Ansprüche 1 bis 3, wobei das Insektizid ausgewählt ist aus:
Pyrethroid-Vebindungen,
Carbamat-Verbindungen,
Organophosphor-Verbindungen,
Insektiziden mit einer sterilisierenden Wirkung auf adulte Mücken,
das Abwehrmittel ausgewählt wird aus N,N-Diethyl-meta-toluamid (DEET), N,N-Diethylphenylacetamid (DEPA), 1-(3-Cyclohexan-1-yl-carbonyl)-2-methylpiperin, (2-Hydroxymethylcyclohexyl)essigsäurelacton, 2-Ethyl-1,3-hexandiol, Indalon, Methylneodecanamid (MNDA), einem Pyrethroid, das nicht zur Insektenbekämpfung verwendet wird, einem Abwehrmittel, das aus Pflanzenextrakten oder rohen Pflanzenextrakten stammt oder identisch damit ist, IR3535 (Ethylbutylacetylaminopropionat) und Icaridin (1-Piperi-dincarbonsäure-2-(2-hydroxyethyl-)-1 methylpropylester),
Niclosamid als Molluskizid ausgewählt wird,
geeignete Rodentizide aus den gerinnungshemmenden Rodentiziden der ersten Generation und den gerinnungshemmenden Rodentiziden der zweiten Generation aus der Gruppe ausgewählt werden, bestehend aus Warfarin, Chlorphacinon, Coumatetralyl als gerinnungshemmende Rodentizide der ersten Generation und Flocoumafen, Brodifacoum, Difenacoum, Bromadialon, Difethialon und Bromethalin als gerinnungshemmende Rodentizide der zweiten Generation;
Antipilzmittel als Fungizide, die im Fall von Sportlerfuß verwendet werden, aus der Gruppe ausgewählt werden, bestehend aus Clotrimazol: 1-(2-Chlortrityl)imidazol, Miconazol: 1-[2-(2,4-Dichlorphenyl)-2-[(2,4-dichlorphenyl)methoxy]ethyl]-1H-imidazol, Econazol 4-[2-[(4-Chlorphenyl)methoxy]-2-(2,4-dichlorphenyl)-ethyl]-4H-imidazol, Tioconazol: 1-[2-[(2-Chlor-3-thienyl)methoxy]-2-(2,4-dichlorphenyl)-ethyl]-1H-imidazol, Undecylensäure, Terbinafin-Hydrochlorid: N-6,6-Trimethyl-N-(naphthalin-4-ylmethyl)hept-2-en-4-in-1-amin-Hydrochlorid (Lamisil Topical) und Tolnaftat: N-Methyl-N-(m-tolyl)-1-naphthalin-3-yloxy-Thioformamid;
weitere Fungizide ausgewählt werden aus Azolen,
Strobilurinen,
Acylalaninen,
Aminderivaten, ausgewählt aus Aldimorph, Dodin, Dodemorph, Fenpropimorph, Fenpropidin, Guazatin, Iminoctadin, Spiroxamin und Tridemorph;
Anilinopyrimidinen,
Dicarboximiden,
Zimtsäureamiden und Analoga, ausgewählt aus Dimethomorph, Flumetover und Flumorph;
Antibiotika,
Dithiocarbamaten,
heterozyklischen Verbindungen,
Nitrophenylderivaten, ausgewählt aus Binapacryl, Dinocap, Dinobuton, Nitrophthal-Isopropyl;
Sulfonsäurederivaten, ausgewählt aus Captafol, Captan, Dichlofluanid, Folpet und Tolylfluanid;
weitere Fungizide ausgewählt werden aus Acibenzolar-S-Methyl, Benthiavalicarb, Carpropamid, Chlorthalonil, Cyflufenamid, Cymoxanil, Dazomet, Diclomezin, Diclocymet, Diclofluanid, Diethofencarb, Edifenphos, Ethaboxam, Fenhexamid, Fentin-Acetat, Fenoxanil, Ferimzon, Fluazinam, Fosetyl, Fosetyl-Aluminium, Phosphorsäure, Iprovalicarb, Hexachlorbenzol, Metrafenon, Pencycuron, Propamocarb, Phthalid, Toloclofos-Methyl, Quintozen und Zoxamid.

5. Insektizid- oder Abwehr- oder Rodentizid-, Fungizid-, Molluskizid-, Larvizid- oder Ovizidzusammensetzung nach Anspruch 4, wobei das Insektizid ausgewählt ist aus:
Pyrethroid-Verbindungen, die aus der Gruppe ausgewählt werden, bestehend aus
Etofenprox: 2-(4-Ethoxyphenyl)-2-methylpropyl-3-phenoxy-benzylether,
Chlorfenapyr: 4-Brom-2-(4-chlorphenyl)-1-ethoxymethyl-5-(trifluormethyl)pyrrol-3-carbonitril,
Fenvalerat: (RS)-alpha-Cyano-3-phenoxybenzyl-(RS)-2-(4-chlorphenyl)-3-methylbutyrat,
Esfenvalerat: (S)-alpha-Cyano-3-phenoxybenzyl-(S)-2-(4-chlorphenyl)-3-methylbutyrat,
Fenpropathrin: (RS)-alpha-Cyano-3-phenoxybenzyl-2,2,3,3-tetramethylcyclopropancarboxylat,
Cypermethrin: (RS)-alpha-Cyano-3-phenoxybenzyl-(1RS)-cis, trans-3-(2,2-dichlorvinyl)-2,2-dimethylcyclopropancarboxylat,
Alpha-Cypermethrin: Racemat, das die (S)-α-(1R)- und
(R)-α-(1S)-Diastereomere umfasst,
Permethrin: 3-Phenoxybenzyl-(1RS)-cis, trans-3-(2,2-dichlorvinyl)-2,2-dimethylcyclopropancarboxylat, Cyhalothrin: (RS)-alpha-Cyano-3-phenoxybenzyl-(Z)-(1RS)-cis-3-(2-chlor-3,3,3-trifluorprop-1-enyl)-2,2-dimethylcyclopropancarboxylat, Lambda-Cyhalothrin,
Deltamethrin: (S)-alpha-Cyano-3-phenoxybenzyl(1R)-cis-3-(2,2-dibromvinyl)-2,2-dimethylcyclopropancarboxylat,
Cycloprothrin: (RS)-alpha-Cyano-3-phenoxybenzyl-(RS)-2,2-dichlor-1-(4-ethoxyphenyl)-cyclopropancarboxylat,
Fluvalinat: alpha-Cyano-3-phenoxybenzyl-N-(2-chlor-alpha, alpha, alpha, alpha-trifluor-p-tolyl)-D-valinat,
Bifenthrin : (2-Methylbiphenyl-3-ylmethyl)O(Z)-(1RS)-cis-3-(2-chlor-3,3,3-trifluor-1-propenyl)-2,2-dimethylcyclopropancarboxylat,
2-Methyl-2-(4-bromdifluormethoxyphenyl)-propyl-(3-phenoxybenzyl)ether,
Tralomethrin: (S)-alpha-Cyano-3-phenoxybenzyl-(1R-cis)-3-((1'RS)(1',2',2',2'-tetrabromethyl))-2,2-dimethylcyclopropancarboxylat,
Silafluofen: 4-Ethoxyphenyl-(3-(4-fluor-3-phenoxyphenyl)-propyl-}dimethylsilan,
D-Fenothrin: 3-Phenoxybenzyl-(1R)-cis, trans)-chrysanthemat,
Cyphenothrin: (RS)-alpha-Cyano-3-phenoxybenzyl-(1R-cis, trans)-chrysanthemat, D-Resmethrin: 5-Benzyl-3-furylmethyl-(1R-cis, trans)-chrysanthemat,
Acrinathrin: (S)-alpha-Cyano-3-phenoxybenzyl-(1R-cis(Z))-(2,2-dimethyl-3-(oxo-3-(1,1,1,3,3,3-hexafluorpropyl-oxy)propenyl)cyclopropancarboxylat,
Cyfluthrin: (RS)-alpha-Cyano-4-fluor-3-phenoxybenzyl-3-(2,2-dichlorvinyl)-2,2-dimethylcyclopropancarboxylat,
Tefluthrin: 2,3,5,6-Tetrafluor-4-methylbenzyl-(1RS-cis(Z)) - 3-(2-chlor-3,3,3-trifluorprop-1-enyl)-2,2-dimethyl-cycclopropancarboxylat,
Transfluthrin: 2,3,5,6-Tetrafluorbenzyl-(1R-trans)-3-(2,2-dichlorvinyl)-2,2-dimethyl-cyclopropancarboxylat,
Tetramethrin: 3,4,5,6-Tetrahydrophthalimidomethyl-(1RS)-cis, trans-chrysanthemat,
Allethrin: (RS)-3-Allyl-2-methyl-4-oxocyclopent-2-enyl-(1RS)-cis, trans-chrysanthemat,
Prallethrin: (S)-2-Methyl-4-oxo-3-(2-propinyl)cyclopent-2-enyl-(1R)-cis, trans-chrysanthemat,
Empenthrin: (RS)-1-Ethinyl-2-methyl-2-pentenyl-(1R)-cis, trans-chrysanthemat,
Imiprothrin: 2,5-Dioxo-3-(prop-2-inyl)-imidazolidin-1-ylmethyl(1R)-cis, trans-2,2-dimethyl-3-(2-methyl-1-propenyl)-cyclopropancarboxylat,
D-Flamethrin: 5-(2-Propinyl)-furfuryl-(1R)-cis, trans-chrysanthemat und 5-(2-Propinyl)-furfuryl-2,2,3,3-tetramethylcyclopropancarboxylat;
Pyriproxyfen: 4-Phenoxyphenyl-(RS)-2-(2-pyridyloxy)-propylether;
Pyrethrum;
d-d, trans-Cyphenothrin: (RS)-α-Cyano-3-phenoxybenzyl-(1RS, 3RS; 1RS, 3SR)-2,2-dimethyl-3-(2-methylprop-1-enyl)-cyclopropancarboxylat;
DDT ;
Carbamat-Verbindungen, aus der Gruppe ausgewählt, bestehend aus
Alanycarb: S-Methyl-N-[[N-methyl-N-[N-benzyl-N-(2-ethoxycarbonylethyl)aminothio]carbamoyl]thioacetimidat,
Bendiocarb: 2,2-Dimethyl-1,3-benzodioxol-4-yl-methylcarbamat), Carbaryl-(1-naphthyl-N-methylcarbamat,
Isoprocarb: 2-(1-Methylethyl)-phenylmethylcarbamat,
Carbosulfan: 2,3-Dihydro-2,2-dimethyl-7-benzofuranyl-[(dibutylamino)thio]-methylcarbamat,
Fenoxycarb: Ethyl-[2-(4-phenoxyphenoxy)ethyl]carbamat,
Indoxacarb: Methyl-7-chlor-2,3,4,5-tetrahydro-2-[methoxycarbonyl(-4-trifluormethoxyphenyl)] Propoxur: 2-Isopropyloxyphenolmethylcarbamat,
Pirimicarb: 2-Dimethylamino-5,6-dimethyl-4-pyrimidinyl-dimethylcarbamat,
Thiodiocarb: Dimethyl-N,N'-(thiobis((methylimino)-carbo-noyloxy)bisethanimidiothioat),
Methomyl: S-Methyl-N-((methylcarbamoyl)-oxy)-thioacetamidat,
Ethiofencarb: 2-((Ethylthio)methyl)phenylmethylcarbamat,
Fenothiocarb: S-(4-Phenoxybutyl)-N,N-dimethylthiocarbamat,
Cartap: S,S'-(2-5-Dimethylamino)-trimethylen)-bis-(thio-carbamat)hydrochlorid,
Fenobucarb: 2-sek.-Butylphenylmethylcarbamat,
XMC: 3,5-Dimethylphenylmethylcarbamat,
Xylylcarb: 3,4-Dimethylphenylmethylcarbamat;
Organophosphor-Verbindungen, aus der Gruppe ausgewählt, bestehend aus
Trichlorfon: Phosphorsäure, (2,2,2-Trichlor-1-hydroxyethyl)-dimethylester
Fenitrothion: O,ODimethyl-O(4-nitro-m-tolyl)-phosphor-thioat,
Diazinon: O,O-Diethyl-O-(2-isopropyl-6-methyl-4-pyrimidinyl)-phosphorthioat,
Pyridaphenthion: O(1,6-Dihydro-6-oxo-1-phenylpyrazidin-3-yl)-0,0-diethylphosphorthioat,
Pirimiphos-Etyl: O,O-Diethyl-O-(2(diethylamino)-6-methyl-pyrimidinyl)phosphorthioat, Pirimiphos-Methyl: O-[2-(Diethylamino)-6-methyl-4-pyrimi-dinyl]-O,O-dimethylphosphorthioat,
Etrimphos: O-6-Ethoxy-2-ethylpyrimidin-4-yl-O,O-dimethylphosphorthioat,
Fenthion: O,O-Dimethyl-O-[-3-methyl-4-(methylthio)-phenyl-phosphorthioat,
Phoxim: 2-(Diethoxyphosphinothoyloxyimino)-2-phenylacetonitril,
Chlorpyrifos: O,O-Diethyl-O- (3,5,6-trichlor-2-pyrinyl)-phosphorthioat,
Chlorpyriphosmethyl: O,O-Dimethyl-O-(3,5,6-trichlor-2-pyridinyl)phosphorthioat,
Cyanophos: O,O-Dimethyl-O-(4-cyanophenyl)-phosphorthioat,
Pyraclofos: (R,S)-[4-Chlorphenyl)-pyrazol-4-yl]-O-ethyl-S-n-propylphosphorthioat,
Acephat: O,S-Dimethylacetylphosphoramidothioat,
Azamethiphos: S-(6-Chlor-2,3-dihydro-oxo-1,3-oxazolo-[4,5-b]-pyridin-3-ylmethylphosphorthioat,
Malathion: O,O-Dimethylphosphordithioatester von Diethylmercaptosuccinat,
Temephos: (O,O'-(Thiodi-4-1-phenylen)-O,O,O,O-tetramethyl-phosphordithioat,
Dimethoat: ((O,O-Dimethyl-S-(n-methylcarbamoylethyl)-phosphordithioat,
Formothion: S-[2-Formylmethylamino]-2-oxoethyl]-O,O-dimethylphosphordithioat,
Phenthoat: O,O-Dimethyl-S-(alpha-ethoxycarbonylbenzal)-phosphordithioat;
Iodofenphos: O-(2,5-Dichlor-4-iodphenyl)-O,O-dimethylphosphorthioat;
Insektiziden mit sterilisierender Wirkung auf adulte Mücken, aus der Gruppe ausgewählt, bestehend aus 1-(alfa-(Chlor-alpha-cyclopropylbenzylidenaminooxy)-p-tolyl)-3-(2,6-difluorbenzoyl)-harnstoff,
Diflubenzuron: N-(((3,5-Dichlor-4-(1,1,2,2-tetrafluor-ethoxy)-phenylamino)carbonyl)-2,6-difluorbenzamid,
Triflumuron: 2-Chlor-N-(((4-(trifluormethoxy)-phenyl)-amino)-carbonyl)-benzamid oder ein Triazin, das N-Cyclopropyl-1,3,5-triazin-2,4,6-triamin und
Lambda-Cyhalothrin:
α-Cyano-3-phenoxybenzyl-3-(2-chlor-3,3,3-trifluorprop-1-enyl)-2,2-dimethylcyclopropancarboxylat, als 1:1-Gemisch von (Z)-(1R,3R), R-Ester und (Z)-(1S,3S), S-Ester;
das Abwehrmittel aus der Gruppe ausgewählt wird, bestehend aus
N,N-Diethyl-meta-toluamid (DEET), N,N-Diethylphenylacetamid (DEPA), 1-(3-Cyclohexan-1-yl-carbonyl)-2-methylpiperin, (2-Hydroxymethylcyclohexyl)essigsäurelacton, 2-Ethyl-1,3-hexandiol, Indalon, Methylneodecanamid (MNDA),
{(+/-)-3-Allyl-2-methyl-4-oxocyclopent-2-(+)-enyl-(+)-trans-chrysantemat (Esbiothrin), Limonen, Eugenol, (+)-Eucamalol-(1), (-)-1-Epieucamalol, rohen Pflanzenextrakten aus *Eucalyptus maculata, Vitex rotondifolia,*
*Cymbopogan martinii, Cymbopogan citratus* (Zitronengras), *Cymbopogan nardus* (Zitronella), IR3535 (Ethylbutylacetylaminopropionat) und Icaridin (1-Piperidincarbonsäure-2-(2-hydroxyethyl)-1-methylpropylester);
die weiteren Fungizide ausgewählt sind aus
Azolen, ausgewählt aus Bitertanol, Bromconazol, Cyproconazol, Difenoconazol, Dinitroconazol, Epoxiconazol, Fenbuconazol, Fluquiconazol, Flusilazol, Flutriafol, Hexaconazol, Imazalil, Ipconazol, Metconazol, Myclobutanil, Penconazol, Propiconazol, Prochloraz, Prothioconazol, Simeconazol, Tebuconazol, Tetraconazol, Triadimefon, Triadimenol, Triflumizol und Triticonazol;
Strobilurinen, ausgewählt aus Azoxystrobin, Dimoxystrobin, Fluoxastrobin, Kresoxim-Methyl, Metominostrobin, Orysastrobin, Picoxystrobin, Pyraclostrobin und Trifloxystrobin;
Acylalaninen, ausgewählt aus Benalaxyl, Metalaxyl, Mefenoxam, Ofurace und Oxadixyl;
Aminderivaten, ausgewählt aus Aldimorph, Dodin, Dodemorph, Fenpropimorph, Fenpropidin, Guazatin, Iminoctadin, Spiroxamin und Tridemorph;
Anilinopyrimidinen, ausgewählt aus Pyrimethanil, Mepanipyrim und Cyprodinil;
Dicarboximiden, ausgewählt aus Iprodion, Myclozolin, Procymidon und Vinclozolin;
Zimtsäureamiden und Analoga, ausgewählt aus Dimethomorph, Flumetover und Flumorph;
Antibiotika, ausgewählt aus Cycloheximid, Griseofulvin, Kasugamycin, Natamycin, Polyoxin und Streptomycin;
Dithiocarbamaten, ausgewählt aus Ferbam, Nabam, Maneb, Mancozeb, Metam, Metiram, Propineb, Polycarbamat, Thiram, Ziram und Zineb;
heterozyklischen Verbindungen, ausgewählt aus Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Picobenzamid, Probenazol, Proquinazid, Pyrifenox, Pyroquilon, Quinoxyfen, Silthiofam, Thiabendazol, Thifluzamid, Thiophanat-Methyl, Tiadinil, Tricyclazol und Triforin M Anorganika;
Nitrophenylderivaten, ausgewählt aus Binapacryl, Dinocap, Dinobuton, Nitrophthal-Isopropyl;
Phenylpyrrol, Fenpiclonil und Fludioxonil und
Sulfonsäurederivaten, ausgewählt aus Captafol, Captan, Di-chlorfluanid, Folpet und Tolylfluanid.

6. Insektizid- oder Rodentizid-, Fungizid-, Molluskizid-, Larvizid- oder Ovizidzusammensetzung nach einem der Ansprüche 1 bis 5, wobei die Partikelgröße des Insektizids und/oder Abwehrmittels und/oder des Rodentizids, Fungizids, Molluskizids, Larvizids und/oder Ovizids von 50 nm bis 20 µm beträgt.

7. Insektizid- oder Abwehrmittel- oder Rodentizid-, Fungizid-, Molluskizid-, Larvizid- oder Ovizidzusammensetzung nach einem der Ansprüche 1 bis 6, die außerdem eine oder mehrere Komponenten umfasst, ausgewählt aus Wasser, Konservierungsmitteln, Detergenzien, Stabilisatoren, Mitteln mit UV-Schutz-Eigenschaften, optischen Aufhellern, Ausbreitungsmitteln, Antiwanderungsmitteln, Schaumbildungsmitteln, Benetzungsmitteln, Antiverschmutzungsmitteln, Verdickern, weiteren Bioziden, Weichmachern, Haftmitteln, Duftstoff, Pigmenten und Farbstoffen.

8. Insektizid- oder Abwehrmittel- oder Rodentizid-, Fungizid-, Molluskizid-, Larvizid- oder Ovizidzusammensetzung nach einem der Ansprüche 1 bis 7, die von 0,001 bis 95 Gew.-% des Insektizids und/oder Abwehrmittels und/oder mindestens eines Rodentizids, Fungizids, Molluskizids, Larvizids und/oder Ovizids umfasst.

9. Insektizid- oder Abwehrmittel- oder Rodentizid-, Fungizid-, Molluskizid-, Larvizid- oder Ovizidzusammensetzung nach einem der Ansprüche 1 bis 8, die als Kit zur Imprägnierung durch den Endverbraucher oder in einer örtlichen Fabrik bereitgestellt wird.

10. Insektizid- oder Abwehrmittel- oder Rodentizid-, Fungizid-, Molluskizid-, Larvizid- oder Ovizidzusammensetzung nach Anspruch 9, wobei die Zusammensetzung in dem Kit für die Herstellung einer Lösung oder Emulsion durch Zugabe von Wasser ausgelegt ist.

11. Insektizid- oder Abwehrmittel- oder Rodentizid-, Fungizid-, Molluskizid-, Larvizid- oder Ovizidzusammensetzung nach einem der Ansprüche 1 bis 10, die zusätzlich ein Verfestigungsmittel umfasst.

12. Insektizid- oder Abwehrmittel- oder Rodentizid-, Fungizid-, Molluskizid-, Larvizid- oder Ovizidzusammensetzung nach Anspruch 11, wobei das Verfestigungsmittel ein Isocyanurat ist, das freie Isocyanatgruppen umfasst.

13. Insektizid- oder Abwehrmittel- oder Rodentizid-, Fungizid-, Molluskizid-, Larvizid- oder Ovizidzusammensetzung nach Anspruch 12, wobei das Verfestigungsmittel ein Isocyanurat auf Basis von HMDI ist, das mit einem Polyethylenoxid hydrophilisiert worden ist und in Propylencarbonat (70 Gew.-% HMDI in 30 Gew.-% Propylencarbonat) gelöst wird, wobei die Menge an freien Isocyanatgruppen 11 bis 12 New.-%, bezogen auf die Menge des als Ausgangsmaterial für die Herstellung des Isocyanurats verwendeten Isocyanats, beträgt.

14. Insektizid- oder Abwehrmittel- oder Rodentizid-, Fungizid-, Molluskizid-, Larvizid- oder Ovizidzusammensetzung nach einem der Ansprüche 11 bis 13, das die folgenden Komponenten, bezogen auf den Feststoffgehalt der Zusammensetzung, umfasst:
a) 20 bis 70 Gew.-% von mindestens einem Insektizid und/oder mindestens einem Abwehrmittel und/oder mindestens einem Rodentizid, Fungizid, Molluskizid, Larvizid und/oder Ovizid (Komponente A) und
b1) 29 bis 72 Gew.-% von mindestens einem Acryl-Bindemittel (Komponente B1), wie vorstehend definiert, das Folgendes umfasst:
b1a) 10 bis 90 Gew.-%, bezogen auf das Gewicht des Acryl-Bindemittels, an n-Butylacrylat (Komponente B1A),
b1b) 10 bis 90 Gew.-%, bezogen auf das Gewicht des Acryl-Bindemittels, mindestens eines Monomers der Formel I (Komponente B1B),
b1c) 1 bis 5 Ges.-%, bezogen auf das Gewicht des Acryl-Bindemittels, mindestens eines Monomers der Formel II (Komponente B1C),
b1d) 0 bis 5 Gew.-%, bezogen auf das Gewicht des Acryl-Bindemittels, mindestens eines Monomers der Formel III (Komponente B1D),
b1e) weitere Monomere, die mit den vorstehend genannten Monomeren copolymerisierbar sind (Komponente B1E) und ausgewählt sind aus
b1e1) 0 bis 30 Gew.-%, bezogen auf das Gewicht des Acryl-Bindemittels, mindestens eines polaren Monomers (Komponente B1E1) und/oder
b1e2) 0 bis 40 Ges.-%, bezogen auf das Gewicht des Acryl-Bindemittels, mindestens eines unpolaren Monomers (Komponente B1E2) ;
c) 1 bis 8 Ges.-% mindestens eines Verfestigungsmittels (Komponente C),
wobei die Summe der Komponenten 100 Gew.-%, bezogen auf den Feststoffgehalt der Insektizid- oder Abwehrmittel- oder Rodentizid-, Fungizid-, Molluskizid-, Larvizid- oder Ovizidzusammensetzung beträgt.

15. Imprägniertes Textilmaterial oder Kunststoffmaterial zum Abtöten von Insekten und/oder zum Abwehren eines Insekts, umfassend:
a) mindestens ein Insektizid und/oder mindestens ein Abwehrmittel und
b) mindestens ein Acryl-Bindemittel nach einem der Ansprüche 1 bis 3.

16. Imprägniertes Textilmaterial oder Kunststoffmaterial nach Anspruch 15, das ein Insektizid und/oder Abwehrmittel nach Anspruch 4 umfasst.

17. Imprägniertes Textilmaterial oder Kunststoffmaterial nach Anspruch 15 oder 16, das eine oder mehrere Komponenten umfasst, die ausgewählt werden aus Konservierungsmitteln, Detergenzien, Stabilisatoren, Mitteln mit UV-Schutz-Eigenschaften, optischen Aufhellern, Ausbreitungsmitteln, Antiwanderungsmitteln, Schaumbildungsmitteln, Benetzungsmitteln, Antiverschmutzungsmitteln, Verdickern, weiteren Bioziden, Weichmachern, Haftmitteln, Duftstoff, Pigmenten und Farbstoffen.

18. Imprägniertes Textilmaterial oder Kunststoffmaterial nach einem der Ansprüche 15 bis 17, das von 0,001 bis 10 Gew.-%, bezogen auf das Gewicht des Textilmaterials oder Kunststoffmaterials, von mindestens einem Insektizid und/oder mindestens einem Abwehrmittel umfasst.

19. Imprägniertes Textilmaterial oder Kunststoffmaterial nach Anspruch 18, umfassend:
a) 0,1 bis 10 Gew.-%, bezogen auf das Gewicht des Textilmaterials oder Kunststoffmaterials, von mindestens einem Insektizid und/oder mindestens einem Abwehrmittel und
b) 0,001 bis 10 Gew.-%, bezogen auf das Gewicht des Textilmaterials oder Kunststoffmaterials, von mindestens einem Acryl-Bindemittel nach einem der Ansprüche 1 bis 3.

20. Imprägniertes Textilmaterial oder Kunststoffmaterial nach einem der Ansprüche 15 bis 19, wobei das Textilmaterial oder Kunststoffmaterial ein aus Polyester hergestelltes Gewebematerial ist.

21. Verfahren zum Imprägnieren eines Textilmaterials oder eines Kunststoffmaterials, das folgende Schritte umfasst:
i) das Herstellen einer wässrigen Formulierung oder einer Schmelze, die mindestens ein Insektizid und/oder mindestens ein Abwehrmittel und/oder mindestens ein Rodentizid, Fungizid, Molluskizid, Larvizid und/oder Ovizid nach Anspruch 4 und mindestens ein Acryl-Bindemittel nach einem der Ansprüche 1 bis 3 und gegebenenfalls weitere Komponenten umfasst;
ii) Aufbringen der wässrigen Formulierung auf das Textilmaterial oder Kunststoffmaterial mittels
iia) Durchleiten des Textilmaterials oder Kunststoffmaterials durch die wässrige Formulierung; oder
iib) In-Kontakt-Bringen des Textilmaterials oder Kunststoffmaterials mit einer Walze, die teilweise oder vollständig in die wässrige Formulierung eingetaucht worden ist und Aufziehen der wässrigen Formulierung auf die Seite des Textilmaterials oder Kunststoffmaterials, die mit der Walze in Kontakt ist,
oder
iic) doppelseitiges Beschichten des Textilmaterials oder Kunststoffmaterials
oder
iid) Sprühen der wässrigen Formulierung auf das Textilmaterial oder Kunststoffmaterial, wobei das Sprühen mit jeder beliebigen geeigneten Vorrichtung zum manuellen oder automatischen Sprühen durchgeführt wird, zum Beispiel mit einer Aerosoldose oder mit Vorrichtungen, die üblicherweise in einer Fabrik verwendet werden;
oder
iie) Aufbringen der wässrigen Formulierung in Form eines Schaums;
oder
iif) Untertauchen des Textilmaterials oder Kunststoffmaterials in die wässrige Formulierung;
oder
iig) Bürsten der wässrigen Formulierung auf oder in das Textilmaterial oder Kunststoffmaterial; order
iih) Gießen der wässrigen Formulierung auf das Textilmaterial oder Kunststoffmaterial; oder
Aufbringen der Schmelze durch Kalandern oder mit einem Rakel;
iii) gegebenenfalls Entfernen von überschüssiger wässriger Formulierung oder überschüssiger Schmelze und
iv) Trocknen und/oder Härten des Textilmaterials oder Kunststoffmaterials.

22. Verfahren nach Anspruch 21, wobei Schritt iia) durch vollständiges Untertauchen des Textilmaterials oder Kunststoffmaterials in der wässrigen Formulierung entweder in einer Wanne, die die wässrige Formulierung enthält, oder mittels Durchleiten des Textilmaterials oder Kunststoffmaterials durch die wässrige Formulierung, die zwischen zwei horizontal ausgerichteten Walzen gehalten wird, durchgeführt wird.

23. Verfahren nach Anspruch 21 oder 22, wobei das Insektizid und/oder Abwehrmittel und/oder Rodentizid, Fungizid, Molluskizid, Larvizid und/oder Ovizid ein Insektizid und/oder ein Abwehrmittel und/oder Rodentizid, Fungizid, Molluskizid, Larvizid und/oder Ovizid nach Anspruch 4 ist.

24. Verfahren nach einem der Ansprüche 21 bis 23, wobei die wässrige Formulierung außerdem einen oder mehrere Inhaltstoffe umfasst, ausgewählt aus der Gruppe, bestehend aus Detergenzien, Stabilisatoren, Mitteln mit UV-Schutz-Eigenschaften, optischen Aufhellern, Ausbreitungsmitteln, Antiwanderungsmitteln, Konservierungsmitteln, Schaumbildungsmitteln, Benetzungsmitteln, Verdickern, weiteren Bioziden, Weichmachern, Haftmitteln, Antiverschmutzungsmitteln, Duftstoff, Pigmenten und Farbstoffen.

25. Verfahren nach einem der Ansprüche 21 bis 24, wobei das Färben des Textilmaterials oder Kunststoffmaterials gleichzeitig mit der Imprägnierung des Textilmaterials oder Kunststoffmaterials erfolgt, wobei eine wässrige Formulierung hergestellt wird, die weiterhin mindestens einen Farbstoff und/oder mindestens ein Pigment umfasst.

26. Verfahren nach einem der Ansprüche 21 bis 25, wobei das Härten im Schritt iv) bei 60 bis 170°C durchgeführt wird.

27. Verfahren zum Beschichten eines Textilmaterials oder Kunststoffmaterials durch Aufbringen einer Zusammensetzung, die mindestens ein Insektizid und/oder mindestens ein Abwehrmittel und/oder mindestens ein Rodentizid, Fungizid, Molluskizid, Larvizid und/oder Ovizid und mindestens ein Acryl-Bindemittel nach einem der Ansprüche 1 bis 3 umfasst, auf das Textilmaterial oder Kunststoffmaterial.

28. Verfahren nach Anspruch 27, wobei die Zusammensetzung außerdem einen oder mehrere Inhaltstoffe umfasst, ausgewählt aus der Gruppe, bestehend aus Detergenzien, Stabilisatoren, Mitteln mit UV-Schutz-Eigenschaften, optischen Aufhellern, Ausbreitungsmitteln, Antiwanderungsmitteln, Konservierungsmitteln, Schaumbildungsmitteln, Antiverschmutzungsmitteln, Benetzungsmitteln, Verdickern, weiteren Bioziden, Weichmachern, Haftmitteln, Duftstoff, Pigmenten und Farbstoffen.

29. Verwendung einer Insektizid- oder Abwehrmittel- oder Rodentizid-, Fungizid-, Molluskizid-, Larvizid- oder Ovizidzusammensetzung nach einem der Ansprüche 1 bis 14 zum Imprägnieren von Textilmaterial oder Kunststoffmaterial.

## Revendications

1. Composition insecticide ou de répulsif ou rodenticide, fongicide, molluscicide, larvicide ou ovicide destinée à une application à un matériau textile ou un matériau plastique, laquelle composition comprend un mélange comportant
a) au moins un insecticide et/ou au moins un répulsif et/ou au moins un rodenticide, fongicide, molluscicide, larvicide et/ou ovicide comme composant A, et
b1) au moins un liant acrylique comme composant B1 pouvant être obtenu par polymérisation en émulsion des composants suivants :
b1a) de l'acrylate de n-butyle comme composant B1A,
b1b) au moins un monomère de formule I comme composant B1B 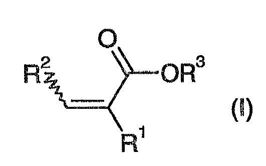 dans laquelle
R¹, R² et R³ sont choisis indépendamment parmi C₁-C₁₀-alkyle qui peut être linéaire ou ramifié ; aryle substitué ou non substitué ;
R¹ et R² peuvent en outre être H ;
sauf si R³= n--butyle, alors R¹ et R² sont H ;
b1c) au moins un monomère de formule II comme composant B1C 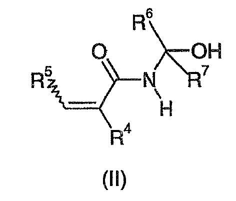 dans laquelle
R⁴, R⁵, R⁶ et R⁷ sont choisis indépendamment dans le groupe constitué par H, C₁-C₁₀-alkyle qui peut être linéaire ou ramifié ; aryle substitué ou non substitué ;
b1d) éventuellement un monomère de formule II comme composant B1D 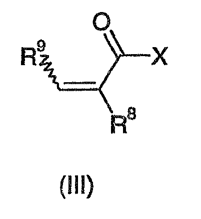 dans laquelle
R⁸ et R⁹ sont choisis indépendamment dans le groupe constitué par H, C₁-C₁₀-alkyle qui peut être linéaire ou ramifié ; aryle substitué ou non substitué ;
X est choisi dans le groupe constitué par H, OH, NH₂, OR¹¹OH, glycidyle, hydroxypropyle, 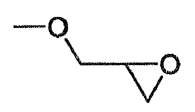 des groupements de formule 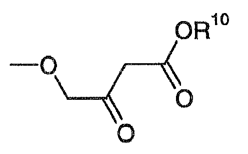 dans laquelle
R¹⁰ est choisi dans le groupe constitué par C₁-C₁₀-alkyle qui peut être linéaire ou ramifié ; aryle substitué ou non substitué ;
R¹¹ est choisi dans le groupe constitué par C₁-C₁₀-alkylène ; arylène substitué ou non substitué ;
b1e) éventuellement d'autres monomères qui sont copolymérisables avec les monomères mentionnés ci-dessus, choisis parmi :
b1e1) des monomères polaires comme composant B1E1 ;
et/ou
b1e2) des monomères non polaires comme composant B1E2.

2. Composition insecticide ou de répulsif ou rodenticide, fongicide, molluscicide, larvicide ou ovicide selon la revendication 1, dans laquelle le liant acrylique peut être obtenu par polymérisation en émulsion des composants suivants :
b1a) de 10 à 90% en poids du composant B1A ;
b1b) de 10 à 90% en poids du composant B1B ;
b1c) de 1 à 5% en poids du composant B1C ;
b1d) de 0 à 5% en poids du composant B1D ;
b1e) d'autres monomères qui sont copolymérisables avec les monomères susmentionnés, choisis parmi
b1e1) de 0 à 30% en poids du composant B1E1 ; et/ou
b1e2) de 0 à 40% en poids du composant B1E2 ; où la somme des composants B1A, B1B, B1C et éventuellement B1D et B1E est de 100% en poids.

3. Composition insecticide ou de répulsif ou rodenticide, fongicide, molluscicide, larvicide ou ovicide selon la revendication 1, dans laquelle le liant acrylique peut être obtenu par polymérisation en émulsion des composants suivants :
b1a) de 30 à 85% en poids du composant B1A ;
b1b) de 10 à 90% en poids du composant B1B ;
b1c) de 1 à 5% en poids du composant B1C ;
b1d) de 0 à 5% en poids du composant B1D ;
b1e) d'autres monomères qui sont copolymérisables avec les monomères susmentionnés, choisis parmi
b1e1) de 0 à 30% en poids du composant B1E1 ; et/ou
b1e2) de 0 à 40% en poids du composant B1E2 ; où la somme des composants B1A, B1B, B1C et éventuellement B1D et B1E est de 100% en poids.

4. Composition insecticide ou de répulsif ou rodenticide, fongicide, molluscicide, larvicide ou ovicide selon l'une quelconque des revendications 1 à 3, dans laquelle l'insecticide est choisi parmi :
les composés à base de pyréthrinoïdes,
les composés à base de carbamate,
les composés organophosphorés,
les insecticides ayant un effet stérilisant sur les moustiques adultes,
le répulsif est choisi parmi le N,N-diéthyl-métatoluamide (DEET), le N,N-diéthylphénylacétamide (DEPA), la 1-(3-cyclohexan-1-ylcarbonyl)-2-méthylpipérine, l'acide (2-hydroxyméthylcyclohexyl)acétique-lactone, le 2-éthyl-1,3-hexanediol, l'indalone, le méthylnéodécanamide (MNDA), un pyréthrinoïde non utilisé pour la lutte contre les insectes, un répulsif dérivé de, ou identique à des extraits végétaux ou des extraits végétaux bruts, IR3535 (butylacétylaminopropionate d'éthyle) et l'icaridine (2-(2-hydroxyéthyl)-1-méthyl-propylester de l'acide 1-pipéridinecarboxylique) ;
le niclosamide est choisi comme molluscicide ;
les rodenticides convenables parmi les rodenticides anticoagulants de première génération et les rodenticides anticoagulants de deuxième génération sont choisis dans le groupe constitué par la warfarine, la chlorphacinone, le coumatétralyle comme rodenticides anticoagulants de première génération, et le flocoumafène, le brodifacoum, le difénacoum, la bromadialone, la diféthialone, et la brométhaline comme rodenticides anticoagulants de deuxième génération ;
les agents antifongiques comme fongicides utilisés dans le cas du pied d'athlète sont choisis dans le groupe constitué par le clotrimazole : 1-(2-chlorotrityl)imidazole, le miconazole : 1-[2-(2,4-dichlorophényl)-2-[(2,4-dichlorophényl)méthoxy]éthyl]-1H-imidazole, l'éconazole : 4-[2-[(4-chlorophényl)méthoxy]-2-(2,4-dichlorophényl)-éthyl]-4H-imidazole, le tioconazole : 1-[2-[(2-chloro-3-thiényl)méthoxy]-2-(2,4-dichlorophényl)éthyl]-1H-imidazole, l'acide undécylénique, le chlorhydrate de terbinafine : chlorhydrate de N,6,6-triméthyl-N-(naphtalén-4-ylméthyl)hept-2-én-4-yn-1-amine (lamisil topique), et le tolnaftate : N-méthyl-N-(m-tolyl)-1-naphtalén-3-yloxythioformamide ;
d'autres fongicides sont choisis parmi
les azoles,
les strobilurines,
les acylalanines,
les dérivés d'amine, choisis parmi l'Aldimorph, la Dodine, le Dodémorph, le Fenpropimorph, la Fenpropidine, la Guazatine, l'Iminoctadine, la Spiroxamine, et le Tridémorph ;
les anilinopyrimidines,
les dicarboximides,
l'acide cinnamique amide et ses analogues, choisis parmi le Diméthomorph, le Flumétover, et le Flumorph ;
les antibiotiques,
les dithiocarbamates,
les composés hétérocycliques,
les dérivés de nitrophényle, choisis parmi le Binapacryle, le Dinocap, le Dinobuton, le Nitrophtalisopropyle ;
les dérivés de l'acide sulfonique, choisis parmi le Captafol, le Captan, le Dichlofluanid, le Folpet, et le Tolylfluanide ;
d'autres fongicides sont choisis parmi l'Acibenzolar-S-méthyle, le Benthiavalicarb, le Carpropamide, le Chlorothalonil, le Cyflufénamide, le Cymoxanil, le Dazomet, la Diclomézine, le Diclocymet, le Dichlofluanid, le Diéthofencarb, l'Edifenphos, l'Éthaboxam, le Fenhexamid, le Fentine-Acétate, le Fénoxanil, la Férimzone, le Fluazinam, le Fosétyl, le Fosétyl-Aluminium, l'Acide Phosphoreux, l'Iprovalicarb, l'Hexachlorobenzène, la Métrafénone, le Pencycuron, le Propamocarb, le Phtalide, le Toloclofos-méthyle, le Quintozène, et le Zoxamide.

5. Composition insecticide ou de répulsif ou rodenticide, fongicide, molluscicide, larvicide ou ovicide selon la revendication 4, dans laquelle l'insecticide est choisi parmi :
les composés à base de pyréthrinoïdes, choisis dans le groupe constitué par
Etofenprox : 2-(4-éthoxyphényl)-2-méthylpropyl-3-phénoxybenzyléther,
Chlorfénapyr : 4-bromo-2-(4-chlorophényl)-1-éthoxyméthyl-5-(trifluorométhyl)pyrrole-3-carbonitrile,
Fenvalérate : (RS)-2-(4-chlorophényl)-3-méthylbutyrate de (RS)-alpha-cyano-3-phénoxybenzyle,
Esfenvalérate : (S)-2-(4-chlorophényl)-3-méthylbutyrate de (S)-alpha-cyano-3-phénoxybenzyle,
Fenpropathrine : 2,2,3,3-tétraméthylcyclopropane-carboxylate de (RS)-alpha-cyano-3-phénoxybenzyle,
Cyperméthrine : (1RS)-cis,trans-3-(2,2-dichlorovinyl)-2,2-diméthylcyclopropanecarboxylate de (RS)-alpha-cyano-3-phénoxybenzyle,
alpha-Cyperméthrine : racémate comprenant les diastéréoisomères (S)-α-(1R) et (R)-α-(1S),
Perméthrine : (1RS)-cis,trans-3-(2,2-dichlorovinyl)-2,2-diméthylcyclopropanecarboxylate de 3-phénoxybenzyle,
Cyhalothrine : (Z)-(1RS)-cis-3-(2-chloro-3,3,3-tri-fluoroprop-1-ényl)-2,2-diméthylcyclopropanecarboxylate de (RS)-alpha-cyano-3-phénoxybenzyle, lambda-cyhalothrine,
Deltaméthrine : (1R)-cis-3-(2,2-dibromovinyl)-2,2-diméthylcyclopropanecarboxylate de (S)-alpha-cyano-3-phénoxybenzyle,
Cycloprothrine : (RS)-2,2-dichloro-1-(4-éthoxyphényl)-cyclopropanecarboxylate de (RS)-alpha-cyano-3-phénoxybenzyle,
Fluvalinate : N-(2-chloro-alpha,alpha,alpha,alpha-trifluoro-p-tolyl)-D-valinate d'alpha-cyano-3-phénoxybenzyle,
Bifenthrine : O(Z)-(1RS)-cis-3-(2-chloro-3,3,3-tri-fluoro-1-propényl)-2,2-diméthylcyclopropanecarboxylate de (2-méthylbiphényl-3-ylméthyl),
(3-phénoxybenzyl)éther de 2-méthyl-2-(4-bromodifluoro-méthoxyphényl)propyle,
Tralométhrine : (1R-cis)3((1'RS)(1',2',2',2'-tétra-bromoéthyl))-2,2-diméthylcyclopropanecarboxylate de (S)-alpha-cyano-3-phénoxybenzyle,
Silafluofène : 4-éthoxyphényl(3-(4-fluoro-3-phénoxyphényl)propyl}diméthylsilane,
D-Phénothrine : (1R)-cis,trans)-chrysanthémate de 3-phénoxybenzyle,
Cyphénothrine : (1R-cis,trans)-chrysanthémate de (RS)-alpha-cyano-3-phénoxybenzyle,
D-resméthrine : (1R-cis,trans)-chrysanthémate de 5-benzyl-3-furylméthyle,
Acrinathrine : (1R-cis(Z))-(2,2-diméthyl-3-(oxo-3-(1,1,1,3,3,3-hexafluoropropyloxy)propényl(cyclopropane-carboxylate de (S)-alpha-cyano-3-phénoxybenzyle,
Cyfluthrine : 3-(2,2-dichlorovinyl)-2,2-diméthylcyclo-propanecarboxylate de (RS)-alpha-cyano-4-fluoro-3-phénoxybenzyle,
Téfluthrine : (Z)-(1RS-cis)-3-(2-chloro-3,3,3-trifluoro-prop-1-ényl)-2,2-diméthylcyclopropane-carboxylate de 2,3,5,6-tétrafluoro-4-méthylbenzyle,
Transfluthrine : (1R-trans)-3-(2,2-dichlorovinyl)-2,2-diméthylcyclopropanecarboxylate de 2,3,5,6-tétra-fluorobenzyle,
Tétraméthrine : (1RS)-cis,trans-chrysanthémate de 3,4,5,6-tétrahydrophtalimidométhyle,
Alléthrine : (1RS)-cis,trans-chrysanthémate de (RS)-3-allyl-2-méthyl-4-oxocyclopent-2-ényle,
Pralléthrine : (1R)-cis,trans-chrysanthémate de (S)-2-méthyl-4-oxo-3-(2-propynyl)cyclopent-2-ényle,
Empenthrine : (1R)-cis,trans-chrysanthémate de (RS)-1-éthynyl-2-méthyl-2-pentényle,
Imiprothrine : (1R)-cis,trans-2,2-diméthyl-3-(2-méthyl-1-propényl)cyclopropanecarboxylate de 2,5-dioxo-3-(prop-2-ynyl)imidazolidin-1-ylméthyle,
D-Flaméthrine : (1R)-cis,trans-chrysanthémate de 5-(2-propynyl)furfuryle, et 2,2,3,3-tétraméthyl-cyclopropanecarboxylate de 5-(2-propynyl)furfuryle,
Pyriproxyfène : (RS)-2-(2-pyridyloxy)propyléther de 4-phénoxyphényle ; pyrèthre,
d-d-trans-Cyphénothrine : (1RS,3RS;1RS,3SR)-2,2-diméthyl-3-(2-méthylprop-1-ényl)cyclopropanecarboxylate de (RS)-α-cyano-3-phénoxybenzyle ; DDT ;
les composés de carbamate, choisis dans le groupe constitué par
Alanycarb : S-méthyl-N-[[N-méthyl-N-[N-benzyl-N(2-éthoxycarbonyléthyl)aminothio]carbamoyl]thioacétimidate,
Bendiocarb : méthylcarbamate de 2,2-diméthyl-1,3-benzodioxol-4-yle,
Carbaryle : N-méthylcarbamate de 1-naphtyle,
Isoprocarb : méthylcarbamate de 2-(1-méthyléthyl)-phényle,
Carbosulfan : 2,3-dihydro-2,2-diméthyl-7-benzofuranyl-[(dibutylamino)thio]méthyl-carbamate,
Fénoxycarb : [2-(4-phénoxyphénoxy)éthyl]carbamate d'éthyle,
Indoxacarb : méthyl-7-chloro-2,2,3,4,5-tétrahydro-2-[méthoxycarbonyl-(4-trifluorométhoxyphényl)] Propoxur : méthylcarbamate de 2-isopropyloxyphényle,
Pirimicarb : 2-diméthylamino-5,6-diméthyl-4-pyrimidinyldiméthylcarbamate,
Thiodicarb : N,N'(thiobis((méthylimino)carbonoyloxy)-bis-éthanimidiothioate) de diméthyle,
Méthomyle : N-((méthylcarbamoyl)oxy)thioacétamidate de S-méthyle,
Ethiofencarb: méthylcarbamate de 2-((éthylthio)-méthyl)phényle,
Fénothiocarb : thiocarbamate de S-(4-phénoxybutyl)-N,N-diméthyle,
Cartap : S,S'-(2-5-diméthylamino)triméthylène)-bis(thiocarbamate), chlorhydrate,
Fénobucarb : carbamate de 2-sec-butylphénylméthyle,
XMC : carbamate de 3,5-diméthylphénylméthyle,
Xylylcarb : 3,4-diméthylphénylméthylcarbamate ;
les composés organophosphorés choisis dans le groupe constitué par
Trichlorfon : (2,2,2-trichloro-1-hydroxyéthyl)-diméthylester de l'acide phosphorique,
Fénitrothion : O-(4-nitro-m-tolyl)phosphorothioate de O,O-diméthyle,
Diazinon : O-(2-isopropyl-6-méthyl-4-pyrimidinyl)-phosphorothioate de O,O-diéthyle,
Pyridaphenthion : O,O-diéthylphosphorothioate de 0-(1,6-dihydro-6-oxo-1-phénylpyrazidin-3-yl),
Pirimiphos-Ethyle : O-(2-(diéthylamino)6-méthyl-pyrimidinyl)phosphorothioate de O,O-diéthyle,
Pirimiphos-Méthyle : O,O-diméthylphosphorothioate de 0-[2-(diéthylamino)-6-méthyl-4-pyrimidinyl],
Etrimphos : O,O-diméthylphosphorothioate de O-6-éthoxy-2-éthyl-pyrimidin-4-yle,
Fenthion : O-[-3-méthyl-4-(méthylthio)phényl-phosphorothioate de O,O-diméthyle,
Phoxime : 2-(diéthoxyphosphinothoyloxyimino)-2-phényl-acétonitrile,
Chlorpyrifos : O-(3,5,6-trichloro-2-pyrinyl)phosphorothioate de O,O-diéthyle,
Chlorpyriphosméthyle : 0-(3,5,6-trichloro-2-pyridinyl)-phosphorothioate de O,O-diméthyle,
Cyanophos : O-(4-cyanophényl)phosphorothioate de 0,0-diméthyle,
Pyraclofos : phosphorothioate de (R,S)[4-chlorophényl)-pyrazol-4-yl]-O-éthyl-S-n-propyle,
Acéphate : acétylphosphoroamidothioate de O,S-diméthyle,
Azaméthiphos : phosphorothioate de S-(6-chloro-2,3-dihydro-oxo-1,3-oxazolo[4,5-b]pyridine-3-ylméthyle,
Malathion : O,O-diméthylphosphorodithioate ester de mercaptosuccinate de diéthyle,
Téméphos : O,O,O,O-tétraméthylphosphorodithioate de (O,O-(thiodi-4-1-phénylène),
Diméthoate : S-(n-méthylcarbamoyléthyl)phosphorodithioate de O,O-diméthyle,
Formothion : phosphorodithioate de S[2-formyl-méthylamino]-2-oxoéthyl]-O,O-diméthyle,
Phenthoate : S-(alpha-éthoxycarbonylbenzal)phosphorodithioate de O,O-diméthyle,
Iodofenphos : O,O-diméthylphosphorothioate de 0-(2,5-dichloro-4-iodophényl);
les insecticides ayant un effet stérilisant sur les moustiques adultes, choisis dans le groupe constitué par
1-(alfa-(chloro-alpha-cyclopropylbenzylidénamino-oxy)-p-tolyl)-3-(2,6-difluorobenzoyl)urée,
Diflubenzuron : N-(((3,5-dichloro-4-(1,1,2,2-tétra-fluoroéthoxy)phénylamino)carbonyl)-2,6-difluoro-benzamide,
Triflumuron : 2-chloro-N-(((4-(trifluorométhoxy)-phényl)amino)carbonyl)benzamide, ou une triazine telle que la N-cyclopropyl-1,3,5-triazine-2,4,6-triamine, et
Lambda-cyhalothrine :
α-cyano-3-phénoxybenzyl-3-(2-chloro-3,3,3-trifluoro-prop-1-ényl)-2,2-diméthylcyclopropane carboxylate, sous forme de mélange 1:1 de (Z)-(1R,3R), R-ester et de (Z)-(1S,3S), S-ester.
le répulsif est choisi dans le groupe constitué par le N,N-diéthyl-méta-toluamide (DEET), le N,N-diéthylphénylacétamide (DEPA), la 1-(3-cyclohexan-1-ylcarbonyl)-2-méthylpipérine, l'acide (2-hydroxy-méthylcyclohexyl)acétique-lactone, le 2-éthyl-1,3-hexanediol, l'indalone, le méthylnéodécanamide (MNDA),
le {(+/-)-3-allyl-2-méthyl-4-oxocyclopent-2-(+)-ényl-(+)-trans-chrysanthémate (Esbiothrine), le limonène, l'eugénol, le (+)-Eucamalol (1), le (-)-1-épi-eucamalol, des extraits végétaux bruts issus *d'Eucalyptus maculata, Vitex rotundifolia, Cymbopogan martinii, Cymbopogan citratus* (verveine des Indes),
*Cymopogan nartdus* (citronnelle), IR3535 (butylacétylaminopropionate d'éthyle), et l'icaridine (acide 1-pipéridinecarboxylique 2-(2-hydroxyéthyl)-1-méthylpropylester).
les autres fongicides sont choisis parmi
les azoles choisis parmi le Bitertanol, le Bromoconazole, le Cyproconazole, le Difénoconazole, le Dinitroconazole, l'Epoxiconazole, le Fenbuconazole, le Fluquiconazole, le Flusilazole, le Flutriafol, l'Hexaconazole, l'Imazalil, l'Ipconazole, le Metconazole, le Myclobutanile, le Penconazole, le Propiconazole, le Prochloraz, le Prothioconazole, le Siméconazole, le Tébuconazole le Tétraconazole, le Triadiméfon, le Triadiménol, le Triflumizole, et le Triticonazole ;
les strobilurines choisies parmi l'Azoxystrobine, la Dimoxystrobine, la Fluoxastrobine, le Krésoxime-méthyle, la Métominostrobine, l'Orysastrobine, la Picoxystrobine, la Pyraclostrobine et la Trifloxystrobine ;
les acylalanines choisies parmi le Bénalaxyle, le Métalaxyle, le Méfénoxam, l'Ofurace, et l'Oxadixyle ;
les dérivés d'amine choisis parmi l'Aldimorph, la Dodine, le Dodémorph, le Fenpropimorph, la Fenpropidine, la Guazatine, l'Iminoctadine, la Spiroxamine, et le Tridémorph ;
les anilinopyrimidines choisies parmi le Pyriméthanil, le Mépanipyrim, et le Cyprodinile ;
les dicarboximides choisis parmi l'Iprodion, la Myclozoline, le Procymidon, et la Vinclozoline ;
les amides cinnamiques et analogues choisis parmi le Diméthomorph, le Flumétover, et le Flumorph ;
les antibiotiques choisis parmi le Cycloheximide, la Griséofulvine, la Kasugamycine, la Natamycine, la Polyoxine, et la Streptomycine ;
les dithiocarbamates choisis parmi le Ferbam, le Nabam, le Maneb, le Mancozeb, le Métam, le Métiram, le Propineb, le Polycarbamate, le Thiram, le Ziram, et le Zineb ;
les composés hétérocycliques choisis parmi l'Anilazine, le Bénomyle, le Boscalide, le Carbendazime, la Carboxine, l'Oxycarboxine, le Cyazofamide, le Dazomet, le Dithianon, le Famoxadon, le Fénamidon, le Fénarimol, le Fubéridazole, le Flutolanil, le Furametpyr, l'Isoprothiolane, le Mépronil, le Nuarimol, le Picobenzamide, le Probénazole, le Proquinazid, le Pyrifénox, le Pyroquilon, le Quinoxyfène, le Silthiofam, le Thiabendazole, le Thifluzamide, le Thiophanate-méthyle, le Tiadinil, le Tricyclazole, et la Triforine M inorganique ;
les dérivés de nitrophényle tels que le Binapacryle, le Dinocap, le Dinobuton, le Nitrophtalisopropyle ;
les Phénylpyrroles, le Fenpiclonil, et le Fludioxonil ; et
les dérivés de l'acide sulfonique choisis parmi le Captafol, le Captan, le Dichlofluanid, le Folpet, et le Tolylfluanide.

6. Composition insecticide ou rodenticide, fongicide, molluscicide, larvicide ou ovicide selon l'une quelconque des revendications 1 à 5, dans laquelle la taille de particules de l'insecticide et/ou du répulsif et/ou du rodenticide, fongicide, molluscicide, larvicide et/ou ovicide va de 50 nm à 20 µm.

7. Composition insecticide ou de répulsif ou de rodenticide, fongicide, molluscicide, larvicide ou ovicide selon l'une quelconque des revendications 1 à 6, comprenant en outre un ou plusieurs composants choisis parmi l'eau, les conservateurs, les détergents, les stabilisants, les agents de protection contre les UV, les azurants optiques, les agents d'enduction, les agents anti-migration, les agents moussants, les agents mouillants, les agents anti-salissures, les épaississants, d'autres biocides, les plastifiants, les agents adhésifs, les parfums, les pigments et les colorants.

8. Composition insecticide ou de répulsif ou de rodenticide, fongicide, molluscicide, larvicide ou ovicide selon l'une quelconque des revendications 1 à 7, comprenant de 0,001 à 95% en poids de l'insecticide et/ou du répulsif et/ou d'au moins rodenticide, fongicide, molluscicide, larvicide et/ou ovicide.

9. Composition insecticide ou de répulsif ou de rodenticide, fongicide, molluscicide, larvicide ou ovicide selon l'une quelconque des revendications 1 à 8, qui est fournie sous forme d'un kit pour imprégnation par l'utilisateur final ou dans une usine locale.

10. Composition insecticide ou de répulsif ou de rodenticide, fongicide, molluscicide, larvicide ou ovicide selon la revendication 9, où la composition dans le kit est adaptée pour la préparation d'une solution ou d'une émulsion par addition d'eau.

11. Composition insecticide ou de répulsif ou de rodenticide, fongicide, molluscicide, larvicide ou ovicide selon l'une quelconque des revendications 1 à 10, comprenant en outre un agent de fixage.

12. Composition insecticide ou de répulsif ou de rodenticide, fongicide, molluscicide, larvicide ou ovicide selon la revendication 11, où l'agent de fixage est un isocyanurate comprenant des groupements isocyanate libres.

13. Composition insecticide ou de répulsif ou de rodenticide, fongicide, molluscicide, larvicide ou ovicide selon la revendication 12, où l'agent de fixage est un isocyanurate à base de HMDI qui est hydrolysé avec un oxyde de polyéthylène et qui est solubilisé dans du carbonate de propylène (70% en poids de HMDI dans 30% en poids de carbonate de propylène), où la quantité de groupements isocyanate libres va de 11 à 12% en poids, sur la base de la quantité d'isocyanate utilisé comme produit de départ pour la préparation de l'isocyanurate.

14. Composition insecticide ou de répulsif ou de rodenticide, fongicide, molluscicide, larvicide ou ovicide selon l'une quelconque des revendications 11 à 13, comprenant les composants suivants, sur la base de la teneur en matière sèche de la composition :
a) de 20 à 70% en poids d'au moins un insecticide et/ou au moins un répulsif et/ou au moins un rodenticide, fongicide, molluscicide, larvicide et/ou ovicide (composant A), et
b1) de 29 à 72% en poids d'au moins un liant acrylique (composant B1) tel que défini ci-dessus, comprenant :
b1a) de 10 à 90% en poids, sur la base du liant acrylique, d'acrylate de n-butyle (composant B1A) ;
b1b) de 10 à 90% en poids, sur la base du liant acrylique, d'au moins un monomère de formule I (composant B1B) ;
b1c) de 1 à 5% en poids, sur la base du liant acrylique, d'au moins un monomère de formule II (composant B1C) ;
b1d) de 0 à 5% en poids, sur la base du liant acrylique, d'au moins un monomère de formule III (composant B1D) ;
b1e) d'autres monomères qui sont copolymérisables avec les monomères mentionnés (composant B1E) ci-dessus, choisis parmi
b1e1) de 0 à 30% en poids, sur la base du liant acrylique, d'au moins un monomère polaire (composant B1E1) ; et/ou
b1e2) de 0 à 40% en poids, sur la base du liant acrylique, d'au moins un monomère non polaire (composant B1E2) ;
c) de 1 à 8% en poids d'au moins un agent de fixage (composant C) ;
où la somme des composants est de 100% en poids de la teneur en matière sèche de la composition insecticide ou de répulsif ou de rodenticide, fongicide, molluscicide, larvicide ou ovicide.

15. Matériau textile ou matériau plastique imprégné destiné à tuer des insectes et/ou éloigner des insectes, comprenant
a) au moins un insecticide et/ou au moins un répulsif, et
b1) au moins un liant acrylique selon l'une quelconque des revendications 1 à 3.

16. Matériau textile ou matériau plastique imprégné selon la revendication 15, comprenant un insecticide et/ou un répulsif tel que défini selon la revendication 4.

17. Matériau textile ou matériau plastique imprégné selon la revendication 15 ou 16, comprenant en outre un ou plusieurs composants choisis parmi les conservateurs, les détergents, les stabilisants, les agents de protection contre les UV, les azurants optiques, les agents d'enduction, les agents anti-migration, les agents moussants, les agents mouillants, les agents anti-salissures, les épaississants, d'autres biocides, les plastifiants, les agents adhésifs, les parfums, les pigments et les colorants.

18. Matériau textile ou matériau plastique imprégné selon l'une quelconque des revendications 15 à 17, comprenant de 0,001 à 10% en poids du poids du matériau textile ou du matériau plastique d'au moins un insecticide et/ou d'au moins un répulsif.

19. Matériau textile ou matériau plastique imprégné selon la revendication 18, comprenant
a) de 0,01 à 10% en poids du poids du matériau textile ou du matériau plastique d'au moins un insecticide et/ou d'au moins un répulsif, et
b1) de 0,001 à 10% en poids du poids du matériau textile ou du matériau plastique d'au moins un liant acrylique selon l'une quelconque des revendications 1 à 3.

20. Matériau textile ou matériau plastique imprégné selon l'une quelconque des revendications 15 à 19, où le matériau textile ou le matériau plastique est un filet fait en polyester.

21. Procédé d'imprégnation d'un matériau textile ou d'un matériau plastique, comprenant
i) la formation d'une formulation aqueuse ou d'une masse fondue, comprenant au moins un insecticide et/ou au moins un répulsif et/ou au moins un rodenticide, fongicide, molluscicide, larvicide et/ou ovicide tel que défini selon la revendication 4, et au moins un liant acrylique tel que défini selon l'une quelconque des revendications 1 à 3, et éventuellement d'autres ingrédients ;
ii) l'application de la formulation aqueuse au matériau textile ou au matériau plastique
iia) par passage du matériau textile ou du matériau plastique à travers la formulation aqueuse ;
ou
iib) par mise en contact du matériau textile ou du matériau plastique avec un rouleau qui est partiellement ou totalement immergé dans la formulation aqueuse et l'entraînement de la formulation aqueuse sur le côté du matériau textile ou du matériau plastique en contact avec le rouleau,
ou
iic) le couchage double-face du matériau textile ou du matériau plastique
ou
iid) la pulvérisation de la formulation aqueuse sur le matériau textile ou le matériau plastique, où la pulvérisation est effectuée à l'aide d'un dispositif convenable quelconque pour pulvériser manuellement ou automatiquement, par exemple à l'aide d'un aérosol en bombe ou des dispositifs habituellement utilisés en usine ;
ou
iie) l'application de la formulation aqueuse sous forme d'une mousse ;
ou
iif) l'immersion du matériau textile ou du matériau plastique dans la formulation aqueuse ; ou
iig) l'enduction de la formulation aqueuse sur ou dans le matériau textile ou le matériau plastique ;
ou
iih) le versement de la formulation aqueuse sur le matériau textile ou le matériau plastique ;
ou
l'application de la masse fondue par laminage ou à l'aide d'une racle ;
iii) éventuellement l'élimination de l'excès de formulation aqueuse ou excès de masse fondue ; et
iv) le séchage et/ou le durcissement du matériau textile ou du matériau plastique.

22. Procédé selon la revendication 21, dans lequel l'étape iia) est réalisée par immersion totale du matériau textile ou du matériau plastique dans la formulation aqueuse, dans un bac contenant la formulation aqueuse, ou bien par passage du matériau textile ou du matériau plastique dans la formulation aqueuse qui est maintenue entre deux rouleaux disposés à l'horizontale.

23. Procédé selon la revendication 21 ou 22, dans lequel l'insecticide et/ou le répulsif et/ou le rodenticide, fongicide, molluscicide, larvicide et/ou ovicide est un insecticide et/ou un répulsif et/ou un rodenticide, fongicide, molluscicide, larvicide et/ou ovicide tel que défini selon la revendication 4.

24. Procédé selon l'une quelconque des revendications 21 à 23, dans lequel la formulation aqueuse comprend en outre un ou plusieurs ingrédients choisis dans le groupe constitué par les détergents, les stabilisants, les agents de protection contre les UV, les azurants optiques, les agents d'enduction, les agents anti-migration, les conservateurs, les agents moussants, les agents mouillants, les épaississants, d'autres biocides, les plastifiants, les agents adhésifs, les agents anti-salissures, les parfums, les pigments et les colorants.

25. Procédé selon l'une quelconque des revendications 21 à 24, dans lequel la coloration du matériau textile ou du matériau plastique est effectuée en même temps que l'imprégnation du matériau textile ou du matériau plastique, où une formulation aqueuse est formée, comprenant en outre au moins un colorant et/ou au moins un pigment.

26. Procédé selon l'une quelconque des revendications 21 à 25, dans lequel le durcissement dans l'étape iv) est effectué à de 60 à 170°C.

27. Procédé de revêtement d'un matériau textile ou d'un matériau plastique, par l'application d'une composition comprenant au moins un insecticide et/ou au moins un répulsif et/ou au moins un rodenticide, fongicide, molluscicide, larvicide et/ou ovicide, et au moins un liant acrylique tel que défini selon l'une quelconque des revendications 1 à 3 au matériau textile ou au matériau plastique.

28. Procédé selon la revendication 27, dans lequel la composition comprend en outre un ou plusieurs ingrédients choisis dans le groupe constitué par les détergents, les stabilisants, les agents de protection contre les UV, les azurants optiques, les agents d'enduction, les agents anti-migration, les conservateurs, les agents moussants, les agents anti-salissures, les agents mouillants, les épaississants, d'autres biocides, les plastifiants, les agents adhésifs, les parfums, les pigments et les colorants.

29. Utilisation d'une composition insecticide ou de répulsif ou rodenticide, fongicide, molluscicide, larvicide ou ovicide selon l'une quelconque des revendications 1 à 14, destinée à l'imprégnation d'un matériau textile ou d'un matériau plastique.
